# EUROPÄISCHE PATENTSCHRIFT

(11) **EP 4 452 784 B1**
(45) Veröffentlichungstag und Bekanntmachung des Hinweises auf die Patenterteilung: **15.04.2026**
(21) Anmeldenummer: 22843609.3
(22) Anmeldetag: 21.12.2022
(51) Int. Cl.: B65G 1/04, B65G 1/06, E06C 9/06, B65G 1/02, B65G 43/00

(54) **REGALLAGERSYSTEM**
SHELF STORAGE SYSTEM
SYSTÈME DE RANGEMENT À TABLETTE

(30) Priorität: 22.12.2021 AT 510362021
(43) Veröffentlichungstag der Anmeldung: 30.10.2024
(73) Patentinhaber: TGW Logistics GmbH, 4614 Marchtrenk (AT)
(72) Erfinder: GRUBER-BLANKA, Thomas, 4060 Leonding (AT); GROSSE, Eric, 63225 Langen (DE)
(74) Vertreter: Burger, Hannes Alfred
(86) Internationale Anmeldenummer: PCT/AT2022/060457
(87) Internationale Veröffentlichungsnummer: WO 2023/115090

(56) Entgegenhaltungen:
- DE-A1- 102015 015 775
- US-A1- 2015 259 979

## Beschreibung

Die Erfindung betrifft ein (automatisiertes) Regallagersystem, wie im Oberbegriff des Anspruches 1 beschrieben.

Unterschiedliche Ausbildungen eines automatisierten Regallagersystems sind beispielweise aus der WO 2013/090970 A2, EP 2 543 611 A1, EP 2 327 643 B1, WO 2010/118412 A1, EP 2 158 144 B1, DE 10 2004 007 412 A1, EP 2 132 113 B1 und DE 10 2011 012 424 A1 bekannt. Solche Regallagersysteme umfassen eine Regalgasseneinheit, welche ein erstes Lagerregal, ein zweites Lagerregal, eine sich zwischen dem ersten Lagerregal und dem zweiten Lagerregal in einer Längsrichtung (X) erstreckende Regalgasse, in der Regalgasse verlaufende Wartungsgänge und Führungsbahnen und ein oder mehrere automatisiert betriebene Transportfahrzeuge sowie eine Ladegut-Manipulationseinheit zum Einlagern und Auslagern von Ladegütern aufweist. Das erste Lagerregal und zweite Lagerregal weisen in übereinander liegenden Regalebenen angeordnete Regalplätze für Ladegüter auf. Die Wartungsgänge weisen in übereinander liegenden Wartungsebenen angeordnete begehbare Gehstege auf. Das jeweilige Transportfahrzeug ist in der Regalgasse entlang der Führungsbahnen verfahrbar und umfasst eine Transfervorrichtung zum Transferieren von Ladegütern zwischen einem jeweiligen Regalplatz und dem Transportfahrzeug. Mit anderen Worten dient ein Transportfahrzeug also dem Einlagern von Ladegütern in die Lagerregale und Auslagern von Ladegüter aus den Lagerregalen. Üblicherweise umfasst die Ladegut-Manipulationseinheit eine erste Ladegut-Transportvorrichtung zum Einlagern von Ladegütern und eine zweite Ladegut-Transportvorrichtung zum Auslagern von Ladegütern. Zusätzlich kann der ersten Ladegut-Transportvorrichtung (zum Einlagern von Ladegütern) eine erste Puffervorrichtung zugeordnet werden, welche Ladegüter aufnehmen kann, die von den Transportfahrzeugen abgeholt und anschließend zu den Regalplätzen abtransportiert werden. Zusätzlich kann der zweiten Ladegut-Transportvorrichtung (zum Auslagern von Ladegütern) eine zweite Puffervorrichtung zugeordnet werden, welche Ladegüter aufnehmen kann, die von den Transportfahrzeugen abgegeben und anschließend von der Ladegut-Transportvorrichtung abtransportiert werden. Optional kann das Regallagersystem je Regalgasseneinheit eine Transportfahrzeug-Hebevorrichtung umfassen, welche dazu eingerichtet ist, ein Transportfahrzeug zwischen verschiedenen Fahrebenen umzusetzen.

Grundsätzlich ist die Verwendung von einer Auf- und/oder Abstiegsvorrichtung (Leiter) in einem Regallagersystem beispielweise aus der US 2021/0137264 A1 und US 2015/0259979 A1 bekannt.

Die DE 10 2015 015 775 A1 offenbart ein Regallagersystem nach dem Oberbegriff des Anspruches 1.

In den Wartungsgängen ist je Gehsteg eine Fluchtöffnung angeordnet und im Bereich der Fluchtöffnung eine (schwerkraftmäßig) nach unten in den jeweilig darunterliegenden Wartungsgang schwenkbare Leiter vorgesehen. Somit wird, insbesondere in einem Gefahrenfall, ein Abstieg in den darunterliegenden Wartungsgang ermöglicht. Grundsätzlich kann eine Fluchtöffnung auch durch die Lagerregale hindurchführen und Wartungsgänge benachbarter Regalgasseneinheiten verbinden. Schließlich sind an gegenüberliegenden Stirnendbereichen der Regalgasseneinheiten Auf- und/oder Abstiegseinheiten vorhanden. Dadurch ist ein Transportfahrzeug auf Höhe jeder Fahrebenen zwingend erforderlich. Die Anordnung einer Transportfahrzeug-Hebevorrichtung, welche dazu eingerichtet ist, ein Transportfahrzeug zwischen den verschiedenen Fahrebenen umzusetzen, ist nicht möglich. Somit ergibt sich ein beschränkter Einsatzbereich des bekannten Regallagersystems. Zudem benötigt die klappbare Leiter in Vertikalrichtung einen verhältnismäßig hohen Einbauraum, sodass bei vergleichbaren Regallagersystemen auch die Anzahl der Regalebenen reduziert wird.

Auch die DE 10 2019 102 804 A1 offenbart ein Regallagersystem mit Regalgasseneinheiten, wie oben beschrieben. Zusätzlich ist an einem Stirnende der Regalgasse eine Fluchtleiter und eine Absturzsicherung vorgesehen. Ein Fluchtweg führt hierbei aus einem Wartungsgang der Regalgasse über die Absturzsicherung bis zur Fluchtleiter. Die Absturzsicherung ist zwischen einer Normalstellung und einer Fluchtstellung bewegbar. In der Normalstellung ist der Weg zwischen einem Wartungsgang und einem Hubweg der Hebevorrichtung für das Wartungspersonal versperrt. In der Fluchtstellung ist der Weg zwischen einem Wartungsgang und einem Hubweg der Hebevorrichtung für das Wartungspersonal freigegeben. Falls während eines Aufenthalts des Wartungspersonals in der Regalgasseneinheit ein Notfall, wie beispielsweise ein Brand, eintritt, kann das Wartungspersonal auf einem verhältnismäßig kurzen Fluchtweg aus der Regalgasseneinheit flüchten.

Die oben bezeichneten Ladegüter können Behälter, Kartons, Tablare, Paletten, Hängetaschen und dgl. umfassen.

Eine Aufgabe der Erfindung ist es, ein Regallagersystem zu schaffen, bei dem ein Zugang einer Bedienperson zu einem Wartungsgang innerhalb einer Regalgasse und/oder ein Verlassen einer Bedienperson aus einem Wartungsgang innerhalb einer Regalgasse auf besonders einfache Weise möglich sein soll. Insbesondere soll ein Regallagersystem kompakt gebaut werden können und gegenüber den aus dem Stand der Technik bekannten Regallagersystemen eine höhere Lagerkapazität bereitstellen. Insbesondere soll in einem Notfall ein Zugang einer Bedienperson zu einem Wartungsgang innerhalb einer Regalgasse und/oder ein Verlassen einer Bedienperson aus einem Wartungsgang innerhalb einer Regalgasse besonders rasch erfolgen können.

Die Aufgabe der Erfindung wird durch ein Regallagersystem nach Anspruch 1 gelöst, wobei das Regallagersystem eine erste Regalgasseneinheit aufweist, welche erste Regalgasseneinheit folgendes umfasst
ein erstes Lagerregal, welches in übereinander liegenden Regalebenen angeordnete Regalplätze für Ladegüter aufweist (und in einer Längsrichtung (X) einer Regalgasse einander gegenüberliegende Stirnseiten ausbildet),
ein zweites Lagerregal, welches in übereinander liegenden Regalebenen angeordnete Regalplätze für Ladegüter aufweist (und in einer Längsrichtung (X) einer Regalgasse einander gegenüberliegende Stirnseiten ausbildet),
eine Regalgasse, die sich zwischen dem ersten Lagerregal und dem zweiten Lagerregal in einer Längsrichtung (X) erstreckt,
Wartungsgänge, welche in der Regalgasse verlaufen und wovon einige in übereinander liegenden Wartungsebenen angeordnete begehbare Gehstege umfassen,
Führungsbahnen, welche in der Längsrichtung (X) verlaufen,
ein oder mehrere automatisiert betriebene Transportfahrzeuge, welches Transportfahrzeug in der Regalgasse entlang der Führungsbahnen verfahrbar ist und eine Transfervorrichtung zum Transferieren von Ladegütern zwischen einem jeweiligen Regalplatz und dem Transportfahrzeug umfasst,
einen Personendurchgang, welcher übereinander angeordneten Wartungsgängen zugeordnet und an einem begehbaren Gehsteg vorgesehen ist, und
eine dem (jeweiligen) Personendurchgang zugeordnete und in bzw. an einem der ersten und zweiten Lagerregale (zwischen den einander gegenüberliegenden Stirnseiten) vorgesehene Auf- und/oder Abstiegseinheit umfassend eine Auf- und/oder Abstiegsvorrichtung mit einem Trittstufensegment, welches Trittstufensegment relativ gegenüber dem einen der ersten und zweiten Lagerregale zwischen einer ersten Gebrauchsstellung und einer zweiten Gebrauchsstellung bewegbar ist, so dass sich in der ersten Gebrauchsstellung das Trittstufensegment im Wesentlichen in einem der ersten und zweiten Lagerregale befindet und in der zweiten Gebrauchsstellung das Trittstufensegment teilweise in zumindest einen der Wartungsgänge ragt.

Es kann also vorgesehen werden, dass Personendurchgänge an zumindest einigen der begehbaren Gehstege zwischen den Wartungsgängen angeordnet sind, um einen Aufstieg und/oder Abstieg zwischen mehreren Wartungsgängen zu ermöglichen. Jedem Personendurchgang kann eine Auf- und/oder Abstiegsvorrichtung zugeordnet werden.

Besonders vorteilhaft ist, wenn das erste und/oder zweite Lagerregal der ersten Regalgasseneinheit in einer Längsrichtung (X) der Regalgasse einander gegenüberliegende Stirnseiten ausbildet. Jeder Personendurchgang, welcher an einem Gehsteg vorgesehen ist, und die Auf- und/oder Abstiegseinheit der ersten Regalgasseneinheit sind jeweils in einem der ersten und zweiten Lagerregale zwischen den einander gegenüberliegenden Stirnseiten angeordnet.

Wie beschrieben, können bloß einige Wartungsgänge in übereinander liegenden Wartungsebenen begehbare Gehstege umfassen. Es kann sich aus Gründen der Einfachheit nämlich von Vorteil erweisen, wenn der bodennahe Wartungsgang nicht noch zusätzlich einen Gehsteg umfasst. In der Praxis ist es aber eher üblich, dass auch der bodennahe Wartungsgang einen Gehsteg umfasst. Sohin würde jeder der Wartungsgänge in übereinander liegenden Wartungsebenen begehbare Gehstege umfassen.

Der Personendurchgang kann nach einer möglichen Ausführung als eine Klapptür ausgebildet werden, welche im Gehsteg angeordnet ist. Hierzu kann ein Gehsteg eine Öffnung aufweisen, in welcher die Klapptür mit einem Rahmen eingesetzt wird.

Die Auf- und/oder Abstiegsvorrichtung kann optional einen Griff zum Bewegen, insbesondere Verschwenken oder Verschieben der jeweiligen Auf- und/oder Abstiegsvorrichtung aufweisen, welcher bevorzugt in für eine Bedienperson greifgünstiger Höhe angeordnet sein kann. Andererseits können dadurch auch Haltegriffe realisiert werden, um den Aufstieg und/oder Abstieg zu erleichtern.

Die erfindungsgemäße Ausführung ermöglicht ein besonders schnelles Verlassen einer Regalgasseneinheit von einem Wartungsgang über die Personendurchgänge und die Auf- und/oder Abstiegseinheit.

Dies ist insbesondere dann wesentlich, wenn sich eine Bedienperson beispielweise wegen einer Störungsbehebung oder Wartungsarbeiten in einem Wartungsgang aufhält und ein Notfall (gesundheitsgefährdender oder lebensbedrohlicher Notfall) eintritt. Die Bedienperson muss im Notfall eine Regalgasseneinheit besonders rasch verlassen. Der Notfall kann durch einen Brand, ein Erdbeben, ein Unwetter, einen Stromausfall oder eine Überschwemmung ausgelöst werden.

Daneben ist beispielsweise ein medizinischer Notfall bei der Bedienperson denkbar. In diesem Fall soll die erfindungsgemäße Ausführung einen besonders schnellen Zugang in eine Regalgasseneinheit zu einem Wartungsgang über die Personendurchgänge und die Auf- und/oder Abstiegseinheit ermöglichen. So kann nun beispielsweise ein Zugang für einen Rettungsdienst und eine Feuerwehr geschaffen werden.

Unabhängig davon kann auch dann wenn kein Notfall vorliegt, eine Bedienperson entweder eine Regalgasseneinheit von einem Wartungsgang über die Personendurchgänge und die Auf- und/oder Abstiegseinheit verlassen, oder in eine Regalgasseneinheit zu einem Wartungsgang über die Personendurchgänge und die Auf- und/oder Abstiegseinheit gelangen, sofern sich dies als günstig erweist.

Somit wird von dem erfindungsgemäßen Regallagersystem primär eine besonders sichere Not- und/oder Fluchtwegmöglichkeit und sekundär eine besonders zielorientierte Zugangsmöglichkeit bereitgestellt. Die Zugangsmöglichkeit ist keinesfalls zwingend, sondern als optionale Möglichkeit zu sehen.

Darüber hinaus werden bei dem erfindungsmäßen Regallagersystem gegenüber dem aus dem Stand der Technik bekannten Regallagersystem mit in den jeweiligen Wartungsgang einschwenkbaren Fluchtleitern gemäß der DE 10 2015 015 775 A1 deutlich weniger Regalplätze verloren. Dies vor allem deswegen, weil nach der DE 10 2015 015 775 A1 die einschwenkbare Fluchtleiter einen relativ hohen Einbauraum benötigen, was das nutzbaren Lagervolumen und damit einhergehend die Anzahl an Regalplätzen reduziert.

Der Verlust an Regalplätzen wird umso gravierender je länger die Lagerregale ausgestaltet sind. Beispielsweise ist der Verlust an Regalplätzen gegenüber dem erfindungsgemäßen Regallagersystem bereits doppelt so hoch, wenn die Lagerregale eine Höhe von etwa 12 Meter und eine Länge von etwa 64 Meter aufweisen.

Gemäß einer Weiterbildung der Erfindung umfasst das Regallagersystem eine zweite Regalgasseneinheit, welche zweite Regalgasseneinheit umfasst
ein erstes Lagerregal, welches in übereinander liegenden Regalebenen angeordnete Regalplätze für Ladegüter aufweist (und in einer Längsrichtung (X) einer Regalgasse einander gegenüberliegende Stirnseiten ausbildet),
ein zweites Lagerregal, welches in übereinander liegenden Regalebenen angeordnete Regalplätze für Ladegüter aufweist (und in einer Längsrichtung (X) einer Regalgasse einander gegenüberliegende Stirnseiten ausbildet),
eine Regalgasse, die sich zwischen dem ersten Lagerregal und dem zweiten Lagerregal in einer Längsrichtung (X) erstreckt,
Wartungsgänge, welche in der Regalgasse verlaufen und wovon einige in übereinander liegenden Wartungsebenen angeordnete begehbare Gehstege umfassen,
Führungsbahnen, welche in der Längsrichtung (X) verlaufen,
ein oder mehrere automatisiert betriebene Transportfahrzeuge, welches Transportfahrzeug in der Regalgasse entlang der Führungsbahnen verfahrbar ist und eine Transfervorrichtung zum Transferieren von Ladegütern zwischen einem jeweiligen Regalplatz und dem Transportfahrzeug umfasst,
einen Personendurchgang, welcher übereinander angeordneten Wartungsgängen zugeordnet und an einem begehbaren Gehsteg vorgesehen ist, und
eine dem (jeweiligen) Personendurchgang zugeordnete und in bzw. an einem der ersten und zweiten Lagerregale (zwischen den einander gegenüberliegenden Stirnseiten) vorgesehene Auf- und/oder Abstiegseinheit umfassend eine Auf- und/oder Abstiegsvorrichtung mit einem Trittstufensegment, welches Trittstufensegment relativ gegenüber dem einen der ersten und zweiten Lagerregale zwischen einer ersten Gebrauchsstellung und einer zweiten Gebrauchsstellung bewegbar ist, so dass sich in der ersten Gebrauchsstellung das Trittstufensegment im Wesentlichen in einem der ersten und zweiten Lagerregale befindet und in der zweiten Gebrauchsstellung das Trittstufensegment zumindest teilweise in zumindest einen der Wartungsgänge ragt.

Es kann also vorgesehen werden, dass Personendurchgänge an zumindest einigen der begehbaren Gehstege zwischen den Wartungsgängen angeordnet sind, um einen Aufstieg und/oder Abstieg zwischen mehreren Wartungsgängen zu ermöglichen. Jedem Personendurchgang kann eine Auf- und/oder Abstiegsvorrichtung zugeordnet werden.

Die zweite Regalgasseneinheit entspricht jener Ausführung wie der ersten Regalgasseneinheit. Somit gilt auch für die zweite Regalgasseneinheit das zur ersten Regalgasseneinheit oben Gesagte.

Besonders vorteilhaft ist, wenn das erste und/oder zweite Lagerregal der zweiten (weiteren) Regalgasseneinheit in einer Längsrichtung (X) der Regalgasse einander gegenüberliegende Stirnseiten ausbildet. Jeder Personendurchgang, welcher an einem Gehsteg vorgesehen ist, und die Auf- und/oder Abstiegseinheit der zweiten (weiteren) Regalgasseneinheit sind jeweils in einem der ersten und zweiten Lagerregale zwischen den einander gegenüberliegenden Stirnseiten angeordnet.

Insbesondere wird durch das aus mehreren Regalgasseneinheiten modulartig zusammengefügte Regallagersystem eine optimale sichere Not- und/oder Fluchtwegmöglichkeit und gegebenenfalls zielorientierte Zugangsmöglichkeit je Regalgasseneinheit bereitgestellt. Auch nach dieser Ausführung ist die Zugangsmöglichkeit keinesfalls zwingend, sondern als optionale Möglichkeit zu sehen.

Zudem können in jeder Regalgasseneinheit Störungsbehebungen und/oder Wartungsarbeiten unabhängig von einer anderen Regalgasseneinheit erfolgen. Während in der ersten Regalgasseneinheit beispielweise Wartungsarbeiten an einem Transportfahrzeug durchgeführt werden, kann in der zweiten Regalgasseneinheit das Einlagern und Auslagern von Ladegütern uneingeschränkt fortgesetzt werden.

Es kann sich von Vorteil erweisen, wenn zusätzlich ein Personenzugang je Wartungsgang zum Zugang in den betreffenden Wartungsgang von einer Stirnseite der Regalgasse vorgesehen ist.

Sind eine erste Regalgasseneinheit und zweite Regalgasseneinheit vorgesehen, so ist zusätzlich ein Personenzugang je Wartungsgang an einer Stirnseite der ersten Regalgasseneinheit und zusätzlich ein Personenzugang je Wartungsgang an einer Stirnseite der zweiten Regalgasseneinheit angeordnet.

Ein solcher Personenzugang, wird vornehmlich als Zugang in den Wartungsgang verwendet, insbesondere wenn Wartungsarbeiten oder eine Störungsbehebung in der Regalgasse erforderlich sind. Der Personenzugang umfasst an der Stirnseite der Regalgasseneinheit ortsfest angeordnete Zugangsbühnen, die über eine ortsfest angeordnete Treppe erreichbar sind. Zusätzlich umfasst der Personenzugang eine öffenbare bzw. schließbare Zugangstür. Mit anderen Worten ist jedem Wartungsgang eine Zugangsbühne und eine öffenbare bzw. schließbare Zugangstür zugeordnet, sodass eine Bedienperson von der jeweiligen Zugangsbühne über die jeweilige Zugangstür in den jeweiligen Wartungsgang zutreten kann. Die Zugangstür kann auch verriegelt und entriegelt werden. Ein entsprechender Zustand der Zugangstür kann mit einem Sensor (Positionsschalter Lichttasters oder einer Lichtschranke) überwacht und als Zustandssignal ausgegeben werden. Der Sensor ist so angeordnet, dass er ein Öffnen einer geschlossenen Zugangstür erkennt. Optional kann der Personenzugang eine Schaltvorrichtung zum Umschalten zwischen einem Automatikbetrieb und einem Sicherheitsbetrieb für Transportfahrzeuge und/oder eine Ladegut-Manipulationseinheit umfassen. Die Schaltvorrichtung umfasst hierzu ein Schaltmittel, mittels welchem zwischen dem Automatikbetrieb und dem Sicherheitsbetrieb manuell umgeschaltet werden kann, und ein Ausgabemittel, an welcher eine Zugangsmeldung für den gefahrenlosen Zugang der Bedienperson in einen Wartungsgang signalisiert wird. Im Detail ist in der WO 2016/033628 A1 ein Verfahren zum sicheren Betreiben eines Regallagersystems und eine mögliche Ausführung eines solchen Regallagersystems beschrieben.

Gemäß einer vorteilhaften Ausgestaltung umfasst das erste Lagerregal zusätzlich vordere Regalsteher, hintere Regalsteher, an den vorderen Regalstehern befestigte vordere Längstraversen und an den hinteren Regalstehern befestigte hintere Längstraversen, und das zweite Lagerregal zusätzlich vordere Regalsteher, hintere Regalsteher, an den vorderen Regalstehern befestigte vordere Längstraversen und an den hinteren Regalstehern befestigte hintere Längstraversen.

Die Lagerregale können also jeweils der Regalgasse benachbarte, vertikale vordere Regalsteher und von der Regalgasse entfernte, vertikale hintere Regalsteher umfassen. Die vorderen Regalsteher sind mit in Richtung der Regalgasse horizontal verlaufenden vorderen Längstraversen und/oder die hinteren Regalsteher mit in Richtung der Regalgasse horizontal verlaufenden hinteren Längstraversen verbunden. Zwischen den vorderen und hinteren Längstraversen ist je Regalebene eine Lagerfläche vorgesehen, welche die Regalplätze ausbildet, auf welchen die Ladegüter abgestellt werden können. Beispielweise umfasst die Lagerfläche Querträger, welche sich in einer Tiefenrichtung (Z-Richtung) des Lagerregales horizontal erstrecken. In diesem Fall bilden die Querträger obenseitig die Regalplätze aus.

Bevorzugt bildet jedes Lagerregal in übereinander liegenden Regalebenen jeweils nebeneinander eine Vielzahl von Regalplätzen aus, welche auf der Lagerfläche in Z-Richtung zwischen den vorderen Längstraversen und den hinteren Längstraversen des Lagerregales angeordnet sind.

Es erweist sich weiters von Vorteil, wenn die Führungsbahnen an zumindest einigen der vorderen Längstraversen des ersten Lagerregales und/oder zweiten Lagerregales vorgesehen sind und dass das Transportfahrzeug in der Regalgasse entlang der Führungsbahnen verfahrbar ist.

Diese Ausführung ermöglicht den Einsatz verschiedenartig ausgebildeter Transportfahrzeuge. Abhängig davon sind die Führungsbahnen an den vorderen Längstraversen des ersten Lagerregales und/oder zweiten Lagerregales vorgesehen oder getrennt von den Längstraversen des ersten Lagerregales und/oder zweiten Lagerregales vorgesehen, beispielweise an Führungsschienen, welche im jeweiligen Wartungsgang am unteren Gehsteg und oberen Gehsteg angeordnet sind.

Nach einer ersten Ausführung ist das Transportfahrzeug ein Einebenenregalbediengerät, welches entlang von Führungsbahnen bewegt wird, die in übereinander liegenden Fahrebenen jeweils paarweise angeordnet sind. Die erste Führungsbahn ist an der vorderen Längstraversen des ersten Lagerregales und die zweite Führungsbahn ist an der vorderen Längstraversen des zweiten Lagerregales vorgesehen. Ein solches Einebenenregalbediengerät bzw. eine solche Anordnung von Einebenenregalbediengeräten ist beispielweise in der WO 2016/168878 A1 beschrieben.

Nach einer zweiten Ausführung ist das Transportfahrzeug ein Mehrebenenregalbediengerät, welches entlang von Führungsbahnen bewegt wird, die in übereinander liegenden Fahrebenen angeordnet sind. Wird in einem Wartungsgang ein einziges Mehrebenenregalbediengerät angeordnet, ist die erste Führungsbahn an einer der vorderen Längstraversen und die zweite Führungsbahn an einer anderen der vorderen Längstraversen des ersten oder zweiten Lagerregales vorgesehen. Werden hingegen in einem Wartungsgang mehrere Mehrebenenregalbediengeräte angeordnet, ist die erste Führungsbahn an einer der vorderen Längstraversen und die zweite Führungsbahn an einer anderen der vorderen Längstraversen des ersten Lagerregales vorgesehen und ein erstes Transportfahrzeug entlang dieser Führungsbahnen bewegbar, und die erste Führungsbahn an einer der vorderen Längstraversen und die zweite Führungsbahn an einer anderen der vorderen Längstraversen des zweiten Lagerregales vorgesehen und ein zweites Transportfahrzeug entlang dieser Führungsbahnen bewegbar. Ein solches Mehrebenenregalbediengerät bzw. eine solche Anordnung von Mehrebenenregalbediengeräten ist beispielweise in der WO 2012/113681 A1 beschrieben.

Nach einer dritten Ausführung ist das Transportfahrzeug ein Mehrebenenregalbediengerät, welches entlang von Führungsbahnen bewegt wird, die in übereinander liegenden Fahrebenen angeordnet sind. Die erste Führungsbahn ist unabhängig von den vorderen Längstraversen im Wartungsgang, beispielweise an einer Führungsschiene, welche im jeweiligen Wartungsgang am unteren Gehsteg angeordnet ist, vorgesehen und die zweite Führungsbahn ist unabhängig von den vorderen Längstraversen im Wartungsgang, beispielweise an einer Führungsschiene, welche im jeweiligen Wartungsgang am oberen Gehsteg angeordnet ist, vorgesehen. Ein solches Mehrebenenregalbediengerät bzw. eine solche Anordnung von Mehrebenenregalbediengeräten ist beispielweise in der Fig. 5 der WO 2016/033628 A1 beschrieben.

Generell kann die Energie- und/oder Datenversorgung des einen oder der mehreren Transportfahrzeuge, insbesondere der Antriebsmotoren und/oder der Steuerung eines Transportfahrzeuges, über eine Schleifleitungsanordnung erfolgen. Die Schleifleitungsanordnung ist je Fahrebene an einer der vorderen Längstraversen (erste Ausführung oder zweite Ausführung, wie oben beschrieben) oder parallel zu einer der Führungsschienen (dritte Ausführung, wie oben beschrieben) angeordnet und erstreckt sich über die gesamte Länge der vorderen Längstraversen oder Führungsschiene.

Es kann sich weiters als günstig erweisen, wenn die Führungsbahnen in übereinander liegenden Fahrebenen jeweils paarweise angeordnet sind und je Fahrebene eine der Führungsbahnen eine erste Führung und eine zweite Führung ausbilden.

Bevorzugt bildet je Fahrebene eine der Führungsbahnen eine erste Führung und eine zweite Führung und die andere der Führungsbahnen ausschließlich eine erste Führung aus.

Es können insbesondere Einebenenregalbediengeräte zum Einsatz kommen, die unabhängig voneinander betrieben werden, um Ladegüter in die Lagerregale einzulagern und Ladegüter aus den Lagerregalen auszulagern. Somit kann eine besonders hohe Einlager- und Auslagerleistung erreicht werden. Durch die erste und zweite Führung wird insbesondere ein zuverlässiger Betrieb ermöglicht, selbst wenn sehr hohe Fahrgeschwindigkeiten gewählt werden. Ein derartiges Führungskonzept für ein Einebenenregalbediengerät ist beispielsweise in der WO 2013/006879 A2 oder WO 2016/191777 A1 beschrieben.

Nach einer vorteilhaften Ausführung kann vorgesehen werden, dass das Transportfahrzeug zusätzlich umfasst
einen Grundrahmen,
Laufräder, wovon erste Laufräder auf einer ersten Fahrzeugseite auf der ersten Führung einer ersten Führungsbahn abrollbar aufliegen und zweite Laufräder auf einer zweiten Fahrzeugseite auf der ersten Führung einer zweiten Führungsbahn abrollbar aufliegen, wobei die Laufräder am Grundrahmen drehbar gelagert sind,
einen Fahrantrieb, welcher mit zumindest einem Laufrad gekoppelt ist,
die Transfervorrichtung zum Transferieren von Ladegütern zwischen einem jeweiligen Regalplatz und dem Transportfahrzeug, und
zumindest eine Führungseinheit, welche am Grundrahmen montiert ist und welche zu beiden Seiten der zweiten Führung und auf der zweiten Führung an voneinander abgewandten Führungsabschnitten abrollbar anliegende Führungsräder aufweist, um das Transportfahrzeug auf der Fahrbewegung entlang einer der ersten und zweiten Führungsbahnen geführt zu bewegen.

Ein derartiges Transportfahrzeug entspricht dem oben beschriebenen Einebenenregalbediengerät, welches auf einer Aufnahmeplattform zumindest ein Ladegut transportieren kann und entlang der Führungsbahnen bewegt wird. Das Transportfahrzeug wird während der Fahrbewegung durch die zumindest eine Führungseinheit entlang der zweiten Führung einer der ersten und zweiten Führungsbahnen geführt, sodass ein zuverlässiges Transferieren von Ladegütern zwischen einem jeweiligen Regalplatz und dem Transportfahrzeug möglich ist. Das Transferieren von Ladegütern umfasst ein Einlagern von Ladegütern auf die Regalplätze und ein Auslagern von Ladegütern von den Regalplätzen. Ein Einlagern von Ladegütern auf die Regalplätze und/oder ein Auslagern von Ladegütern von den Regalplätzen ist beispielweise in der WO 2016/168878 A1 beschrieben. Solche Einebenenregalbediengeräte können besonders dynamisch bewegt werden, was zu genannter hohen Einlager- und Auslagerleistung führt.

Nach einer vorteilhaften Ausführung kann vorgesehen werden, dass zusätzlich eine Transportfahrzeug-Hebevorrichtung vorgesehen ist, durch welche das eine oder die mehreren Transportfahrzeuge zwischen übereinander liegenden Fahrebenen transportierbar sind.

Eine solche Transportfahrzeug-Hebevorrichtung wird vorwiegend eingesetzt, wenn je Regalgasse weniger Transportfahrzeuge als Fahrebenen vorhanden sind und daher Transportfahrzeuge mittels der Transportfahrzeug-Hebevorrichtung zwischen jeweiligen Fahrebenen umgesetzt werden müssen. Insbesondere weist die Transportfahrzeug-Hebevorrichtung eine vertikal verstellbare Aufnahmevorrichtung auf, auf welcher ein Transportfahrzeug aufgenommen und zwischen den Fahrebenen (vertikal) transportiert werden kann. Eine vorteilhafte Ausgestaltung einer solchen Transportfahrzeug-Hebevorrichtung ist beispielsweise in der WO 2021/108827 A1 beschrieben.

Die Transportfahrzeug-Hebevorrichtung ist vorteilhafterweise an einer Stirnseite der ersten Regalgasseneinheit angeordnet. Sind eine erste Regalgasseneinheit und zweite Regalgasseneinheit vorgesehen, so ist eine erste Transportfahrzeug-Hebevorrichtung an einer Stirnseite der ersten Regalgasseneinheit und eine zweite Transportfahrzeug-Hebevorrichtung an einer Stirnseite der zweiten Regalgasseneinheit angeordnet. Sind der oben beschriebene eine oder die mehreren Personenzugänge gemäß Anspruch 3 und die eine oder die mehreren Transportfahrzeug-Hebevorrichtungen gemäß Anspruch 8 vorgesehen, so können der eine oder die mehreren Personenzugänge an einer ersten Stirnseite einer Regalgasseneinheit und die eine oder die mehreren Transportfahrzeug-Hebevorrichtungen an einer zweiten Stirnseite einer Regalgasseneinheit angeordnet werden.

Je Fahrebene können an den in Längsrichtung (X) gegenüberliegenden Regalgassenende Anschlagvorrichtungen vorgesehen.

Während an jenem der Transportfahrzeug-Hebevorrichtung abgewandten Regalgassenende eine erste Anschlagvorrichtung mit stationären Anschlagpuffern angeordnet ist, ist an jenem der Transportfahrzeug-Hebevorrichtung zugewandten Regalgassenende eine zweite Anschlagvorrichtung mit Anschlagpuffern vorgesehen, welche Anschlagpuffer zwischen einer in den Fahrweg des Transportfahrzeuges hineinbewegten Anschlagstellung und einer aus dem Fahrweg des Transportfahrzeuges herausbewegten Freigabestellung bewegbar sind.

Soll ein Transportfahrzeug einer Fahrebene auf die Aufnahmevorrichtung der Transportfahrzeug-Hebevorrichtung übernommen oder von der Aufnahmevorrichtung auf die Regalgasse abgegeben werden, werden die Anschlagpuffer aus der Anschlagstellung in die Freigabestellung bewegt. Das Transportfahrzeug kann in der Freigabestellung an der zweiten Anschlagvorrichtung vorbeifahren. Befindet sich das Transportfahrzeug vollständig auf der Aufnahmevorrichtung oder vollständig innerhalb der Regalgasse, können die Anschlagpuffer wiederum in die Anschlagstellung bewegt werden, in welcher das Transportfahrzeug blockiert werden kann. Grundsätzlich sei angemerkt, dass die Anschlagvorrichtungen nur im Störfall wirksam sind, beispielsweise wenn das Transportfahrzeug nicht ordnungsgemäß verzögert und dieses gegen eine der Anschlagvorrichtungen auffahren kann.

Nach einer weiteren vorteilhaften Ausführung ist jeder Anschlagpuffer auf einer Schwencklappe angeordnet, deren Schwenkachse parallel zur Regalgasse verläuft. Die Anschlagvorrichtung ist stationär, jedoch der Anschlagpuffer auf einer Schwenkklappe angeordnet. Dadurch wird eine platzsparende Anordnung erreicht, welche zuverlässig arbeitet.

Eine vorteilhafte Ausgestaltung und Anordnung einer zweiten Anschlagvorrichtung ist beispielsweise in der WO 2021/108827 A1 beschrieben.

Nach einer vorteilhaften Ausführung kann das Regallagersystem, insbesondere die erste Regalgasseneinheit und die zweite Regalgasseneinheit, sofern eine zweite Regalgasseneinheit vorgesehen ist, weiters umfassen
eine Fördertechnik zum Transport von Ladegütern, und
eine Ladegut-Manipulationseinheit, an welche die Fördertechnik zum Transport von Ladegütern anschließt und welche zum Einlagern von Ladegütern eine erste Ladegut-Transportvorrichtung und eine erste Puffervorrichtung und zum Auslagern von Ladegütern eine zweite Ladegut-Transportvorrichtung und eine zweite Puffervorrichtung aufweist,
wobei die erste Puffervorrichtung in übereinander liegenden Bereitstellebenen angeordnete Bereitstellvorrichtungen und die zweite Puffervorrichtung in übereinander liegenden Bereitstellebenen angeordnete Bereitstellvorrichtungen aufweist,
wobei die erste Ladegut-Transportvorrichtung die Fördertechnik zum Transport von Ladegütern und die Bereitstellvorrichtungen der ersten Puffervorrichtung fördertechnisch verbindet,
wobei die zweite Ladegut-Transportvorrichtung die Fördertechnik zum Transport von Ladegütern und die Bereitstellvorrichtungen der zweiten Puffervorrichtung fördertechnisch verbindet, und
wobei das eine oder die mehreren Transportfahrzeuge in der Regalgasse entlang der vorderen Längstraversen vor den Regalplätzen, der ersten Puffervorrichtung und zweiten Puffervorrichtung verfahrbar ist und die Ladegüter zwischen der ersten Puffervorrichtung und den Regalplätzen oder zwischen den Regalplätzen und der zweiten Puffervorrichtung transportiert.

Die Fördertechnik zum Transport von Ladegütern kann eine erste Fördervorrichtung zum Antransport von Ladegütern umfassen, mittels welcher die Ladegüter zu der ersten Ladegut-Transportvorrichtung antransportiert werden.

Die Fördertechnik zum Transport von Ladegütern kann eine zweite Fördervorrichtung zum Abtransport von Ladegütern umfassen, mittels welcher die Ladegüter von der zweiten Ladegut-Transportvorrichtung abtransportiert werden.

Die erste Ladegut-Transportvorrichtung dient dem vertikalen Transport eines Ladeguts zwischen der ersten Fördervorrichtung und einer der Bereitstellvorrichtungen der ersten Puffervorrichtung. Werden auf der erste Ladegut-Transportvorrichtung mehrere Ladegüter aufgenommen, können die mehreren Ladegüter auf eine oder mehrere der Bereitstellvorrichtungen der ersten Puffervorrichtung abgegeben werden.

Die zweite Ladegut-Transportvorrichtung dient dem vertikalen Transport eines Ladeguts zwischen einer der Bereitstellvorrichtungen der zweiten Puffervorrichtung und der zweiten Fördervorrichtung. Können auf der zweiten Ladegut-Transportvorrichtung mehrere Ladegüter aufgenommen werden, können die mehreren Ladegüter von einer oder mehreren der Bereitstellvorrichtungen der zweiten Puffervorrichtung übernommen werden.

Das eine oder die mehreren Transportfahrzeuge dienen dem horizontalen Transport eines Ladeguts zwischen einer Bereitstellvorrichtung der ersten Puffervorrichtung und einem Regalplatz des ersten / zweiten Lagerregales (Einlagern).

Das eine oder die mehreren Transportfahrzeuge dienen dem horizontalen Transport eines Ladeguts zwischen einem Regalplatz des ersten / zweiten Lagerregales und einer Bereitstellvorrichtung der zweiten Puffervorrichtung (Auslagern).

Das eine oder die mehreren Transportfahrzeuge können also zum Einlagern von Ladegütern als auch zum Auslagern von Ladegütern eingesetzt werden.

Unterschiedliche Ausbildungen und Anordnungen der ersten Ladegut-Transportvorrichtung, ersten Puffervorrichtung, zweiten Ladegut-Transportvorrichtung und zweiten Puffervorrichtung sind in der WO 2013/090970 A2 oder WO 2020/113249 A1 beschrieben.

Es ist demnach eine Ausführung möglich, wonach die Ladegut-Manipulationseinheit eine erste Ladegut-Transportvorrichtung und zweite Ladegut-Transportvorrichtung als eine kombinierte Ladegut-Transportvorrichtung zum Einlagern und Auslagern von Ladegütern einsetzt. Die erste Puffervorrichtung ist auf einer ersten Seite relativ zur Ladegut-Transportvorrichtung und die zweite Puffervorrichtung ist auf einer zweiten Seite relativ zur Ladegut-Transportvorrichtung angeordnet. Das eine oder die mehreren Transportfahrzeuge können zum Einlagern die erste Puffervorrichtung anfahren und zum Auslagern die zweite Puffervorrichtung anfahren. Hierzu ist es vorgesehen, dass die Führungsbahnen an der ersten Puffervorrichtung, der Ladegut-Transportvorrichtung und der zweiten Puffervorrichtung vorbeilaufen.

Die Bereitstellvorrichtungen können passive Bereitstellvorrichtungen (ohne Förderelement) oder aktive Bereitstellvorrichtungen (mit zumindest einem motorisch antreibbaren Förderelement) aufweisen. Eine Bereitstellvorrichtung kann ein oder mehrere Ladegüter aufnehmen bzw. puffern.

Nach einer vorteilhaften Ausführung kann vorgesehen sein, dass
das Transportfahrzeug eine elektronische Steuerung, einen Fahrantrieb zum Antrieb des Transportfahrzeuges und einen Transferantrieb zum Antrieb der Transfervorrichtung umfasst, welche elektronische Steuerung an den Fahrantrieb und an den Transferantrieb angeschlossen ist,
eine Schaltvorrichtung vorgesehen ist, mittels welcher zwischen einem Automatikbetrieb und einem Sicherheitsbetrieb für das eine Transportfahrzeug oder die mehreren Transportfahrzeuge gewechselt werden kann, und
eine zentrale Steuereinheit vorgesehen ist, die ihrerseits (über eine erste Datenleitung) mit der elektronischen Steuerung des Transportfahrzeuges und (über eine zweite Datenleitung) mit der Schaltvorrichtung (datentechnisch) verbunden ist,
wobei der Automatikbetrieb in den Sicherheitsbetrieb für das eine Transportfahrzeug oder die mehreren Transportfahrzeuge wechselt, wenn an der Schaltvorrichtung der Zugang durch eine Bedienperson in einen der Wartungsgänge angemeldet wird und die Bedienperson in einen der Wartungsgänge eintreten möchte,
wobei die zentrale Steuereinheit im Automatikbetrieb das eine Transportfahrzeug oder die mehreren Transportfahrzeuge derart ansteuert, dass das Transportfahrzeug entlang der Regalgasse zu den Regalplätzen verfährt und die Ladegüter auf die Regalplätze transferiert bzw. Ladegüter von den Regalplätzen transferiert, und
wobei die zentrale Steuereinheit im Sicherheitsbetrieb das eine Transportfahrzeug oder die mehreren Transportfahrzeuge derart ansteuert, dass das Transportfahrzeug in eine vordefinierte Halteposition verfährt und/oder in einen für eine Bedienperson gefahrenlosen und/oder bewegungslosen Ruhezustand solange versetzt wird, bis die elektronische Steuerung ein Freischaltsignal von der zentralen Steuereinheit erhält und das eine Transportfahrzeug wieder in den Automatikbetrieb umgeschaltet wird oder die mehreren Transportfahrzeuge wieder in den Automatikbetrieb umgeschaltet werden.

Möchte eine Bedienperson in den Wartungsgang über einen Personendurchgang gemäß Anspruch 1 oder 2 eintreten, um beispielweise Wartungsarbeiten an einem Transportfahrzeug, an der Ladegut-Manipulationseinheit und/oder an den Lagerregalen durchzuführen oder eine Störung bei der Manipulation von Ladegütern zu beseitigen, so muss sich die Bedienperson in den Gefahrenbereich der autonom verfahrbaren Transportfahrzeuge begeben. In diesem Fall ist sicherzustellen, dass zu diesem Zeitpunkt der Automatikbetrieb in einen Sicherheitsbetrieb geschaltet wurde. Im Sicherheitsbetrieb muss das eine oder die mehreren Transportfahrzeuge in einen gefahrlosen Ruhezustand geschaltet worden sein, damit die Bedienperson keinem Verletzungsrisiko ausgesetzt wird.

Hierzu kann das Regallagersystem, insbesondere die Regalgasseneinheit, sofern eine Regalgasseneinheit vorgesehen ist, oder jede Regalgasseneinheit, sofern mehrere Regalgasseneinheiten vorgesehen sind, eine Schaltvorrichtung aufweisen. Mittels der Schaltvorrichtung kann zwischen einem Automatikbetrieb und einem Sicherheitsbetrieb für das eine Transportfahrzeug oder die mehreren Transportfahrzeuge (einer Regalgasseneinheit) gewechselt werden.

Die Schaltvorrichtung kommuniziert mit einer zentralen Steuereinheit. Bevorzugt ist die Schaltvorrichtung nahe einer Auf- und/oder Abstiegseinheit angeordnet.

Nach einer Ausführung kann die Schaltvorrichtung mit einem Zugangsschlüssel physisch zwischen einer Automatikstellung, in dem ein Automatikbetrieb der Transportfahrzeuge ermöglicht ist, und einer Wartungsstellung, in der ein Sicherheitsbetrieb der Transportfahrzeuge ermöglicht ist, verstellt werden. Es kann vorteilhafterweise vorgesehen sein, dass der Zugangsschlüssel in der Automatikstellung physisch unlösbar mit der jeweiligen Schaltvorrichtung verbunden ist und in der Wartungsstellung von der Schaltvorrichtung physisch lösbar ist.

Nach einer anderen Ausführung kann die Schaltvorrichtung durch eine mobile Computereinheit gebildet sein.

Durch die vorgenannten Maßnahmen wird der Bedienperson ein die sicherheitstechnischen Anforderungen erfüllender, gefahrenloser Zugang über den Personenzugang in einen Wartungsgang ermöglicht.

Gemäß einer Ausführungsform ist vorteilhafterweise vorgesehen, dass der Personendurchgang einen Durchgang umfasst, welcher Durchgang in einer sich in der Längsrichtung (X) und einer Horizontalrichtung (Z) aufspannenden Ebene liegt.

Dadurch können Wartungsgänge von einer Bedienperson im Wesentlichen auf vertikalem Wege rasch durchquert werden.

Es erweist sich auch von Vorteil, wenn der Personendurchgang eine dem Durchgang zugeordnete Klapptür umfasst, welche zwischen einer Öffnungsstellung, in welcher einer Bedienperson ein Zugang von einem Wartungsgang in einen oberhalb oder unterhalb angeordneten Wartungsgang ermöglicht ist, und einer Schließstellung, in welcher einer Bedienperson ein Zugang in einen oberhalb oder unterhalb angeordneten Wartungsgang verhindert ist, bewegbar ist.

Dadurch kann auf vergleichsweise einfache Weise eine zuverlässige und sichere Zutrittskontrolle realisiert werden. Auch kann ein Personendurchgang und eine diesem zugeordnete Klapptür nahezu beliebig entlang der Längsrichtung (X) an einem Gehsteg angeordnet werden. Ein solcher Personendurchgang und/oder eine solche Klapptür können bereits bei der (konstruktiven) Auslegung eines Wartungsganges berücksichtigt werden. Gemäß vorteilhafter Ausführungsformen kann die Klapptür über eine Schwenklagerung relativ gegenüber dem Gehsteg bewegbar an einem Rahmen gelagert sein.

Nach einer vorteilhaften Ausführung kann vorgesehen werden, dass der Personendurchgang je Wartungsgang einen Sensor umfasst, durch welchen die Klapptür in der Öffnungsstellung und/oder in der Schließstellung überwachbar ist und durch welchen ein Zustandssignal in der Öffnungsstellung und/oder in der Schließstellung abgebbar ist.

Der Sensor kann einen ersten Sensor und einen zweiten Sensor umfassen. Der erste Sensor kann die Öffnungsstellung und der zweite Sensor die Schließstellung überwachen. Der Sensor kann aber auch nur einen Sensor umfassen, welcher entweder die Öffnungsstellung oder die Schließstellung überwacht.

Dementsprechend kann ein Zustandssignal abgegeben werden, welches beispielsweise die Information beinhalten kann, dass die Klapptür "offen gehalten" und/oder "geschlossen gehalten" ist.

Dadurch ist eine vergleichsweise einfache Möglichkeit zur Überwachung der Öffnungsstellung und/oder Schließstellung realisierbar und somit ein zuverlässiger Betrieb des Regallagersystems möglich.

Der Sensor ist beispielweise ein induktiver Näherungsschalter.

Nach einer vorteilhaften Weiterbildung kann vorgesehen sein, dass der Sensor (signaltechnisch) mit einer zentralen Steuereinheit verbunden ist, die ihrerseits das eine Transportfahrzeug oder die mehreren Transportfahrzeuge ansteuert, wenn die Klapptür in die Öffnungsstellung und/oder in die Schließstellung bewegt und ein Zustandssignal abgegeben wurde.

Dadurch ist eine einfache Möglichkeit zur zentralen Überwachung und Steuerung des einen Transportfahrzeuges oder der mehreren Transportfahrzeuge in Abhängigkeit von der Öffnungsstellung und/oder der Schließstellung der Klapptür gegeben. Insbesondere kann das eine Transportfahrzeug oder die mehreren Transportfahrzeuge aktiv angesteuert werden, wenn die Klapptür in die Öffnungsstellung bewegt wurde. So kann das eine Transportfahrzeug oder die mehreren Transportfahrzeuge einen Fahrbefehl erhalten, mit welchem das eine Transportfahrzeug oder die mehreren Transportfahrzeuge jeweils in eine Halteposition verfahren werden. Die Halteposition ist dabei beispielweise so vordefiniert, dass einer Bedienperson ein ungehindertes Durchqueren der Wartungsgänge ermöglicht wird.

Es kann sich auch von Vorteil erweisen, wenn der Personendurchgang je Wartungsgang eine Verriegelungsvorrichtung umfasst, durch welche die Klapptür in der Öffnungsstellung und/oder in der Schließstellung arretierbar ist. Dadurch kann die Klapptür in der Öffnungsstellung und/oder Schließstellung zuverlässig gehalten werden.

Nach einer vorteilhaften Weiterbildung kann vorgesehen sein, dass die Verriegelungsvorrichtung ein durch einen Stellantrieb manuell oder elektromechanisch betätigbares Verriegelungselement umfasst.

Der Stellantrieb kann zur manuellen Betätigung des Verriegelungselementes einen Hebelmechanismus und dgl. umfassen. Zusätzlich oder alternativ kann die Verriegelungsvorrichtung einen Schlüssel umfassen.

Der Stellantrieb kann zur elektromechanischen Betätigung des Verriegelungselementes einen Stellmotor umfassen, welcher mit einer zentralen Steuereinheit verbunden ist, durch welche der Stellmotor angesteuert werden kann, um das Verriegelungselement zu betätigen.

Nach beiden Ausführungen ist eine komfortable Möglichkeit zur Verriegelung gegeben.

Es erweist sich auch von Vorteil, wenn die Auf- und/oder Abstiegseinheit mehrere (und unabhängig voneinander bedienbare bzw. bewegbare) Auf- und/oder Abstiegsvorrichtungen umfasst, wobei die Auf- und/oder Abstiegsvorrichtungen jeweils mit einem Trittstufensegment ausgebildet sind, welche Trittstufensegmente relativ gegenüber dem einen der ersten und zweiten Lagerregale zwischen einer ersten Gebrauchsstellung und einer zweiten Gebrauchsstellung bewegbar sind, so dass sich in der ersten Gebrauchsstellung das betreffende Trittstufensegment im Wesentlichen in einem der ersten und zweiten Lagerregale befindet und in der zweiten Gebrauchsstellung das betreffende Trittstufensegment teilweise in zumindest einen der Wartungsgänge ragt.

Dadurch ist insbesondere der Vorteil gegeben, dass die Auf- und/oder Abstiegsvorrichtungen verhältnismäßig kurz ausgebildet werden können und dadurch eine einfachere Montage und eine ergonomische Bedienung für die Bedienperson möglich ist. So kann einem Wartungsgang eine Auf- und/oder Abstiegsvorrichtung zugeordnet werden.

Beispielsweise kann jede Auf- und/oder Abstiegsvorrichtung zumindest einen Griff zum Bewegen, insbesondere Verschwenken oder Verschieben der jeweiligen Auf- und/oder Abstiegsvorrichtung aufweisen, welcher bevorzugt in für eine Bedienperson greifgünstiger Höhe angeordnet sein kann. Andererseits können dadurch auch Haltegriffe realisiert werden, um den Aufstieg und/oder Abstieg zu erleichtern.

Nach einer vorteilhaften Weiterbildung ist vorgesehen, dass die Auf- und/oder Abstiegsvorrichtungen jeweils in Höhenabschnitte unterteilt sind, wobei ein (jeweiliger) unterer Höhenabschnitt einem unteren Wartungsgang unterhalb eines jeweiligen Gehsteges (bzw. einer jeweiligen begehbaren Wartungsebene) und ein (jeweiliger) oberer Höhenabschnitt einem oberen Wartungsgang oberhalb des jeweiligen Gehsteges (bzw. einer jeweiligen begehbaren Wartungsebene) zugeordnet ist.

Von Vorteil ist dabei, dass eine Auf- und/oder Abstiegsvorrichtung mehreren Wartungsgängen zugeordnet ist. Dadurch kann der Aufstieg und/oder Abstieg über die Auf- und/oder Abstiegseinheit mit weniger Aufwand zum Bewegen der Trittstufensegmente zwischen einer ersten Gebrauchsstellung und einer zweiten Gebrauchsstellung erfolgen. Der Aufstieg und/oder Abstieg kann dadurch schneller erfolgen.

Es kann vorteilhafterweise vorgesehen sein, dass den Auf- und/oder Abstiegsvorrichtungen jeweils ein Personendurchgang zugeordnet ist.

Der Personendurchgang ist vorzugsweise als Klapptür ausgebildet, welche im Gehsteg angeordnet ist. Hierzu kann ein Gehsteg eine Öffnung aufweisen, in welcher die Klapptür mit einem Rahmen eingesetzt wird. Durch diese Maßnahme ist ein Aufstieg und/oder Abstieg über die Auf- und/oder Abstiegsvorrichtungen und die Personendurchgänge innerhalb der (vertikal übereinander und parallel zueinander verlaufenden) Wartungsgänge möglich.

Nach einer vorteilhaften Ausgestaltung ist vorgesehen, dass die Personendurchgänge in der Längsrichtung (X) der Regalgasse zueinander um einen Längsabstand versetzt angeordnet sind, insbesondere in der Längsrichtung (X) der Regalgasse zueinander um einen Längsabstand alternierend versetzt gegenüber einer Hochachse angeordnet sind.

Insbesondere können die jeweiligen Personendurchgänge in der Längsrichtung (X) der Regalgasse zueinander zwischen einer ersten Längsposition (X1) und einer von der ersten Längsposition (X1) um einen, insbesondere doppelten, Längsabstand entfernten zweiten Längsposition (X2) alternierend (in Höhenrichtung (Y)) angeordnet sein.

Der Längsabstand zwischen zwei Personendurchgänge übereinander liegender Wartungsgänge kann im Hinblick auf kurze Gehwege, Auslegung und Montageposition der Auf- und/oder Abstiegsvorrichtungen definiert werden. Bevorzugt wird der Längsabstand möglichst kurz gewählt, um zusätzlich eine platzsparende Anordnung der Personendurchgänge und Auf- und/oder Abstiegseinheit zu erreichen. Dadurch geht im Lagerregal, welches die Auf- und/oder Abstiegseinheit aufweist und in welches ein Trittstufensegment einer Auf- und/oder Abstiegsvorrichtung bewegt werden kann, um eine erste Gebrauchsstellung einzunehmen, ein Minimum an Regalplätzen verloren. Das andere Lagerregal ist von der Anordnung der Auf- und/oder Abstiegseinheit nicht betroffen und umfasst keine Einschränkungen in der Anzahl an Regalplätzen.

Nach einer vorteilhaften Weiterbildung ist vorgesehen, dass die Auf- und/oder Abstiegsvorrichtungen in der Längsrichtung (X) der Regalgasse zueinander um einen Längsabstand versetzt sind, insbesondere in der Längsrichtung (X) der Regalgasse zueinander um einen Längsabstand alternierend versetzt gegenüber einer Hochachse angeordnet sind.

Insbesondere können die jeweiligen Auf- und/oder Abstiegsvorrichtungen in der Längsrichtung (X) der Regalgasse zueinander zwischen einer ersten Längsposition (X1) und einer von der ersten Längsposition (X1) um einen, insbesondere doppelten, Längsabstand entfernten zweiten Längsposition (X2) alternierend (in Höhenrichtung (Y)) angeordnet sein.

Der Längsabstand kann zwischen zwei Auf- und/oder Abstiegsvorrichtungen übereinander liegender Wartungsgänge im Hinblick auf kurze Gehwege, Auslegung und Montageposition der Auf- und/oder Abstiegsvorrichtungen definiert werden. Bevorzugt wird der Längsabstand möglichst kurz gewählt, um zusätzlich eine platzsparende Anordnung der Personendurchgänge und Auf- und/oder Abstiegseinheit zu erreichen. Dadurch geht im Lagerregal, welches die Auf- und/oder Abstiegseinheit aufweist und in welches ein Trittstufensegment einer Auf- und/oder Abstiegsvorrichtung bewegt werden kann, um eine erste Gebrauchsstellung einzunehmen, ein Minimum an Regalplätzen verloren. Das andere Lagerregal ist von der Anordnung der Auf- und/oder Abstiegseinheit nicht betroffen und umfasst keine Einschränkungen in der Anzahl an Regalplätzen.

Nach einer Weiterbildung ist vorgesehen, dass ein Personendurchgang eine Klapptür und eine im Gehsteg angeordnete, durch die Klapptür verschließbare Öffnung aufweist und dass eine Auf- und/oder Abstiegsvorrichtung im Bereich des Personendurchganges derart angeordnet ist, dass in der zweiten Gebrauchsstellung das Trittstufensegment einer Auf- und/oder Abstiegsvorrichtung an die Öffnung (unmittelbar) angrenzt, sodass sich eine Bedienperson über die Auf- und/oder Abstiegsvorrichtung durch die Öffnung bewegen kann.

Diese Ausführung ermöglicht einen besonders sicheren Abstieg, da die Klapptür erst mit dem Erreichen des Personendurchganges geöffnet werden muss, und ein besonders sicheren Aufstieg, da die Klapptür nach dem Durchqueren des Personendurchganges geschlossen werden kann.

Zudem ist der Abstiegsweg und/oder Aufstiegsweg sehr kurz, sodass ein besonders schneller Zugang und/oder ein besonders schnelles Verlassen eines Wartungsganges möglich ist.

Insbesondere kann aber auch vorgesehen werden, dass die Öffnung eine Hochachse und das Trittstufensegment eine Hochachse definieren, und dass die Hochachse der Öffnung und die Hochachse des Trittstufensegmentes durch die Öffnung verlaufen, wenn das Trittstufensegment in die zweite Gebrauchsstellung bewegt ist. Mit anderen Worten, es überlappen das Trittstufensegment und die Öffnung.

Ist eine Anordnung vorgesehen, umfassend
eine erste Auf- und/oder Abstiegsvorrichtung, welche in der zweiten Gebrauchsstellung des Trittstufensegmentes zwei übereinander angeordnete Wartungsgänge verbindet, und
eine zweite Auf- und/oder Abstiegsvorrichtung, welche in der zweiten Gebrauchsstellung des Trittstufensegmentes zwei übereinander angeordnete Wartungsgänge verbindet,
wobei die erste Auf- und/oder Abstiegsvorrichtung und die zweite Auf- und/oder Abstiegsvorrichtung in einen Wartungsgang vorragen,
erweist es sich von Vorteil, wenn die erste Auf- und/oder Abstiegsvorrichtung und zweite Auf- und/oder Abstiegsvorrichtung in der Längsrichtung (X) der Regalgasse zueinander um einen Längsabstand versetzt sind.

Ist eine Anordnung vorgesehen, umfassend
eine erste Auf- und/oder Abstiegsvorrichtung, welche in der zweiten Gebrauchsstellung des Trittstufensegmentes zwei übereinander angeordnete Wartungsgänge verbindet,
eine zweite Auf- und/oder Abstiegsvorrichtung, welche in der zweiten Gebrauchsstellung des Trittstufensegmentes zwei übereinander angeordnete Wartungsgänge verbindet, und
eine weitere Auf- und/oder Abstiegsvorrichtung, welche in der zweiten Gebrauchsstellung des Trittstufensegmentes zwei übereinander angeordnete Wartungsgänge verbindet,
wobei die erste Auf- und/oder Abstiegsvorrichtung und die zweite Auf- und/oder Abstiegsvorrichtung in einen Wartungsgang vorragen, und
wobei die zweite Auf- und/oder Abstiegsvorrichtung und die weitere Auf- und/oder Abstiegsvorrichtung in einen weiteren Wartungsgang vorragen,
erweist es sich von Vorteil, wenn die erste Auf- und/oder Abstiegsvorrichtung, zweite Auf- und/oder Abstiegsvorrichtung und weitere Auf- und/oder Abstiegsvorrichtung in der Längsrichtung (X) der Regalgasse zueinander um einen Längsabstand alternierend versetzt gegenüber einer Hochachse angeordnet sind.

Dadurch wird eine noch kompaktere Anordnung der Auf- und/oder Abstiegseinheit ermöglicht und es werden noch weniger Regalplätze verloren.

Nach einer vorteilhaften Weiterbildung ist vorgesehen, dass die Auf- und/oder Abstiegsvorrichtung das Trittstufensegment und einen Tragrahmen aufweist, an welchem das Trittstufensegment befestigt ist, und dass die Auf- und/oder Abstiegsvorrichtung mit dem Tragrahmen über eine Linearführung oder eine Schwenklagerung an einem der ersten und zweiten Lagerregale angeordnet ist.

Dadurch ist auf vergleichsweise einfache Art und Weise eine zuverlässige und für die Bedienperson ergonomische Bewegung des Trittstufensegmentes zwischen der ersten und zweiten Gebrauchsstellung realisierbar.

Gemäß einer vorteilhaften Weiterbildung ist vorgesehen, dass der Tragrahmen in Horizontalrichtung (Z) verschiebbar ist oder dass der Tragrahmen um eine in Höhenrichtung (Y) verlaufende Schwenkachse schwenkbar ist.

Dadurch ist der Vorteil gegeben, dass das Trittstufensegment seitlich in den oder aus dem Wartungsgang geschoben oder geschwenkt werden kann.

Es kann sich auch von Vorteil erweisen, wenn die Auf- und/oder Abstiegsvorrichtung das Trittstufensegment und einen Tragrahmen aufweist, an welchem Trittstufen in äquidistanten Abständen übereinander und zueinander parallel angeordnet sind.

Dadurch ist der Vorteil gegeben, dass der Vertikalgehwegabschnitt eine einfach zu handhabende und für den Benutzer sichere Auf- und/oder Abstiegsvorrichtung ausbildet.

Bevorzugt sind die äquidistanten Abstände derart gewählt, dass die Trittstufen bei der Bewegung zwischen der ersten Gebrauchsstellung und zweiten Gebrauchsstellung an den vorderen Längstraversen vorbeibewegt werden können und daher nicht mit den vorderen Längstraversen kollidieren. Insbesondere unterscheidet sich ein Teilungsabstand zwischen den übereinander angeordneten vorderen Längstraversen von einem Teilungsabstand zwischen den Trittstufen und/oder sind die Trittstufen in Vertikalrichtung (Y) gegenüber den vorderen Längstraversen versetzt angeordnet.

Nach einer vorteilhaften Weiterbildung kragen die Trittstufen einseitig am Tragrahmen frei vor.

Dadurch ist der Vorteil gegeben, dass in der zweiten Gebrauchsstellung des Trittstufensegmentes der Tragrahmen noch innerhalb des Lagerregales angeordnet ist, während die Trittstufen in den Wartungsgang hineinbewegt wurden.

Es ist dabei von Vorteil, wenn die Trittstufen jeweils an einem vorkragenden Ende eine Trittfläche ausbilden und jeweils an einem gegenüberliegenden Ende mit dem Tragrahmen verbunden sind.

Dadurch kann eine hohe Trittsicherheit beim Auf- und/oder Abstieg erreicht werden. Der Tragrahmen kann beim Auf- und/oder Abstieg gleichzeitig zum Anhalten der Bedienperson verwendet werden.

Es sei an dieser Stelle auch hingewiesen, dass es sich von Vorteil erweisen kann, wenn die erste Regalgasseneinheit an einem Wartungsgang, insbesondere je Wartungsgang, auch mehrere Personendurchgänge und/oder die zweite Regalgasseneinheit an einem Wartungsgang, insbesondere je Wartungsgang, auch mehrere Personendurchgänge aufweisen kann. Dies erweist sich insbesondere bei langen Regalgassen von Vorteil, da je Wartungsgang mehrere Auf- und/oder Abstiegsmöglichkeiten gegeben sind.

Es kann sich auch eine Ausführung vorteilhaft erweisen, welche umfasst
einen Vertikalgang, welcher in einem der ersten und zweiten Lagerregale verläuft oder einem der ersten und zweiten Lagerregale zugeordnet ist, und
einen weiteren Personendurchgang, welcher in einem der ersten und zweiten Lagerregale (zwischen den einander gegenüberliegenden Stirnseiten) vorgesehen ist, in welchem auch der Vertikalgang verläuft oder welchem der Vertikalgang zugeordnet ist, und über welchen weiteren Personendurchgang ein Verbindungsweg zwischen dem Vertikalgang und zumindest einem der Wartungsgänge bereitgestellt ist,
wobei die Auf- und/oder Abstiegseinheit zusätzlich einen Horizontalgehwegabschnitt aufweist, welcher auf Höhe des weiteren Personendurchganges angeordnet ist und ausgehend vom Vertikalgang in eines der ersten und zweiten Lagerregale bis zum weiteren Personendurchgang hineinragt, und
wobei die Auf- und/oder Abstiegseinheit zusätzlich einen Vertikalgehwegabschnitt aufweist, welcher dem Vertikalgang zugeordnet und mit dem Horizontalgehwegabschnitt verbunden ist.

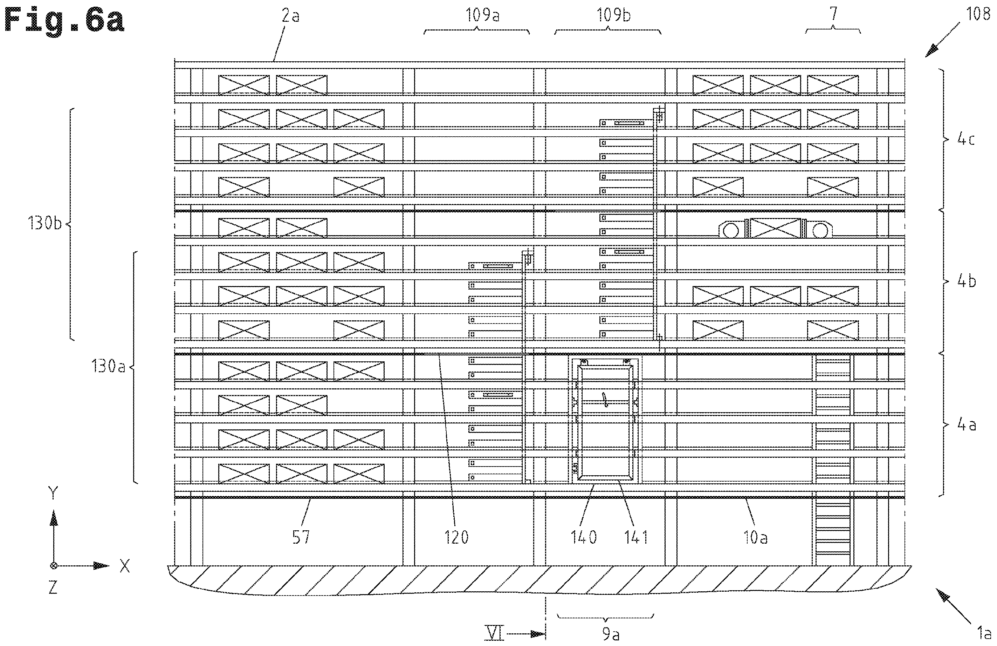

Diese Lösung kombiniert unterschiedliche Ausführungen von Aufstiegs- und/oder Abstiegsmöglichkeiten und ist beispielweise in Fig. 6a bis 6e dargestellt.

So ist es beispielweise möglich, dass abschnittsweise (in einem oberen Höhenabschnitt) ein Aufstieg- und/oder Abstieg zwischen übereinander angeordneten Wartungsgängen, insbesondere einem untersten Wartungsgang und einem obersten Wartungsgang, über diejenige eine oder mehreren Auf- und/oder Abstiegsvorrichtungen erfolgt, welche jeweils ein Trittstufensegment ausbilden, das relativ gegenüber dem einen der ersten und zweiten Lagerregale zwischen einer ersten Gebrauchsstellung und einer zweiten Gebrauchsstellung bewegbar ist, so dass sich in der ersten Gebrauchsstellung das Trittstufensegment im Wesentlichen in einem der ersten und zweiten Lagerregale befindet und in der zweiten Gebrauchsstellung das Trittstufensegment zumindest teilweise in zumindest einen der Wartungsgänge ragt.

In diesem Zusammenhang ist es dann möglich, dass abschnittsweise (in einem unteren Höhenabschnitt) der Aufstieg- und/oder Abstieg über einen weiteren Personendurchgang, einen Horizontalgehwegabschnitt und einen Vertikalgehwegabschnitt erfolgt.

Gemäß einer Ausführungsform ist vorteilhafterweise vorgesehen, dass der weitere Personendurchgang einen Durchgang umfassen, welcher Durchgang in einer sich in der Längsrichtung (X) und einer Höhenrichtung (Y) aufspannenden Ebene liegt.

Dadurch kann ein Wartungsgang von einer Bedienperson im Wesentlichen auf einem horizontalen Wege bequem verlassen oder betreten werden.

Nach einer vorteilhaften Weiterbildung kann vorgesehen sein, dass der weitere Personendurchgang und dem Durchgang zugeordnet eine Zugangstür umfasst, welche zwischen einer Öffnungsstellung, in welcher einer Bedienperson ein Zugang in den Wartungsgang ermöglicht ist, und einer Schließstellung, in welcher einer Bedienperson ein Zugang in den Wartungsgang verhindert ist, bewegbar ist.

Dadurch kann auf vergleichsweise einfache Weise eine zuverlässige und sichere Zutrittskontrolle realisiert werden. Auch kann ein weiterer Personendurchgang und eine diesem zugeordnete Zugangstür nahezu beliebig entlang der Längsrichtung (X) an einem Lagerregal, insbesondere an (bloß) einem der Lagerregale der Regalgasseneinheit, angeordnet werden. Ein solcher weiterer Personendurchgang und/oder eine solche Zugangstür können bereits bei der (konstruktiven) Auslegung eines Lagerregales berücksichtigt werden. Dies kann bedeuten, dass die vorderen Regalsteher und/oder hinteren Regalsteher und/oder vorderen Längstraversen und/oder hinteren Längstraversen und/oder Regalebenen mit den Regalplätzen in der Anordnung, insbesondere in der Position, so aufeinander abgestimmt und miteinander zu einem Lagerregal verbunden werden, dass ein weiterer Personendurchgang und/oder eine Zugangstür vorgesehen werden können. So ist es möglich, dass ein Lagerregal bereits in der Realisierung mit einem weiteren Personendurchgang und/oder einer Zugangstür gebaut wird. Möglich ist aber auch, dass ein weiterer Personendurchgang und/oder eine Zugangstür an einem Lagerregal eines bestehenden Regallagersystems nachgerüstet werden. Beispielweise kann im Bereich eines geplanten weiteren Personendurchganges ein Durchgangsabschnitt, insbesondere ein Unterbrechungsabschnitt, derart vorgesehen werden, dass die vorderen Längstraversen im Durchgangsabschnitt je vorderer Längstraverse einen zusätzlichen und entfernbaren Längstraversenabschnitt aufweisen. Ein je vorderer Längstraverse entfernbarer Längstraversenabschnitt ist zwischen den vorderen Längstraversen derart angeordnet, dass voneinander abgewandte Stirnenden eines entfernbaren Längstraversenabschnittes mit den einander zugewandten Stirnenden der vorderen Längstraversen fluchten. Zudem kann der je vorderer Längstraverse vorgesehene und entfernbare Längstraversenabschnitt an den voneinander abgewandten Stirnenden über Verbindungsmittel mit den einander zugewandten Stirnenden der vorderen Längstraversen, beispielsweise über Schraubverbindungen, lösbar verbunden werden. Werden die Längstraversenabschnitte durch Lösen der Verbindung zwischen den entfernbaren Längstraversenabschnitten und vorderen Längstraversen entfernt, kann eine Zugangstür nachträglich angebracht werden.

Es erweist sich von Vorteil, dass in der Öffnungsstellung die Zugangstür einen Verbindungsweg zwischen dem Vertikalgang und zumindest einem der Wartungsgänge freigeben bzw. öffnen kann, sofern ein Personendurchgang vorgesehen ist, oder dass in der Öffnungsstellung die jeweilige Zugangstür einen jeweiligen Verbindungsweg zwischen dem Vertikalgang und dem jeweiligen Wartungsgang freigeben bzw. öffnen kann, sofern mehrere Personendurchgänge vorgesehen sind. Der Verbindungsweg kann als "durchgehender" Verbindungsweg verstanden werden.

Es erweist sich von Vorteil, dass in der Schließstellung die Zugangstür einen Verbindungsweg zwischen dem Vertikalgang und zumindest einem der Wartungsgänge verschließen kann, sofern ein Personendurchgang vorgesehen ist, oder dass in der Schließstellung die jeweilige Zugangstür einen jeweiligen Verbindungsweg zwischen dem Vertikalgang und dem jeweiligen Wartungsgang verschließen kann, sofern mehrere Personendurchgänge vorgesehen sind. Der Verbindungsweg kann als "unterbrochener" Verbindungsweg verstanden werden.

Gemäß einer weiteren Ausführungsform kann vorteilhafterweise vorgesehen sein, dass
jene vorderen Längstraversen, welche den weiteren Personendurchgang in der Längsrichtung (X) queren bzw. queren würden, im Bereich des Durchgangs einen Durchgangsabschnitt ausbilden und mit ihren Stirnenden am Durchgang enden, und
die Zugangstür einen Tragrahmen umfasst, an welchem Längstraversenabschnitte befestigt und derart angeordnet sind, dass in der Schließstellung der Zugangstür die Längstraversenabschnitte in Verlängerung jener vorderen Längstraversen verlaufen, welche den Durchgangsabschnitt ausbilden, wobei die jeweiligen Längstraversenabschnitte mit ihren Stirnenden auf die Stirnenden der jeweiligen vorderen Längstraversen gerichtet sind, sodass ein im Wesentlichen spaltfreier Übergang zwischen den jeweiligen vorderen Längstraversen und den jeweiligen Längstraversenabschnitten entsteht.

Dadurch ist der Vorteil gegeben, dass die in Höhenrichtung (Y) beabstandet angeordneten Längstraversenabschnitte mit dem Tragrahmen der Zugangstür gemeinsam (gleichzeitig) in die Öffnungsstellung oder Schließstellung bewegt werden können. Eine solche Zugangstür mit Längstraversenabschnitten kann in vorteilhafterweise Weise im Werk vorgefertigt werden, eine Nachbearbeitung auf der Baustelle kann entfallen.

Ein weiterer Personendurchgang und eine diesem zugeordnete Zugangstür kann zwischen einander abgewandten Stirnenden eines Lagerregales, in welchem der Vertikalgang verläuft oder welchem der Vertikalgang zugeordnet ist, beispielweise im ersten Drittel, zweiten Drittel oder dritten Drittel angeordnet werden.

Ist nach einer ersten Ausführung genannter weiterer Personendurchgang und eine diesem zugeordnete genannte Zugangstür im ersten Drittel nahe dem Stirnende des genannten Lageregales angeordnet, so enden die vorderen Längstraversen auf einer ersten Durchgangseite und relativ zum weiteren Personendurchgang vor der Zugangstür. Die Längstraversenabschnitte an der Zugangstür "verlängern" demnach die vorderen Längstraversen bis zum Regalgassenende, sodass das eine oder die mehreren automatisiert betriebenen Transportfahrzeuge bis zum Regalgassenende verfahren kann.

Ist nach einer zweiter Ausführung genannter weiterer Personendurchgang und eine diesem zugeordnete genannte Zugangstür zwischen den Stirnenden des genannten Lageregales angeordnet, beispielweise im zweiten Drittel des genannten Lageregales, so verlaufen die vorderen Längstraversen zu beiden Seiten eines weiteren Personendurchganges zueinander fluchtend. Demnach sind vordere Längstraversen auf einer ersten Durchgangseite relativ zum weiteren Personendurchgang vor der Zugangstür und vordere Längstraversen auf einer zweiten Durchgangseite relativ zum weiteren Personendurchgang nach der Zugangstür angeordnet. Die Längstraversenabschnitte an der Zugangstür "überrücken" demnach die vorderen Längstraversen, sodass das eine oder die mehreren automatisiert betriebenen Transportfahrzeuge zwischen den Regalgassenende verfahren kann und dabei einen weiteren Personendurchgang passiert.

Sohin können nach der ersten und zweiten Ausführung im Lagerregal, in welchem kein Vertikalgang verläuft oder welchem kein Vertikalgang zugeordnet ist, von dem einen oder den mehreren automatisiert betriebenen Transportfahrzeuge angefahren werden, um mittels der Transfervorrichtung Ladegüter zwischen einem jeweiligen Regalplatz und dem Transportfahrzeug zu transferieren.

Gemäß einer Weiterbildung kann vorteilhafterweise vorgesehen sein, dass die Zugangstür mit dem Tragrahmen über eine Linearführung oder eine Schwenklagerung an einem der ersten und zweiten Lagerregale gelagert ist.

Dadurch ist eine vergleichsweise einfache Montage und ergonomische Bedienung der Zugangstür ermöglicht.

Nach einer vorteilhaften Ausführung kann vorgesehen werden, dass der weitere Personendurchgang einen Sensor umfasst, durch welchen die Zugangstür in der Öffnungsstellung und/oder in der Schließstellung überwachbar ist und durch welchen ein Zustandssignal in der Öffnungsstellung und/oder in der Schließstellung abgebbar ist.

Der Sensor kann einen ersten Sensor und einen zweiten Sensor umfassen. Der erste Sensor kann die Öffnungsstellung und der zweite Sensor die Schließstellung überwachen. Der Sensor kann aber auch nur einen Sensor umfassen, welcher entweder die Öffnungsstellung oder die Schließstellung überwacht.

Dementsprechend kann ein Zustandssignal abgegeben werden, welches beispielsweise die Information beinhalten kann, dass die Zugangstür "offen gehalten" und/oder "geschlossen gehalten" ist.

Dadurch ist eine vergleichsweise einfache Möglichkeit zur Überwachung der Öffnungsstellung und/oder Schließstellung realisierbar und somit ein zuverlässiger Betrieb des Regallagersystems möglich.

Der Sensor ist beispielweise ein induktiver Näherungsschalter.

Nach einer vorteilhaften Weiterbildung kann vorgesehen sein, dass der Sensor mit einer zentralen Steuereinheit verbunden ist, die ihrerseits das eine Transportfahrzeug oder die mehreren Transportfahrzeuge ansteuert, wenn die Zugangstür in die Öffnungsstellung und/oder in die Schließstellung bewegt und ein Zustandssignal abgegeben wurde.

Dadurch ist eine einfache Möglichkeit zur zentralen Überwachung und Steuerung des einen Transportfahrzeuges oder der mehreren Transportfahrzeuge in Abhängigkeit von der Öffnungsstellung und/oder der Schließstellung der Zugangstür gegeben. Insbesondere kann das eine Transportfahrzeug oder die mehreren Transportfahrzeuge aktiv angesteuert werden, wenn die Zugangstür in die Öffnungsstellung bewegt wurde. So kann das eine Transportfahrzeug oder die mehreren Transportfahrzeuge einen Fahrbefehl erhalten, mit welchem das eine Transportfahrzeug oder die mehreren Transportfahrzeuge jeweils in eine Halteposition verfahren werden. Die Halteposition ist dabei beispielweise so vordefiniert, dass einer Bedienperson ein ungehinderter Zugang vom weiteren Personendurchgang in einen Wartungsgang ermöglicht wird.

Gemäß einer weiteren vorteilhaften Ausführung kann vorgesehen sein, dass der weitere Personendurchgang eine Verriegelungsvorrichtung umfasst, durch welche die Zugangstür in der Öffnungsstellung und/oder in der Schließstellung arretierbar ist.

Dadurch kann die Zugangstür in der Öffnungsstellung und/oder Schließstellung zuverlässig gehalten werden. Es erweist sich insbesondere von Vorteil, wenn die Zugangstür in der Schließstellung arretiert wird, weil damit eine sichere und sanfte (verschleißschonende) Überfahrt eines Transportfahrzeuges von einer vorderen Längstraverse des Lagerregales auf einen Längstraversenabschnitt der Zugangstür möglich ist, selbst wenn das Transportfahrzeug mit hoher Geschwindigkeit verfährt.

Nach einer vorteilhaften Weiterbildung kann vorgesehen sein, dass die Verriegelungsvorrichtung ein durch einen Stellantrieb manuell oder elektromechanisch betätigbares Verriegelungselement umfasst.

Der Stellantrieb kann zur manuellen Betätigung des Verriegelungselementes einen Hebelmechanismus und dgl. umfassen. Zusätzlich oder alternativ kann die Verriegelungsvorrichtung einen Schlüssel umfassen.

Der Stellantrieb kann zur elektromechanischen Betätigung des Verriegelungselementes einen Stellmotor umfassen, welcher mit einer zentralen Steuereinheit verbunden ist, durch welche der Stellmotor angesteuert werden kann, um das Verriegelungselement zu betätigen.

Es zeigen jeweils in stark vereinfachter, schematischer Darstellung:
- Fig. 1a: eine mögliche Ausführung eines erfindungsgemäßen Regallagersystems mit einer Detailansicht auf einen optionalen Personenzugang und eine optionale Ladegut-Manipulationseinheit einer Regalgasseneinheit, in Draufsicht;
- Fig. 1b: das Regallagersystem nach Fig. 1a mit einer Detailansicht auf eine Regalgasse und die Lagerregale im Bereich eines Personendurchganges und einer Auf- und/oder Abstiegseinheit, wobei Auf- und/oder Abstiegsvorrichtungen der Auf- und/oder Abstiegseinheit in eine erste Gebrauchsstellung verstellt sind, in Draufsicht;
- Fig. 1c: das Regallagersystem nach Fig. 1a mit einer Detailansicht auf eine Regalgasse und die Lagerregale im Bereich eines Personendurchganges und einer Auf- und/oder Abstiegseinheit, wobei Auf- und/oder Abstiegsvorrichtungen der Auf- und/oder Abstiegseinheit in eine zweite Gebrauchsstellung verstellt sind, in Draufsicht;
- Fig. 1d: das Regallagersystem nach Fig. 1a mit einer Detailansicht auf die Regalgasse, die Lagerregale und einer optionalen Transportfahrzeug-Hebevorrichtung, in Draufsicht;
- Fig. 2a: das Regallagersystem nach Fig. 1a mit der optionalen Ladegut-Manipulationseinheit und einer optionale Fördertechnik zum Einlagern von Ladegütern, in einer Seitenansicht gemäß Linie I;
- Fig. 2b: das Regallagersystem nach Fig. 1a mit der optionalen Ladegut-Manipulationseinheit und einer optionale Fördertechnik zum Auslagern von Ladegütern, in einer Seitenansicht gemäß Linie II;
- Fig. 2c: das Regallagersystem nach Fig. 1b, in Seitenansicht gemäß Linie III;
- Fig. 2d: das Regallagersystem nach Fig. 1c, in Seitenansicht gemäß Linie IV;
- Fig. 2e: das Regallagersystem nach Fig. 1d, in Seitensicht gemäß Linie V;
- Fig. 3: eine Ausschnittsvergrößerung aus dem Regallagersystem mit einer Detailansicht auf ein Transportfahrzeug und einen Gehsteg in einem Wartungsgang, in Stirnansicht;
- Fig. 4a: eine Ausschnittsvergrößerung aus Fig. 2c;
- Fig. 4b: eine Ausschnittsvergrößerung aus Fig. 1b;
- Fig. 5: eine mögliche Ausführung eines erfindungsgemäßen Regallagersystems mit einer ersten Regalgasseneinheit, einer zweiten (weiteren) Regalgasseneinheit in einer Detailansicht jeweils auf die Regalgasse, die Lagerregale und einer optionalen Transportfahrzeug-Hebevorrichtung, in Draufsicht;
- Fig. 6a: eine mögliche Ausführung eines erfindungsgemäßen Regallagersystems mit einer Detailansicht auf eines der Lagerregale im Bereich einer Auf- und/oder Abstiegseinheit mit unterschiedlichen Auf- und/oder Abstiegsmöglichkeiten, in Seitenansicht;
- Fig. 6b: eine Ausschnittsvergrößerung aus Fig. 6a im Bereich eines weiteren Personendurchganges in einer möglichen Ausführung, in Seitenansicht;
- Fig. 6c: eine Stirnansicht auf das Regallagersystem gemäß der Linie VI in Fig. 6a mit einer Auf- und/oder Abstiegsvorrichtung und einem weiteren Personendurchgang, wobei eine Zugangstür des weiteren Personendurchganges in eine Öffnungsstellung bewegt ist, in welcher eine Bedienperson einen Wartungsgang verlassen oder betreten kann;
- Fig. 6d: eine Ausschnittsvergrößerung aus Fig. 6c;
- Fig. 6e: eine Ausschnittsvergrößerung aus Fig. 6a im Bereich eines Personendurchganges in einer möglichen Ausführung, in Seitenansicht.

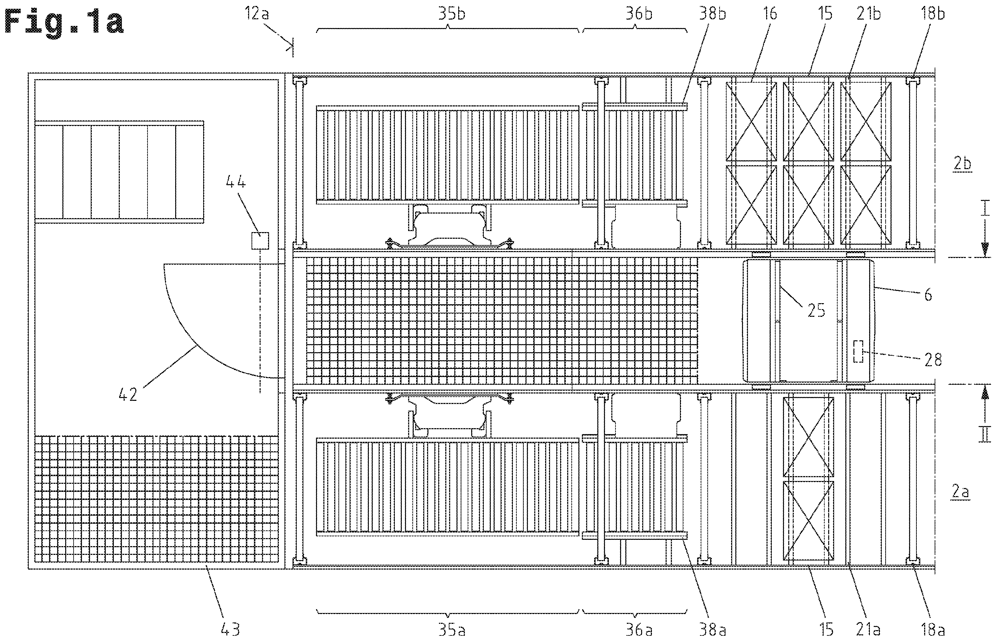

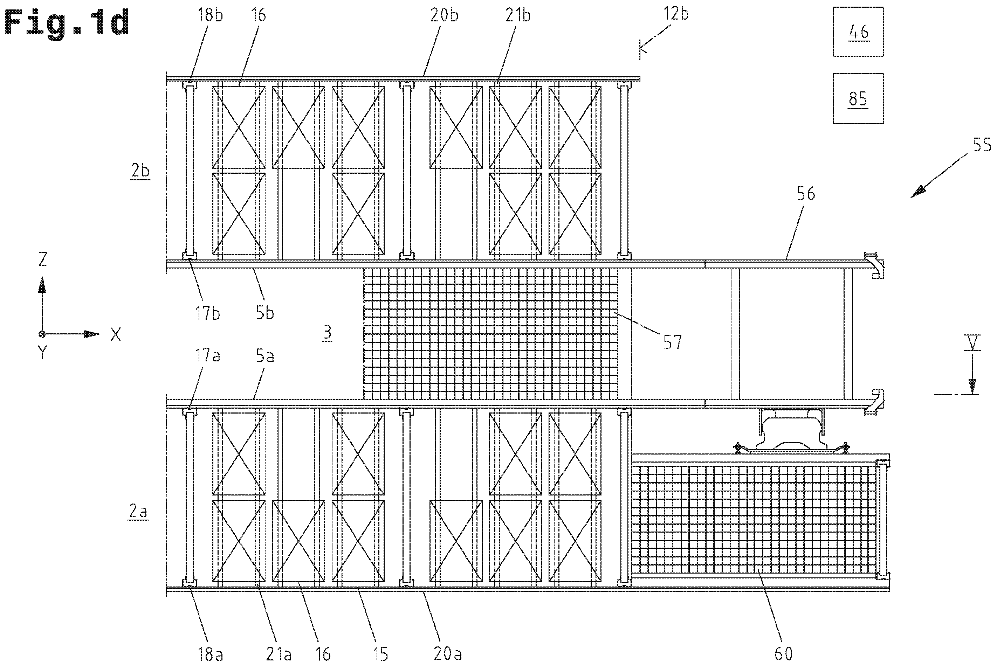

In den gemeinsam beschriebenen Fig. 1a bis 1d, Fig. 2a bis 2e, Fig. 3, Fig. 4a und 4b ist eine Ausführung eines Regallagersystems gezeigt. Es sei hingewiesen, dass aus Gründen der besseren Übersicht in Fig. 1a und 1d ein Gehsteg eines Wartungsganges nur abschnittsweise dargestellt ist. Das Regallagersystem kann eine einzige Regalgasseneinheit oder mehrere Regalgasseneinheiten umfassen. In den genannten Figuren ist eine erste Regalgasseneinheit 1a gezeigt.

Das Regallagersystem, insbesondere die Regalgasseneinheit, sofern (nur) eine Regalgasseneinheit vorgesehen ist, oder jede Regalgasseneinheit, sofern mehrere Regalgasseneinheiten vorgesehen sind, umfasst ein erstes Lagerregal 2a, ein zweites Lagerregal 2b, eine Regalgasse 3, Wartungsgänge 4a, 4b, 4c, Führungsbahnen 5a, 5b und ein oder mehrere automatisiert betriebene Transportfahrzeuge 6. Das automatisiert betriebene Transportfahrzeug 6 ist beispielweise ein Einebenenregalbediengerät.

Zusätzlich umfasst das Regallagersystem, insbesondere die Regalgasseneinheit, sofern (nur) eine Regalgasseneinheit vorgesehen ist, oder jede Regalgasseneinheit, sofern mehrere Regalgasseneinheiten vorgesehen sind, Personendurchgänge 109a, 109b, 109c und eine den Personendurchgängen 109a, 109b, 109c zugeordnete und in einem der ersten und zweiten Lagerregale 2a, 2b vorgesehene Auf- und/oder Abstiegseinheit 108.

Das erste Lagerregal 2a umfasst in übereinander liegenden Regalebenen E1 angeordnete Regalplätze 15 für Ladegüter 16. Das zweite Lagerregal 2b umfasst in übereinander liegenden Regalebenen E1 angeordnete Regalplätze 15 für Ladegüter 16.

Insbesondere umfasst das erste Lagerreal 2a zusätzlich vordere Regalsteher 17a, hintere Regalsteher 18a, an den vorderen Regalstehern 17a übereinander angeordnete vordere Längstraversen 19a und an den hinteren Regalstehern 18a übereinander angeordnete hintere Längstraversen 20a sowie je Regalebene E1 eine zwischen einer vorderen Längstraverse 19a und einer hinteren Längstraverse 20a angeordnete Lagerfläche 21a, auf welcher die Ladegüter 16 abgestellt werden können. Die vorderen Längstraversen 19a sind vorzugsweise je Lagerebene E1 angeordnet und verlaufen in einer X-Richtung parallel zur Regalgasse 3. Die hinteren Längstraversen 20a sind vorzugsweise je Lagerebene E1 angeordnet und verlaufen in einer X-Richtung parallel zur Regalgasse 3. Beispielweise umfasst die Lagerfläche 21a Querträger, welche sich mit gegenseitigem Abstand parallel in einer Tiefenrichtung (Z-Richtung) des Lagerregales 2a horizontal erstrecken. In diesem Fall bilden die Querträger obenseitig die Regalplätze 15 aus.

Insbesondere umfasst das zweite Lagerreal 2b zusätzlich vordere Regalsteher 17b, hintere Regalsteher 18b, an den vorderen Regalstehern 17b übereinander angeordnete vordere Längstraversen 19b und an den hinteren Regalstehern 18b übereinander angeordnete hintere Längstraversen 20b sowie je Regalebene E1 eine zwischen einer vorderen Längstraverse 19b und einer hinteren Längstraverse 20b angeordnete Lagerfläche 21b, auf welcher die Ladegüter 16 abgestellt werden können. Die vorderen Längstraversen 19b sind je Lagerebene E1 angeordnet und verlaufen in einer X-Richtung parallel zur Regalgasse 3. Die hinteren Längstraversen 20b sind je Lagerebene E1 angeordnet und verlaufen in einer X-Richtung parallel zur Regalgasse 3. Beispielweise umfasst die Lagerfläche 21b Querträger, welche sich mit gegenseitigem Abstand parallel in einer Tiefenrichtung (Z-Richtung) des Lagerregales 2b horizontal erstrecken. In diesem Fall bilden die Querträger obenseitig die Regalplätze 15 aus.

Nach gezeigter Ausführung sind die Führungsbahnen 5a, 5b an zumindest einigen der vorderen Längstraversen 19a, 19b des ersten Lagerregales 2a und/oder zweiten Lagerregales 2b vorgesehen. Das Transportfahrzeug 6 kann in der Regalgasse 3 entlang der Führungsbahnen 5a, 5b verfahren.

Bevorzugt sind eine Vielzahl von Transportfahrzeugen 6 vorgesehen, welche in übereinander liegenden Fahrebenen E2 entlang der paarweise angeordneten Führungsbahnen 5a, 5b verfahren werden.

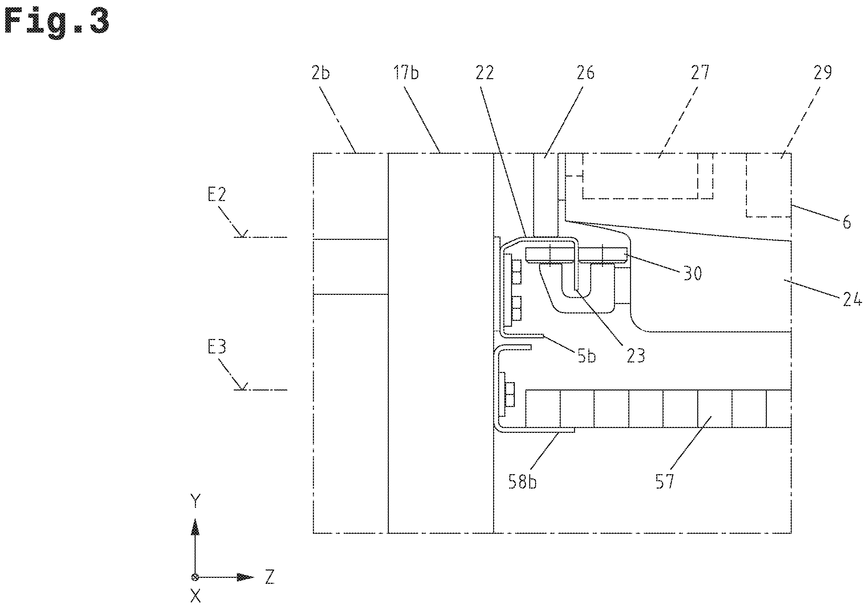

Insbesondere sind die Führungsbahnen 5a, 5b in übereinander liegenden Fahrebenen E2 jeweils paarweise angeordnet und es bildet je Fahrebene E2 eine der Führungsbahnen 5a, 5b eine erste Führung 22 und eine zweite Führung 23 aus, beispielsweise die Führungsbahn 5b, wie in Fig. 3 ersichtlich.

Das Transportfahrzeug 6, wie in Fig. 1a und in einem Ausschnitt in Fig. 3 ersichtlich, umfasst einen Grundrahmen 24, eine Transfervorrichtung 25 zum Transferieren von Ladegütern 16 zwischen einem Regalplatz 15 und dem Transportfahrzeug 6, Laufräder 26, einen Fahrantrieb 27, welcher mit zumindest einem Laufrad 26 gekoppelt ist, zumindest eine Führungseinheit, einen Transferantrieb 28 zum Antrieb der Transfervorrichtung 25 sowie eine elektronische Steuerung 29. Die Laufräder 26 sind am Grundrahmen 24 drehbar gelagert. Die zumindest eine Führungseinheit ist am Grundrahmen 24 montiert und umfasst zu beiden Seiten der zweiten Führung 23 und auf der zweiten Führung 23 an voneinander abgewandten Führungsabschnitten abrollbar anliegende Führungsräder 30, um das Transportfahrzeug 6 auf der Fahrbewegung entlang der Führungsbahn 5b geführt zu bewegen. Die ersten Laufräder 26 auf einer ersten Fahrzeugseite liegen auf der ersten Führung 22 einer ersten Führungsbahn 5a abrollbar auf und die zweiten Laufräder 26 auf einer zweiten Fahrzeugseite liegen auf der ersten Führung 22 einer zweiten Führungsbahn 5b abrollbar auf.

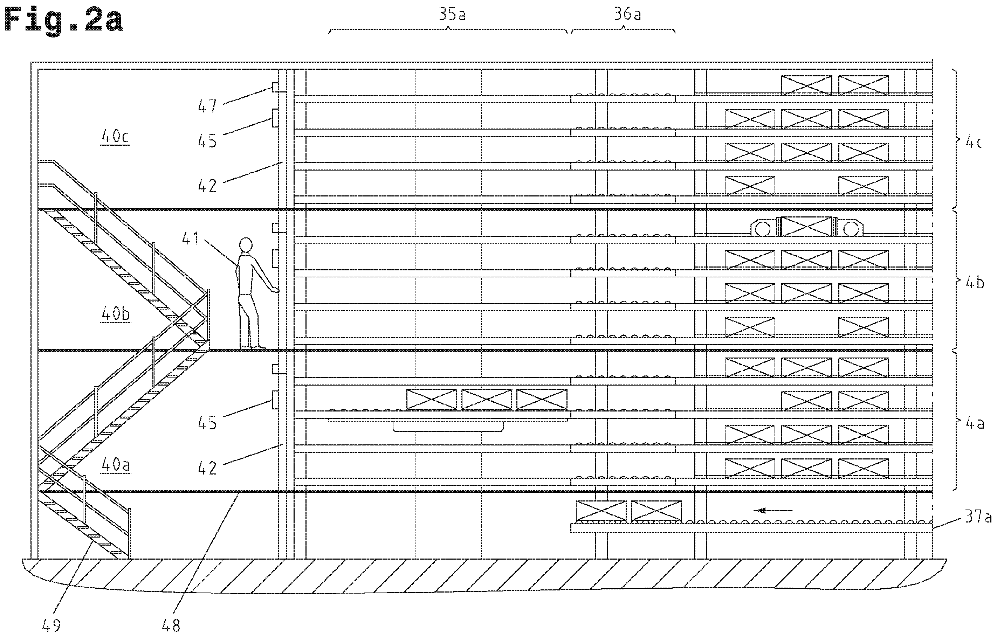

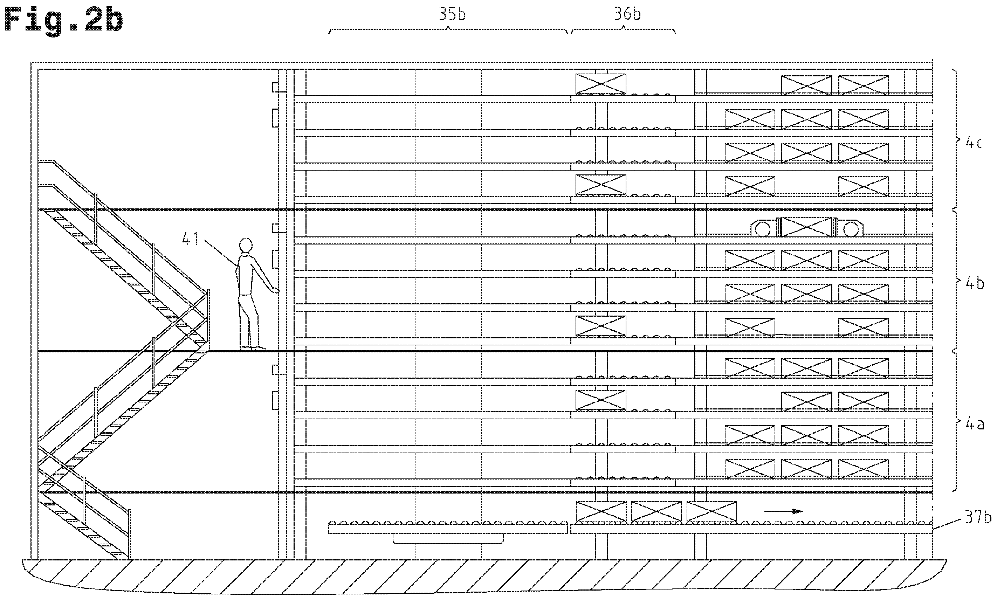

Wie in den Fig. 1a, 2a, 2b ersichtlich, kann das Regallagersystem, insbesondere die Regalgasseneinheit, sofern (nur) eine Regalgasseneinheit vorgesehen ist, oder jede Regalgasseneinheit, sofern mehrere Regalgasseneinheiten vorgesehen sind, optional eine Ladegut-Manipulationseinheit und eine Fördertechnik zum Transport von Ladegütern 16 umfassen.

Die Ladegut-Manipulationseinheit kann zum Einlagern von Ladegütern 16 eine erste Ladegut-Transportvorrichtung 35a und eine erste Puffervorrichtung 36a und zum Auslagern von Ladegütern 16 eine zweite Ladegut-Transportvorrichtung 35b und eine zweite Puffervorrichtung 36b aufweisen.

Die Fördertechnik zum Transport von Ladegütern 16 schließt an die Ladegut-Manipulationseinheit an und umfasst zum Einlagern von Ladegütern 16 eine erste Fördervorrichtung 37a und umfasst zum Auslagern von Ladegütern 16 eine zweite Fördervorrichtung 37b.

Die erste Puffervorrichtung 35a weist in übereinander liegenden Bereitstellebenen angeordnete erste Bereitstellvorrichtungen 38a und die zweite Puffervorrichtung 38b in übereinander liegenden Bereitstellebenen angeordnete zweite Bereitstellvorrichtungen 38b auf.

Die erste Ladegut-Transportvorrichtung 35a verbindet die erste Fördervorrichtung 37a und die ersten Bereitstellvorrichtungen 38a der ersten Puffervorrichtung 36a, um (einzulagernde) Ladegüter zwischen den ersten Bereitstellvorrichtungen 38a und der ersten Fördervorrichtung 37a zu transportieren.

Die zweite Ladegut-Transportvorrichtung 35b verbindet die zweite Fördervorrichtung 37b und die zweiten Bereitstellvorrichtungen 38b der zweiten Puffervorrichtung 36b, um (auszulagernde) Ladegüter 16 zwischen den zweiten Bereitstellvorrichtungen 38b und der zweiten Fördervorrichtung 37b zu transportieren.

Das eine oder die mehreren Transportfahrzeuge 6 können in der Regalgasse 3 entlang der vorderen Längstraversen 19a, 19b vor den Regalplätzen 15, der ersten Puffervorrichtung 36a und zweiten Puffervorrichtung 36b verfahren werden und die Ladegüter 16 zwischen der ersten Puffervorrichtung 36a und den Regalplätzen 15 oder zwischen den Regalplätzen 15 und der zweiten Puffervorrichtung 36b transportieren.

Wie in den Fig. 1a, 2a, 2b ersichtlich, kann das Regallagersystem, insbesondere die Regalgasseneinheit, sofern (nur) eine Regalgasseneinheit vorgesehen ist, oder jede Regalgasseneinheit, sofern mehrere Regalgasseneinheiten vorgesehen sind, optional einen Personenzugang 40a, 40b, 40b je Wartungsgang 4a, 4b, 4c zum Zugang in den betreffenden Wartungsgang 4a, 4b, 4c von einer Stirnseite der Regalgasse 3 umfassen.

Eine Bedienperson 41 hat über den jeweiligen optionalen Personenzugang 40a, 40b, 40b Zugang zu einen jeweiligen Wartungsgang 4a, 4b, 4c. Hierzu umfasst der Personenzugang 40a, 40b, 40b eine öffenbare und schließbare Zugangstür 42. Die Zugangstür 42 ist je Wartungsgang 4a, 4b, 4c in einem Schutzzaun 43 angeordnet, der aus sicherheitstechnischen Gründen vorgesehen ist, um einen unbefugten Zutritt durch Menschen zu verhindern. Die Zugangstür 42 kann verriegelt, entriegelt, geöffnet und/oder geschlossen werden. Ein entsprechender Zustand der Zugangstür 42 kann mit einem Sensor 44 überwacht und als Zustandssignal ausgegeben werden. Der Sensor 44 kann in Form eines Positionsschalter, Lichttasters oder einer Lichtschranke realisiert sein.

Der optionale Personenzugang 40a, 40b, 40b umfasst mindestens eine Schaltvorrichtung 45. Bevorzugt ist pro Personenzugang 40a, 40b, 40b, insbesondere je Wartungsgang 4a, 4b, 4c, eine eigene Schaltvorrichtung 45 vorgesehen. Die Schaltvorrichtung 45 ist (logisch) dem Wartungsgang 4a, 4b, 4c zugeordnet. Die Schaltvorrichtung(en) 45 ist mit einer Steuereinheit 46 verbunden.

Die Schaltvorrichtung(en) 45 kann ein nicht näher dargestelltes Schaltmittel (Betriebsartenwahlschalter) umfassen, mittels welchem zwischen einem Automatikbetrieb und einem Sicherheitsbetrieb für das eine oder die mehreren Transportfahrzeuge 6 und/oder die Ladegut-Manipulationseinheit und/oder eine Transportfahrzeug-Hebevorrichtung einer Regalgasseneinheit umgeschaltet werden kann. Der Automatikbetrieb wird unterbrochen, wenn auf Sicherheitsbetrieb geschaltet und die Steuereinheit 46 von der Schaltvorrichtung 45 ein Betriebsartenänderungssignal erhält.

Die Schaltvorrichtung(en) 45 kann ein nicht näher dargestelltes Ausgabemittel umfassen, an welcher eine Zugangsmeldung für den gefahrenlosen Zugang der Bedienperson 41 in den Wartungsgang 4a, 4b, 4c, insbesondere optisch oder akustisch signalisiert wird. Hierzu wird von der Steuereinheit 46 ein Freigabesignal erzeugt, welches die Ausgabe der Zugangsmeldung bewirkt.

Die Schaltvorrichtung(en) 45 kann ein nicht näher dargestelltes Befehlseingabemittel umfassen, an welchem ein Betriebsartenänderungssignal(befehl) eingegeben werden kann, wenn der Sicherheitsbetrieb wieder in den Automatikbetrieb geschaltet werden soll. Dies ist erst möglich, wenn sich die Bedienperson 41 vollständig aus dem Wartungsgang 4a, 4b, 4c herausbewegt hat und die Zugangstür 42 wieder geschlossen ist.

Die Schaltvorrichtung(en) 45 kann eine nicht näher dargestellte Schlüsselaufnahme umfassen. Die Schlüsselaufnahme weist zwei Stellungen auf, eine Automatikbetriebsstellung und eine Sicherheitsbetriebsstellung. In der Automatikbetriebsstellung muss der Zugangsschlüssel in der Schlüsselaufnahme sein und kann nicht entfernt werden. Um in die Sicherheitsbetriebsstellung zu gelangen, wird der Zugangsschlüssel zum Beispiel um seine Längsachse gedreht. Sobald der Zugangsschlüssel in der Sicherheitsbetriebsstellung ist, kann er abgezogen werden, das heißt von der Schaltvorrichtung 24, 25, 26 getrennt und entfernt werden.

Außerdem kann die Schaltvorrichtung(en) 45 mit einem nicht näher dargestellten Notaus-Eingabemittel zur Eingabe eines Notaus-Signals ausgestattet werden.

Der optionale Personenzugang 40a, 40b, 40b kann auch eine elektromechanische Schließeinheit 47 zum Verriegeln und Entriegeln der Zugangstür 42 umfassen. Die Schließeinheit 47 umfasst einen Stellantrieb, beispielweise einen Elektromagnet.

Der Personenzugang 40a, 40b, 40b, insbesondere die Schaltvorrichtung(en) 45 und das Steuerungsverfahren zum sicheren Betreiben eines automatisierten Regallagersystems sind in der WO 2016/033628 A1 beschrieben.

Wie in den Fig. 1a, 2a, 2b ersichtlich, kann das Regallagersystem stirnseitig vor den Lagerregalen 2a, 2b (einer Regalgasseneinheit, sofern (nur) eine Regalgasseneinheit vorgesehen ist, oder jeder Regalgasseneinheit, sofern mehrere Regalgasseneinheiten vorgesehen sind) je Wartungsgang 4a, 4b, 4c angeordnete Horizontalgehwegabschnitte 48 (Bühnen) und Vertikalgehwegabschnitte 49 (Treppen) umfassen, wobei die Vertikalgehwegabschnitte 49 (Treppen) die Horizontalgehwegabschnitte 48 (Bühnen) verbinden. Die Horizontalgehwegabschnitte 48 und Vertikalgehwegabschnitte 49 bilden eine Auf- und/oder Abstiegseinheit, welche stirnseitig vor den Lagerregalen 2a, 2b angeordnet ist.

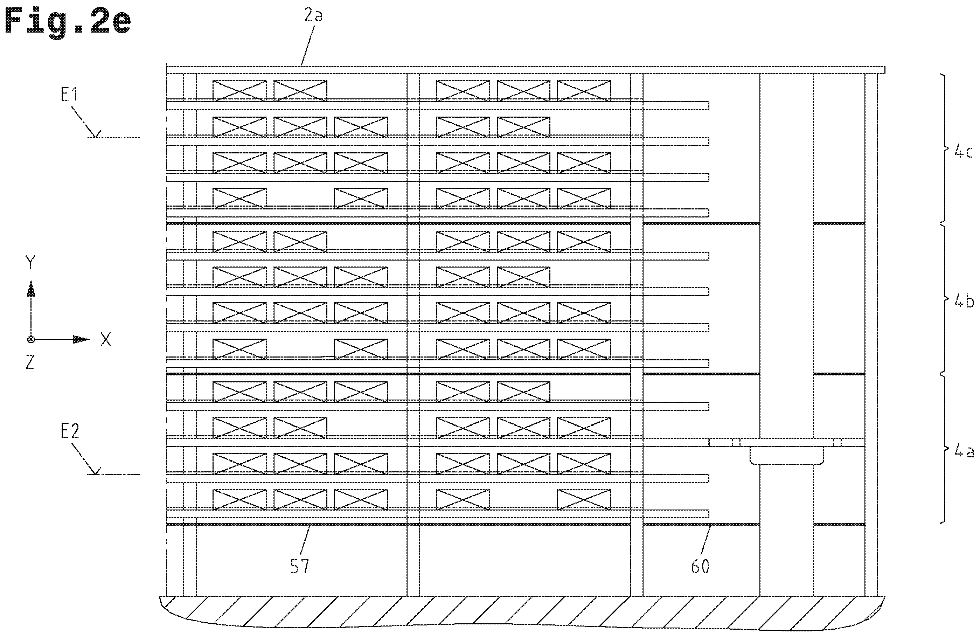

Wie in den Fig. 1d, 2e ersichtlich, kann das Regallagersystem, insbesondere die Regalgasseneinheit, sofern (nur) eine Regalgasseneinheit vorgesehen ist, oder jede Regalgasseneinheit, sofern mehrere Regalgasseneinheiten vorgesehen sind, optional eine Transportfahrzeug-Hebevorrichtung 55 umfassen, durch welche das eine oder die mehreren Transportfahrzeuge 6 zwischen übereinander liegenden Fahrebenen E2 transportierbar sind. Eine solche Transportfahrzeug-Hebevorrichtung wird vorwiegend eingesetzt, wenn je Regalgasse 3 weniger Transportfahrzeuge 6 als Fahrebenen E2 vorhanden sind. Insbesondere weist die Transportfahrzeug-Hebevorrichtung eine vertikal verstellbare Aufnahmevorrichtung 56 auf, auf welcher ein Transportfahrzeug 6 aufgenommen und zwischen den Fahrebenen (vertikal) transportiert werden kann. Wie in den Figuren eingetragen, kann zu Wartungszwecken an der Transportfahrzeug-Hebevorrichtung 55 in übereinander angeordneten Wartungsebenen jeweils ein Gehsteg 60 angeordnet werden, welcher über eine nicht dargestellte Auf- und/oder Abstiegseinheit, beispielweise einer Leiter, erreichbar sind.

Eine vorteilhafte Ausgestaltung einer solchen Transportfahrzeug-Hebevorrichtung ist beispielsweise in der WO 2021/108827 A1 beschrieben.

Wie insbesondere in den Fig. 1a bis 1d und Fig. 2a bis 2e ersichtlich, verlaufen die Wartungsgänge 4a, 4b, 4c in Längsrichtung der Regalgasse 3 und sind zwischen den Lagerregalen 2a, 2b ausgebildet.

Die Wartungsgänge 4a, 4b, 4c umfassen in übereinander liegenden Wartungsebenen E3 angeordnete Gehstege 57, die von der Bedienperson 41 begehbar sind. Insbesondere umfassen sämtliche Wartungsgänge 4a, 4b, 4c jeweils einen Gehsteg 57. Denkbar wäre aber auch, dass einer der Wartungsgänge 4a, 4b, 4c, insbesondere ein Wartungsgang in einer untersten Wartungsebenen E3 keinen Gehsteg 57 umfasst. In diesem Wartungsgang kann sich die Bedienperson 41 auf dem Boden bewegen, auf welchem das Regallagersystem angeordnet ist. Mit anderen Worten können auch nur einige der Wartungsgänge 4a, 4b, 4c in übereinander liegenden Wartungsebenen E3 angeordnete begehbare Gehstege 57 umfassen.

In Fig. 3 ist eine Ausschnitt aus dem Regallagersystem gezeigt, welches in übereinander liegenden Wartungsebenen E3 am (nicht dargestellten) ersten Lagerregal 2a vorgesehene (nicht dargestellte) erste Montagetraversen 58a und am zweiten Lagerregal 2b vorgesehene Montagetraversen 58b aufweisen, auf welchen die Gehstege 57 befestigt sind. Dadurch können Wartungsarbeiten je Wartungsgang 4a, 4b, 4c durchgeführt werden.

Sofern die Auf- und/oder Abstiegseinheit 108 und die Personendurchgänge 109a, 109b, 109c für einen Zugang einer Bedienperson 41 zu einem Wartungsgang 4a, 4b, 4c herangezogen wird, kann das Regallagersystem, insbesondere die Regalgasseneinheit, sofern (nur) eine Regalgasseneinheit vorgesehen ist, oder jede Regalgasseneinheit, sofern mehrere Regalgasseneinheiten vorgesehen sind, optional eine Schaltvorrichtung 85 aufweisen, wie ausschließlich in Fig. 1d eingetragen. Die Schaltvorrichtung 85 ist beispielsweise durch eine mobile Computereinheit oder durch eine stationäre Bedieneinheit gebildet. Mittels der Schaltvorrichtung 85 kann zwischen einem Automatikbetrieb und einem Sicherheitsbetrieb für das eine Transportfahrzeug 6 oder die mehreren Transportfahrzeuge 6 (einer Regalgasseneinheit) gewechselt werden. Eine Schaltvorrichtung 85 kann mehreren Wartungsgängen 4a, 4b, 4c zugeordnet werden.

Die Schaltvorrichtung 85 ist mit einer Steuereinheit 46 verbunden.

Das Regallagersystem umfasst eine zentrale Steuereinheit 46, die ihrerseits mit der elektronischen Steuerung 29 des Transportfahrzeuges 6 und mit der Schaltvorrichtung 85 verbunden ist.

Der Automatikbetrieb wechselt in den Sicherheitsbetrieb für das eine Transportfahrzeug 6 oder die mehreren Transportfahrzeuge 6 und/oder die optionale Ladegut-Manipulationseinheit und/oder die optionale Transportfahrzeug-Hebevorrichtung, wenn an einer Schaltvorrichtung 85 ein Zugang durch eine Bedienperson 41 in einen der Wartungsgänge 4a, 4b, 4c angemeldet wird und die Bedienperson 41 über einen Personendurchgang 109a, 109b, 109c in einen der Wartungsgänge 4a, 4b, 4c eintreten möchte.

Im Automatikbetrieb wird das eine Transportfahrzeug 6 oder die mehreren Transportfahrzeuge 6 durch die zentrale Steuereinheit 46 derart angesteuert, dass das Transportfahrzeug 6 entlang der Regalgasse 3 zu den Regalplätzen 15 verfährt und die (einzulagernde) Ladegüter 16 auf die Regalplätze 15 transferiert bzw. (auszulagernde) Ladegüter 16 von den Regalplätzen (15) transferiert.

Im Sicherheitsbetrieb wird das eine Transportfahrzeug 6 oder die mehreren Transportfahrzeuge 6 durch die zentrale Steuereinheit 46 derart angesteuert, dass das Transportfahrzeug 6 in eine vordefinierte Halteposition (entfernt von einem Personendurchgang 109a, 109b, 109c) verfährt und/oder in einen für eine Bedienperson 41 gefahrenlosen und/oder bewegungslosen Ruhezustand solange versetzt wird, bis die elektronische Steuerung 29 ein Freischaltsignal von der zentralen Steuereinheit 46 erhält und das eine Transportfahrzeug 6 wieder in den Automatikbetrieb umgeschaltet wird oder die mehreren Transportfahrzeuge 6 wieder in den Automatikbetrieb umgeschaltet werden.

Die Schaltvorrichtung 85 kann ein nicht näher dargestelltes Schaltmittel (Betriebsartenwahlschalter) umfassen, mittels welchem zwischen einem Automatikbetrieb und einem Sicherheitsbetrieb für das eine oder die mehreren Transportfahrzeuge 6 und/oder die Ladegut-Manipulationseinheit und/oder eine Transportfahrzeug-Hebevorrichtung einer Regalgasseneinheit umgeschaltet werden kann. Der Automatikbetrieb wird unterbrochen, wenn auf Sicherheitsbetrieb geschaltet und die Steuereinheit 46 von der Schaltvorrichtung 85 ein Betriebsartenänderungssignal erhält.

Die Schaltvorrichtung 85 kann ein nicht näher dargestelltes Ausgabemittel umfassen, an welcher eine Zugangsmeldung für den gefahrenlosen Zugang der Bedienperson 41 in den Wartungsgang 4a, 4b, 4c, insbesondere optisch oder akustisch signalisiert wird. Hierzu wird von der Steuereinheit 46 ein Freigabesignal erzeugt, welches die Ausgabe der Zugangsmeldung bewirkt.

Die Schaltvorrichtung 85 kann ein nicht näher dargestelltes Befehlseingabemittel umfassen, an welchem ein Betriebsartenänderungssignal(befehl) eingegeben werden kann, wenn der Sicherheitsbetrieb wieder in den Automatikbetrieb geschaltet werden soll. Dies ist erst möglich, wenn sich die Bedienperson 41 vollständig aus dem Wartungsgang 4a, 4b, 4c herausbewegt hat und eine Klapptür wieder geschlossen ist.

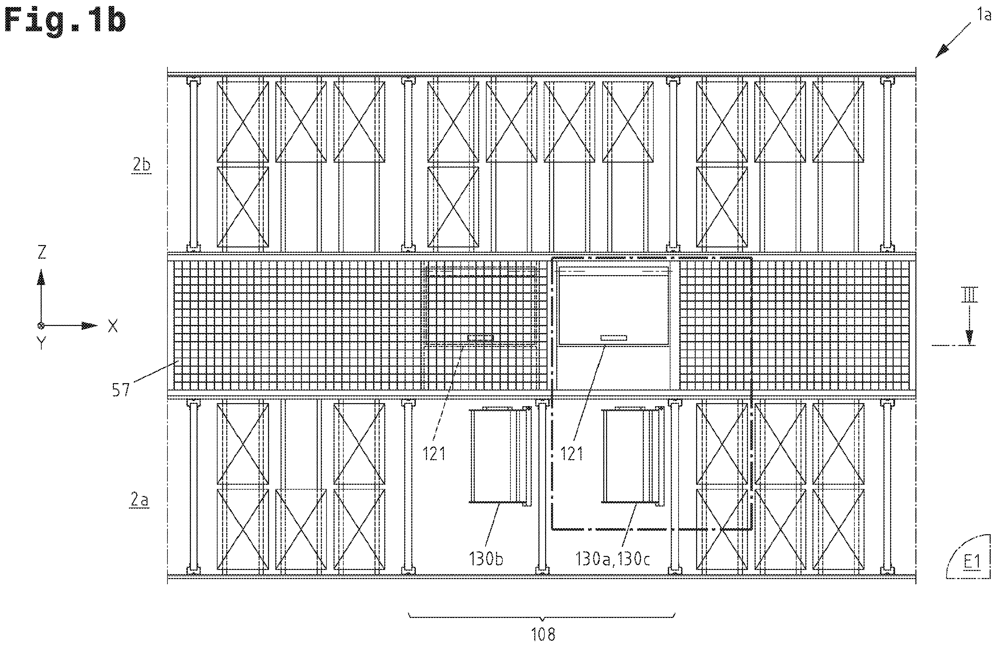

Wie insbesondere in den Fig. 1b, 1c, 2c, 2d, 4a und 4b ersichtlich, ist dem Wartungsgang 4a ein Personendurchgang 109a, dem Wartungsgang 4b ein Personendurchgang 109b und dem Wartungsgang 4c ein Personendurchgang 109c zugeordnet. Insbesondere ist ein Personendurchgang 109b zwischen den übereinander angeordneten Wartungsgängen 4a, 4b und ein Personendurchgang 109c zwischen den übereinander angeordneten Wartungsgängen 4b, 4c angeordnet.

Wie in den Fig. 1a, 1d eingetragen, bildet eines der ersten und zweiten Lagerregale 2a, 2b, im gezeigten Ausführungsbeispiel das erste Lagerregal 2a, in einer Längsrichtung (X) einander gegenüberliegende Stirnseiten 12a, 12b aus. Die Personendurchgänge 109a, 109b, 109c sind in einem der ersten und zweiten Lagerregale 2a, 2b, im gezeigten Ausführungsbeispiel das erste Lagerregal 2a, zwischen den einander gegenüberliegenden Stirnseiten 12a, 12b angeordnet. Ebenso ist die Auf- und/oder Abstiegseinheit 108 zwischen den einander gegenüberliegenden Stirnseiten 12a, 12b angeordnet.

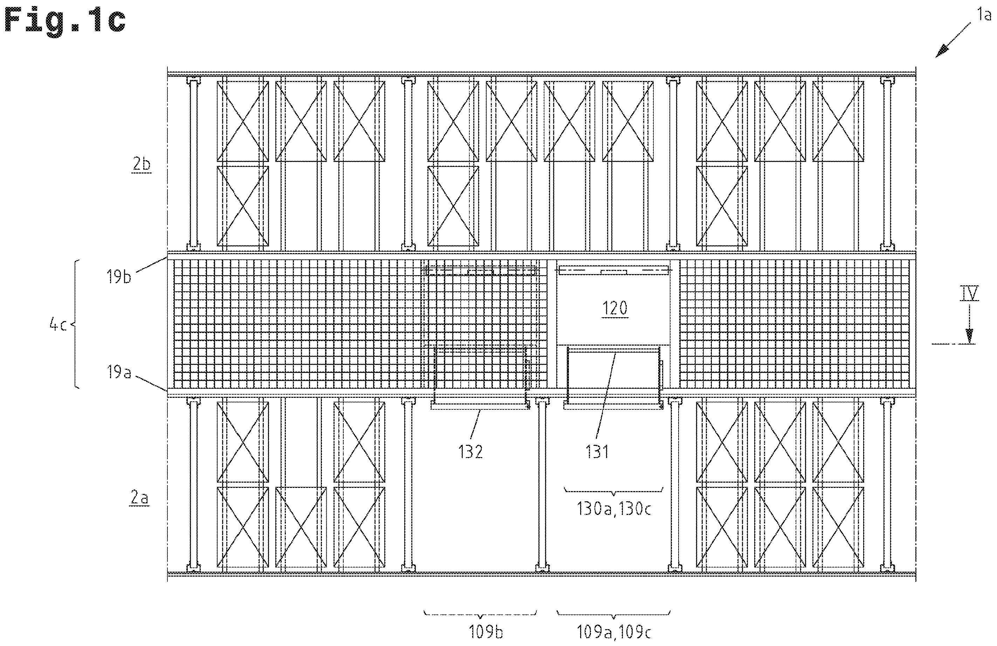

Ein Personendurchgang 109a, 109b, 109c umfasst einen Durchgang 120 und eine dem Durchgang 120 zugeordnete Klapptür 121. Der Durchgang 120 liegt in einer sich in der Längsrichtung (X) und einer Horizontalrichtung (Z) aufspannenden Ebene und ist im Gehsteg 57 als Öffnung angeordnet. Die Öffnung ist derart dimensioniert, dass die Bedienperson 41 durch die Öffnung hindurch aufsteigen bzw. absteigen kann. Die Klapptür 121 ist zwischen einer Schließstellung (wie in Fig. 1b dargestellt), in welcher einer Bedienperson 41 ein Zugang in einen oberhalb oder unterhalb angeordneten Wartungsgang 4a, 4b, 4c verhindert ist, und einer Öffnungsstellung (wie in Fig. 1c dargestellt), in welcher einer Bedienperson 41 ein Zugang von einem Wartungsgang 4a, 4b, 4c in einen oberhalb oder unterhalb angeordneten Wartungsgang 4a, 4b, 4c ermöglicht ist, bewegbar.

Ein Personendurchgang 109a, 109b, 109c kann optional einen oder mehrere Sensoren 122a, 122b umfassen, durch welche(n) die Klapptür 121 in der Öffnungsstellung und/oder in der Schließstellung überwachbar ist und durch welche(n) ein Zustandssignal in der Öffnungsstellung und/oder in der Schließstellung (an die Steuereinheit 46) abgebbar ist.

Der Sensor 122a, 122b ist mit der zentralen Steuereinheit 46 verbunden, die ihrerseits das eine Transportfahrzeug 6 oder die mehreren Transportfahrzeuge 6 ansteuert, wenn die Klapptür 121 in die Öffnungsstellung und/oder in die Schließstellung bewegt und ein Zustandssignal abgegeben wurde.

Ein Personendurchgang 109a, 109b, 109c kann optional eine Verriegelungsvorrichtung umfassen, durch welche die Klapptür 121 in der Öffnungsstellung und/oder in der Schließstellung arretierbar ist. Die Verriegelungsvorrichtung kann ein durch einen Stellantrieb 123 manuell oder elektromechanisch betätigbares Verriegelungselement 124a umfassen, welches mit einem weiteren Verriegelungselement 124b zusammenwirken kann. Das Verriegelungselement 124a ist beispielweise an der Klapptür 121 angeordnet. Das weitere Verriegelungselement 124b ist beispielweise im Bereich des Gehsteges 57 angeordnet.

Wie bereits oben erwähnt, umfasst das Regallagersystem, insbesondere die Regalgasseneinheit, sofern (nur) eine Regalgasseneinheit vorgesehen ist, oder jede Regalgasseneinheit, sofern mehrere Regalgasseneinheiten vorgesehen sind, eine in einem der ersten und zweiten Lagerregale 2a, 2b vorgesehene Auf- und/oder Abstiegseinheit 108. Nach gezeigter Ausführung ist die Auf- und/oder Abstiegseinheit 108 im ersten Lagerregal 2a angeordnet.

Auch wenn dies nicht dargestellt ist, kann die Auf- und/oder Abstiegseinheit 108 nach einer ersten Ausführung eine einzige der nachfolgend beschriebenen Auf- und/oder Abstiegsvorrichtung aufweisen. Die Auf- und/oder Abstiegsvorrichtung ist nach dieser Ausführung mehreren Personendurchgängen 109a, 109b, 109c zugeordnet, welche demnach fluchtend übereinander angeordnet sind.

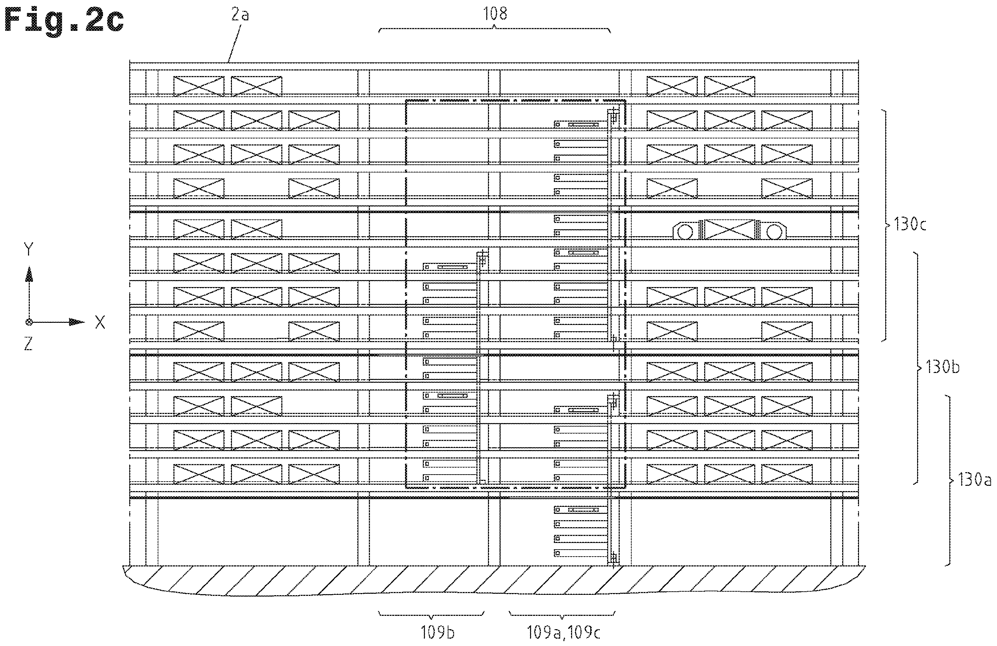

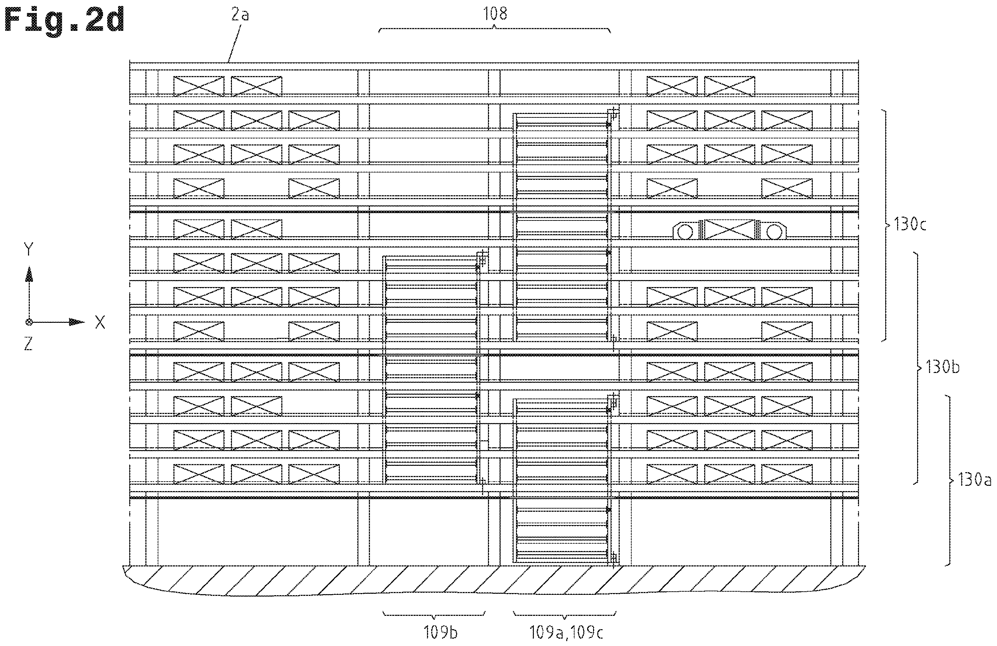

Die Auf- und/oder Abstiegsvorrichtung umfasst ein Trittstufensegment 131, welches relativ gegenüber dem einen der ersten und zweiten Lagerregale 2a, 2b zwischen einer ersten Gebrauchsstellung (wie in Fig. 1b, 2c dargestellt) und einer zweiten Gebrauchsstellung (wie in Fig. 1c, 2d dargestellt) bewegbar ist. In der ersten Gebrauchsstellung befindet sich das Trittstufensegment 131 im Wesentlichen in einem der ersten und zweiten Lagerregale 2a, 2b. In der zweiten Gebrauchsstellung ragt das Trittstufensegment 131 zumindest teilweise in zumindest einen der Wartungsgänge 4a, 4b, 4c hinein.

Wie in den Figuren ersichtlich, kann nach einer zweiten Ausführung die Auf- und/oder Abstiegseinheit 108 mehrere und unabhängig voneinander bedienbare Auf- und/oder Abstiegsvorrichtungen 130a, 130b, 130c umfassen. Jede Auf- und/oder Abstiegsvorrichtung 130a, 130b, 130c umfasst ein Trittstufensegment 131, welches relativ gegenüber dem einen der ersten und zweiten Lagerregale 2a, 2b zwischen einer ersten Gebrauchsstellung (wie in Fig. 1b, 2c dargestellt) und einer zweiten Gebrauchsstellung (wie in Fig. 1c, 2d dargestellt) bewegbar ist. In der ersten Gebrauchsstellung befindet sich das Trittstufensegment 131 im Wesentlichen in einem der ersten und zweiten Lagerregale 2a, 2b. In der zweiten Gebrauchsstellung ragt das Trittstufensegment 131 zumindest teilweise in zumindest einen der Wartungsgänge 4a, 4b, 4c hinein.

Einer Auf- und/oder Abstiegsvorrichtung 130a, 130b, 130c ist ein Personendurchgang 109a, 109b, 109c zugeordnet.

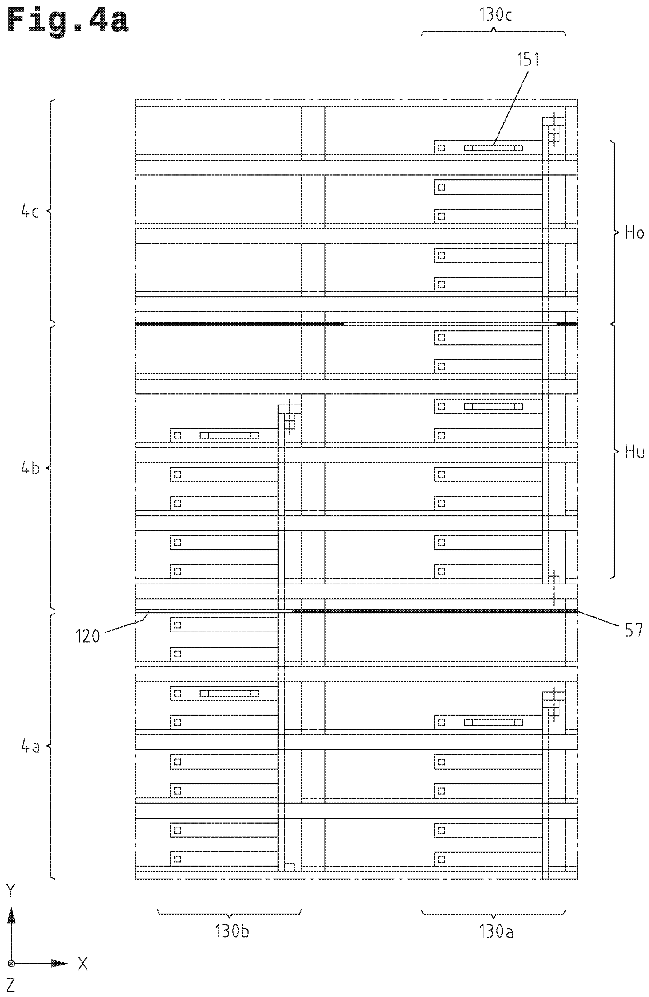

Wie in Fig. 4a anhand der Auf- und/oder Abstiegsvorrichtung 130c gezeigt, ist eine Auf- und/oder Abstiegsvorrichtung 130a, 130b, 130c in Höhenabschnitte (Hu, Ho) unterteilt. Ein unterer Höhenabschnitt (Hu) ist einem unteren Wartungsgang 4b unterhalb eines jeweiligen Gehsteges 57 und ein oberer Höhenabschnitt (Ho) einem oberen Wartungsgang 4c oberhalb des jeweiligen Gehsteges 57 zugeordnet.

Die Personendurchgänge 109a, 109b, 109c, insbesondere die Durchgänge 120, sind in der Längsrichtung (X) der Regalgasse 3 zueinander um einen Längsabstand versetzt angeordnet. Insbesondere sind die Personendurchgänge 109a, 109b, 109c bzw. die Durchgänge 120 in der Längsrichtung (X) der Regalgasse 3 zueinander um einen Längsabstand alternierend versetzt gegenüber einer Hochachse angeordnet.

Die Auf- und/oder Abstiegsvorrichtungen 130a, 130b, 130c sind in der Längsrichtung (X) der Regalgasse 3 zueinander um einen Längsabstand versetzt. Insbesondere sind die Auf- und/oder Abstiegsvorrichtungen 130a, 130b. 130c in der Längsrichtung (X) der Regalgasse 3 zueinander um einen Längsabstand alternierend versetzt gegenüber einer Hochachse angeordnet.

Wie in Fig. 1c anhand der Auf- und/oder Abstiegsvorrichtung 130c dargestellt, ist eine Auf- und/oder Abstiegsvorrichtung 130a, 130b, 130c im Bereich des Personendurchganges 109a, 109b, 109c derart angeordnet ist, dass in der zweiten Gebrauchsstellung das Trittstufensegment 131 einer Auf- und/oder Abstiegsvorrichtung 130a, 130b, 130c an den Durchgang 120 angrenzt, sodass sich eine (nicht eingetragene) Bedienperson 41 über die Auf- und/oder Abstiegsvorrichtung 130a, 130b, 130c durch den Durchgang 120 bewegen kann.

Insbesondere kann eine oben beschriebene Auf- und/oder Abstiegsvorrichtung nach der ersten Ausführung und/oder zweiten Ausführung das Trittstufensegment 131 und einen Tragrahmen 132 aufweisen, an welchem Trittstufen 133 in äquidistanten Abständen übereinander und zueinander parallel angeordnet sind. Die Trittstufen 131 können einseitig am Tragrahmen 132 frei vorkragen. Die Trittstufen 131 bilden jeweils an einem vorkragenden Ende eine Trittfläche aus und sind jeweils an einem gegenüberliegenden Ende mit dem Tragrahmen 132 verbunden.

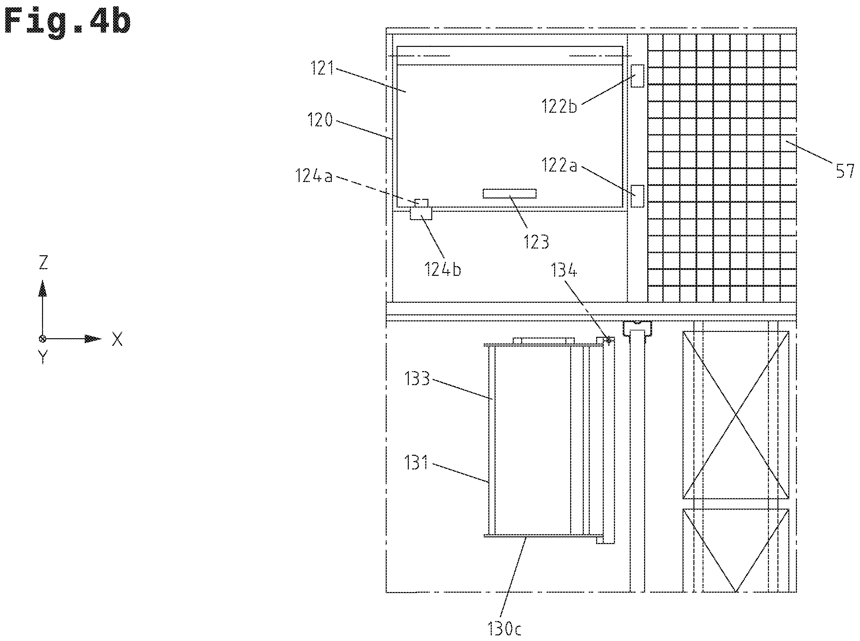

Insbesondere kann eine oben beschriebene Auf- und/oder Abstiegsvorrichtung nach der ersten Ausführung und/oder zweiten Ausführung mit dem Tragrahmen 132 über eine (nicht gezeigte) Linearführung oder eine (schematisch in Fig. 4b angedeutete) Schwenklagerung 134 an einem der ersten und zweiten Lagerregale 2a, 2b angeordnet sein. Der Tragrahmen 132 ist in Horizontalrichtung (Z) verschiebbar oder um eine in Höhenrichtung (Y) verlaufende Schwenkachse schwenkbar.

Wie in den Figuren auch ersichtlich, kann die Auf- und/oder Abstiegsvorrichtung 130a, 130b, 130c am Trittstufensegment 131 einen oder mehrere Griffe 151 umfassen, um der Bedienperson 41 eine ergonomische Bedienung bei einer Bewegung zwischen der ersten Gebrauchsstellung und zweiten Gebrauchsstellung zu ermöglichen.

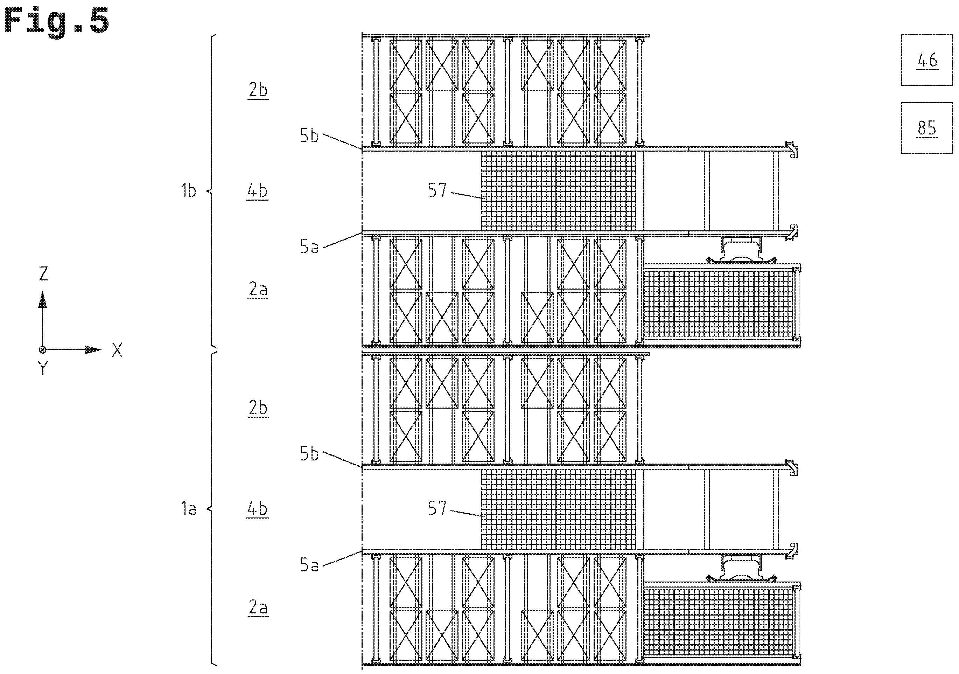

Fig. 5 eine mögliche Ausführung eines erfindungsgemäßen Regallagersystems mit einer ersten Regalgasseneinheit 1a und einer zweiten Regalgasseneinheit 1b gezeigt. Die zweite Regalgasseneinheit 1b ist wie die erste Regalgasseneinheit 1a ausgebildet und wird deshalb auf die obige Offenbarung verwiesen.

Wie in der Figur nicht eingetragen, bildet jeweils eines der ersten und zweiten Lagerregale 2a, 2b der ersten Regalgasseneinheit 1a und zweiten Regalgasseneinheit 1b, im gezeigten Ausführungsbeispiel das erste Lagerregal 2a, in einer Längsrichtung (X) einander gegenüberliegende Stirnseiten 12a, 12b aus. Die Personendurchgänge 109a, 109b, 109c der ersten Regalgasseneinheit 1a und zweiten Regalgasseneinheit 1b sind jeweils wiederum in einem der ersten und zweiten Lagerregale 2a, 2b, im gezeigten Ausführungsbeispiel das erste Lagerregal 2a, zwischen den einander gegenüberliegenden Stirnseiten 12a, 12b angeordnet. Ebenso sind die Auf- und/oder Abstiegseinheit 108 der ersten Regalgasseneinheit 1a und zweiten Regalgasseneinheit 1b jeweils wiederum zwischen den einander gegenüberliegenden Stirnseiten 12a, 12b angeordnet.

In den Fig. 6a bis 6e ist eine Ausführung gezeigt, nach welcher unterschiedliche Ausführungen von Aufstiegs- und/oder Abstiegsmöglichkeiten in einem Regallagersystem, insbesondere einer Regalgasseneinheit, kombiniert sind. Das Regallagersystem kann eine einzige Regalgasseneinheit oder mehrere Regalgasseneinheiten umfassen. In den genannten Figuren ist eine erste Regalgasseneinheit 1a gezeigt.

Das Regallagersystem, insbesondere die Regalgasseneinheit, sofern (nur) eine Regalgasseneinheit vorgesehen ist, oder jede Regalgasseneinheit, sofern mehrere Regalgasseneinheiten vorgesehen sind, umfasst ein erstes Lagerregal 2a, ein zweites Lagerregal 2b, eine Regalgasse 3, Wartungsgänge 4a, 4b, 4c, Führungsbahnen 5a, 5b und ein oder mehrere automatisiert betriebene Transportfahrzeuge 6. Das automatisiert betriebene Transportfahrzeug 6 ist beispielweise ein Einebenenregalbediengerät. Um Wiederholungen zu vermeiden, wird in diesem Zusammenhang auf die obige Offenbarung verwiesen.

Zusätzlich umfasst das Regallagersystem, insbesondere die Regalgasseneinheit, sofern (nur) eine Regalgasseneinheit vorgesehen ist, oder jede Regalgasseneinheit, sofern mehrere Regalgasseneinheiten vorgesehen sind, einen Vertikalgang 7, eine Auf- und/oder Abstiegseinheit 108 und verschieden ausgebildete Personendurchgänge 9a, 109a, 109b. Der Personendurchgang 9a, im Nachfolgenden weiterer Personendurchgang 9a genannt, ist dem Wartungsgang 4a zugeordnet. Der Personendurchgang 109a ist den Wartungsgängen 4a, 4b und der Personendurchgang 109b ist den Wartungsgängen 4b, 4c zugeordnet.

Wie in diesen Figuren nicht ersichtlich, kann das Regallagersystem, insbesondere die Regalgasseneinheit, sofern (nur) eine Regalgasseneinheit vorgesehen ist, oder jede Regalgasseneinheit, sofern mehrere Regalgasseneinheiten vorgesehen sind, optional eine Ladegut-Manipulationseinheit und eine Fördertechnik zum Transport von Ladegütern 16 umfassen. Das Regallagersystem insbesondere die Regalgasseneinheit, sofern (nur) eine Regalgasseneinheit vorgesehen ist, oder jede Regalgasseneinheit, sofern mehrere Regalgasseneinheiten vorgesehen sind, kann optional einen Personenzugang je Wartungsgang 4a, 4b, 4c zum Zugang in den betreffenden Wartungsgang 4a, 4b, 4c von einer Stirnseite der Regalgasse 3 umfassen. Das Regallagersystem, insbesondere die Regalgasseneinheit, sofern (nur) eine Regalgasseneinheit vorgesehen ist, oder jede Regalgasseneinheit, sofern mehrere Regalgasseneinheiten vorgesehen sind, kann optional eine Transportfahrzeug-Hebevorrichtung umfassen, durch welche das eine oder die mehreren Transportfahrzeuge 6 zwischen übereinander liegenden Fahrebenen E2 transportierbar sind. Um Wiederholungen zu vermeiden, wird in diesem Zusammenhang auf die obige Offenbarung verwiesen.

Wie in den Figuren ersichtlich, umfasst das Regallagersystem, insbesondere die Regalgasseneinheit, sofern (nur) eine Regalgasseneinheit vorgesehen ist, oder jede Regalgasseneinheit, sofern mehrere Regalgasseneinheiten vorgesehen sind, einen Personendurchgang 109a, welcher übereinander angeordneten Wartungsgängen 4a, 4b zugeordnet und an einem begehbaren (unteren) Gehsteg 57 vorgesehen ist, und einen Personendurchgang 109b, welcher übereinander angeordneten Wartungsgängen 4b, 4c zugeordnet und an einem begehbaren (oberen) Gehsteg 57 vorgesehen ist. Jeder Personendurchgang 109a, 109b umfasst einen Durchgang 120, welcher in einer sich in der Längsrichtung (X) und einer Horizontalrichtung (Z) aufspannenden Ebene liegt. Jeder Personendurchgang 109a, 109b umfasst eine dem Durchgang 120 zugeordnete Klapptür 121, welche zwischen einer Öffnungsstellung, in welcher einer Bedienperson ein Zugang von einem Wartungsgang 4a, 4b, 4c in einen oberhalb oder unterhalb angeordneten Wartungsgang 4a, 4b, 4c ermöglicht ist, und einer Schließstellung, in welcher einer Bedienperson ein Zugang in einen oberhalb oder unterhalb angeordneten Wartungsgang 4a, 4b, 4c verhindert ist, bewegbar ist. Die Personendurchgänge 109a, 109b sind oben ausführlich beschrieben und wird deshalb an dieser Stelle auf obige Offenbarung Bezug genommen.

Zusätzlich umfasst das Regallagersystem, insbesondere die Regalgasseneinheit, sofern (nur) eine Regalgasseneinheit vorgesehen ist, oder jede Regalgasseneinheit, sofern mehrere Regalgasseneinheiten vorgesehen sind, eine dem Personendurchgang 109a, 109b zugeordnete und in einem der ersten und zweiten Lagerregale 2a, 2b vorgesehene Auf- und/oder Abstiegseinheit 108.

Die Auf- und/oder Abstiegseinheit 108, wie oben ausführlich beschrieben, umfasst nach gezeigter Ausführung mehrere und unabhängig voneinander bedienbare Auf- und/oder Abstiegsvorrichtungen 130a, 130b. Jede Auf- und/oder Abstiegsvorrichtung 130a, 130b umfasst ein Trittstufensegment 131.

Wie in den Fig. 6a auch ersichtlich, umfasst das Regallagersystem, insbesondere die Regalgasseneinheit, sofern (nur) eine Regalgasseneinheit vorgesehen ist, oder jede Regalgasseneinheit, sofern mehrere Regalgasseneinheiten vorgesehen sind, einen Vertikalgang 7, welcher in einem der ersten und zweiten Lagerregale 2a, 2b verläuft oder einem der ersten und zweiten Lagerregale 2a, 2b zugeordnet ist, und den weiteren Personendurchgang 9a, welcher in einem der ersten und zweiten Lagerregale 2a, 2b vorgesehen ist, in welchem auch der Vertikalgang 7 verläuft oder welchem der Vertikalgang 7 zugeordnet ist. Über den weiteren Personendurchgang 9a ist ein Verbindungsweg zwischen dem Vertikalgang 7 und einem der Wartungsgänge 4a bereitgestellt.

Der weitere Personendurchgang 9a umfasst einen Durchgang 140, welcher in einer sich in der Längsrichtung (X) und einer Höhenrichtung (Y) aufspannenden Ebene liegt.

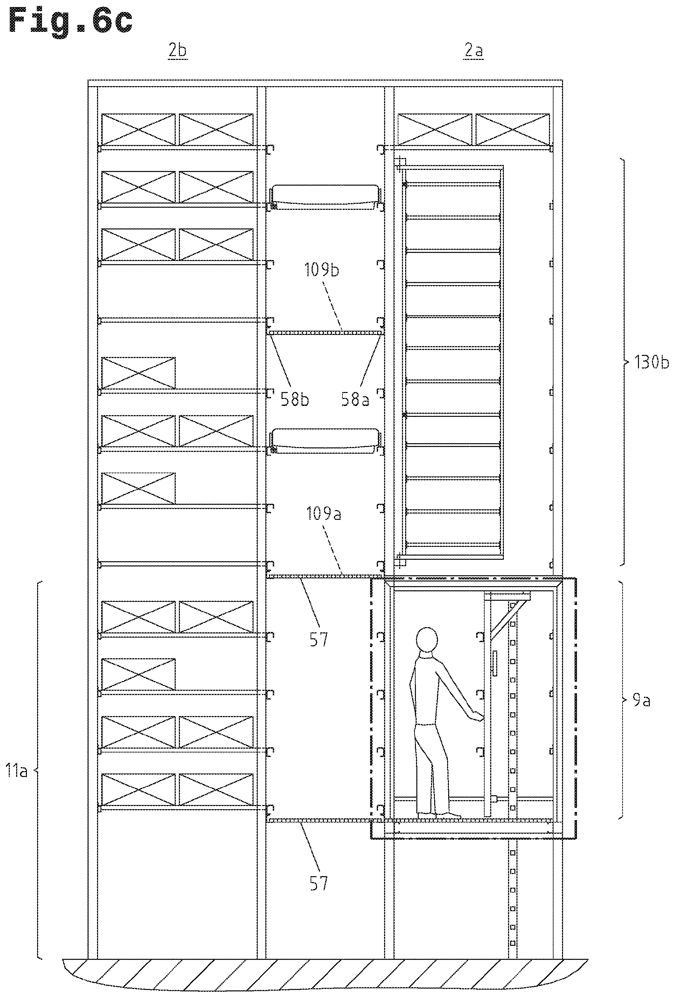

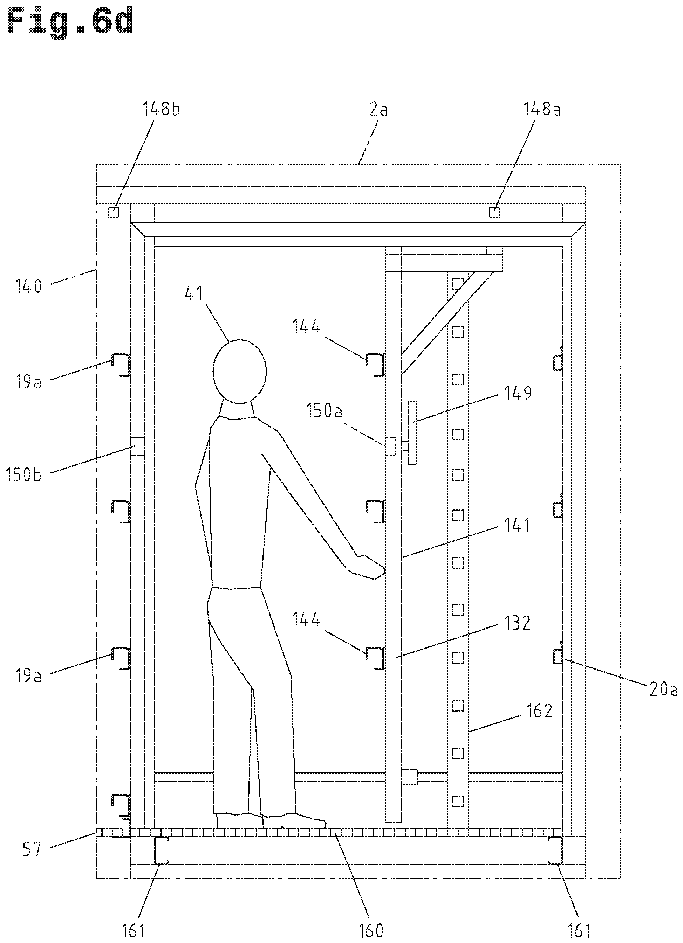

Insbesondere umfasst der weitere Personendurchgang 9a und dem Durchgang 140 zugeordnet eine Zugangstür 141, welche zwischen einer Öffnungsstellung, in welcher einer Bedienperson 41 (Fig. 6c) ein Zugang in den Wartungsgang 4a und/oder ein Verlassen aus dem Wartungsgang 4a ermöglicht ist, und einer Schließstellung, in welcher einer Bedienperson 41 ein Zugang in den Wartungsgang 4a und/oder ein Verlassen aus dem Wartungsgang 4a verhindert ist, bewegbar ist. Fig. 6a zeigt eine Schließstellung der Zugangstür 141 und Fig. 6c, 6d eine Öffnungsstellung der Zugangstür 141. Ein weiterer Personendurchgang 9a kann in der Öffnungsstellung der Zugangstür 141 durchquert werden, sodass eine Bedienperson 41 ungehindert entlang dem Verbindungsweg zwischen dem Vertikalgang 7 und dem Wartungsgang 4a gehen kann. Hingegen kann ein weiterer Personendurchgang 9a in der Schließstellung der Zugangstür 141 nicht durchquert werden, sodass eine Bedienperson 41 nicht ungehindert entlang dem Verbindungsweg zwischen dem Vertikalgang 7 und dem Wartungsgang 4a gehen kann.

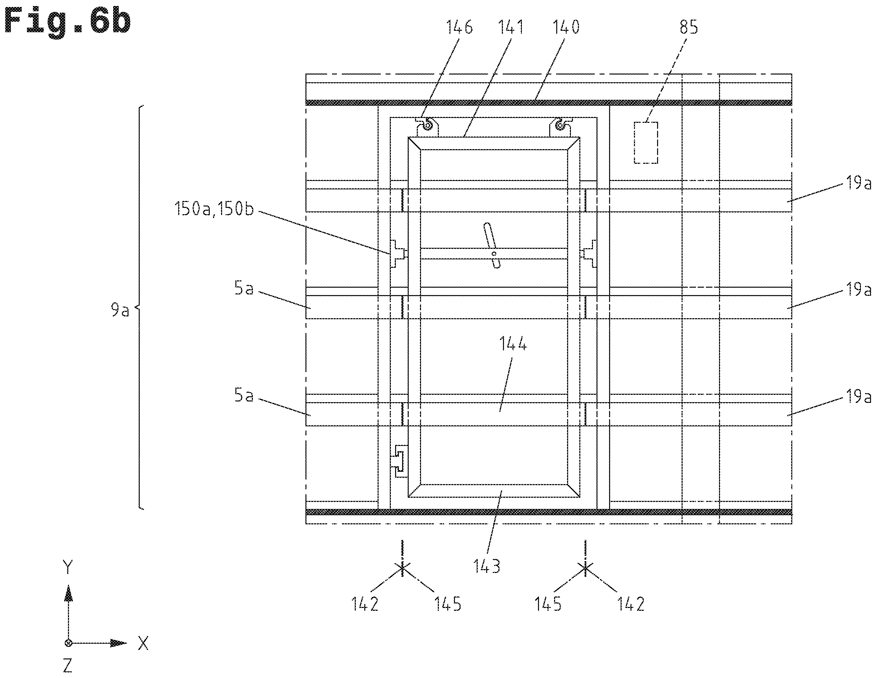

Wie in Fig. 6b gezeigt, bilden jene vorderen Längstraversen 19a, welche den weiteren Personendurchgang 9a in der Längsrichtung (X) queren, im Bereich des Durchgangs 140 einen Durchgangsabschnitt aus. Ferner enden diese vorderen Längstraversen 19a mit ihren Stirnenden 142 am Durchgang 140.

Die Zugangstür 141 umfasst einen Tragrahmen 143, an welchem Längstraversenabschnitte 144 befestigt und derart angeordnet sind, dass in der Schließstellung der Zugangstür 141 die Längstraversenabschnitte 144 in Verlängerung jener vorderen Längstraversen 19a verlaufen, welche den Durchgangsabschnitt ausbilden. Dabei sind die jeweiligen Längstraversenabschnitte 144 mit ihren Stirnenden 145 auf die Stirnenden 142 der jeweiligen vorderen Längstraversen 19a gerichtet, sodass ein im Wesentlichen spaltfreier Übergang zwischen den jeweiligen vorderen Längstraversen 19a und den jeweiligen Längstraversenabschnitten 144 entsteht.

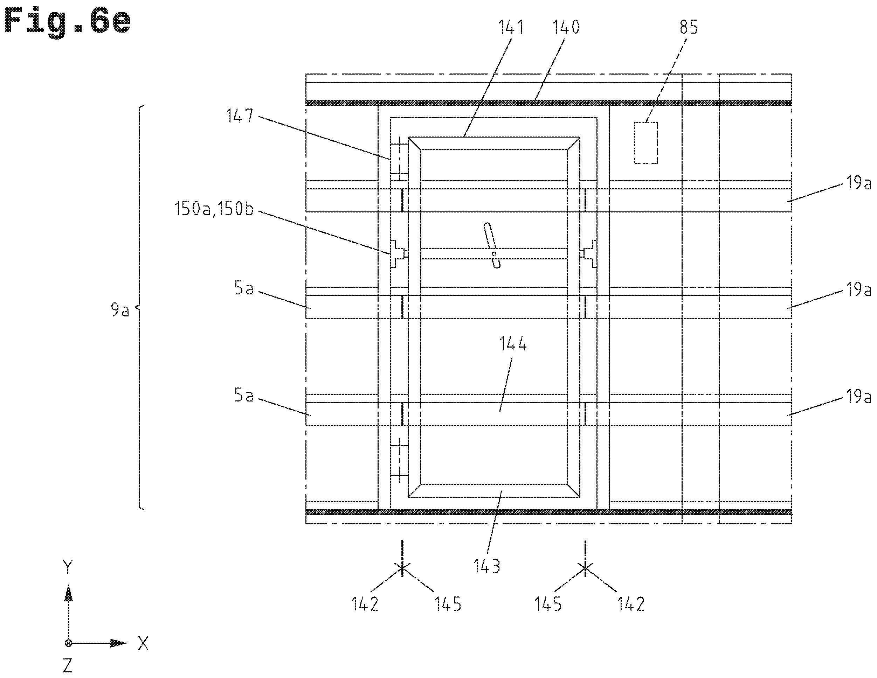

Die Zugangstür 141 ist mit dem Tragrahmen 143 über eine in den Fig. 6b, 6c gezeigte Linearführung 146 oder über eine in der Fig. 6e gezeigte Schwenklagerung 147 an einem der ersten und zweiten Lagerregale 2a, 2b gelagert, in welchem auch der Vertikalgang 7 verläuft, insbesondere nach gezeigter Ausführung das erste Lagerregal 2a.

Der weitere Personendurchgang 9a kann optional einen oder mehrere Sensoren 148a, 148b umfassen, durch welche(n) die Zugangstür 141 in der Öffnungsstellung und/oder in der Schließstellung überwachbar ist und durch welche(n) ein Zustandssignal in der Öffnungsstellung und/oder in der Schließstellung (an die Steuereinheit 46) abgebbar ist.

Der Sensor 148a, 148b ist mit einer zentralen Steuereinheit 46 verbunden, die ihrerseits das eine Transportfahrzeug 6 oder die mehreren Transportfahrzeuge 6 (einer Regalgasseneinheit) ansteuert, wenn die Zugangstür 141 in die Öffnungsstellung und/oder in die Schließstellung bewegt und ein Zustandssignal abgegeben wurde.

Der weitere Personendurchgang 9a kann optional eine Verriegelungsvorrichtung umfassen, durch welche die Zugangstür 141 in der Öffnungsstellung und/oder in der Schließstellung arretierbar ist. Die Verriegelungsvorrichtung kann ein durch einen Stellantrieb 149 manuell oder elektromechanisch betätigbares Verriegelungselement 150a umfassen, welches mit einem weiteren Verriegelungselement 150b zusammenwirken kann. Das Verriegelungselement 150a ist beispielweise im Bereich des Tragrahmens 132 angeordnet. Das weitere Verriegelungselement 150b ist beispielweise im Bereich des Durchganges 140 angeordnet.

Sofern ein weiterer Personendurchgang 9a für einen Zugang einer Bedienperson 41 zu einem Wartungsgang 4a herangezogen wird, kann das Regallagersystem, insbesondere die Regalgasseneinheit, sofern (nur) eine Regalgasseneinheit vorgesehen ist, oder jede Regalgasseneinheit, sofern mehrere Regalgasseneinheiten vorgesehen sind, optional eine Schaltvorrichtung 85 aufweisen. Die Schaltvorrichtung 85 ist beispielsweise durch eine mobile Computereinheit oder durch eine stationäre Bedieneinheit gebildet. Mittels der Schaltvorrichtung 85 kann zwischen einem Automatikbetrieb und einem Sicherheitsbetrieb für das eine Transportfahrzeug 6 oder die mehreren Transportfahrzeuge 6 (einer Regalgasseneinheit) gewechselt werden. Die Schaltvorrichtung 85 kann am weiteren Personendurchgange 9a angeordnet werden, wie in Fig. 6b bzw. Fig. 6e in strichlierte Linien eingetragen. Auf die möglichen Ausführungen der Schaltvorrichtung 85 wird auf die obige Offenbarung verwiesen.

Wie aus den Figuren ersichtlich, ist ein Horizontalgehwegabschnitt 10a der Auf- und/oder Abstiegseinheit 108 auf Höhe des weiteren Personendurchganges 9a vorgesehen und ragt in das erste Lagerregal 2a hinein. Insbesondere umfasst der Horizontalgehwegabschnitt 10a einen Gehsteg 160, beispielweise einen Gitterrost.

Das erste Lagerregal 2a oder zweite Lageregal 2b, in welche auch der Vertikalgang 7 verläuft, insbesondere nach gezeigter Ausführung das erste Lagerregal 2a, können Montagetraversen 161 aufweisen, auf welchen der Gehsteg 160 befestigt ist.

Die Auf- und/oder Abstiegseinheit 108 umfasst einen Vertikalgehwegabschnitt 11a, welcher zum Horizontalgehwegabschnitt 10a führt. Der Vertikalgehwegabschnitt 11a umfasst nach gezeigter Ausführung ein Trittstufensegment 162. Insbesondere ist der Vertikalgehwegabschnitt 11a als eine Leiter ausgebildet. Bevorzugt ist der Vertikalgehwegabschnitt 11a, insbesondere das Trittstufensegment 162 ortsfest angeordnet.

Nach gezeigter Ausführung, ist lediglich dem Wartungsgang 4a zumindest ein weiterer Personendurchgang 9a zugeordnet. Es versteht sich, dass auch einem anderen Wartungsgang 4b, 4c ein weiterer Personendurchgang 9b, 9c zugeordnet sein kann. In diesem Fall kann ein oder mehrere Vertikalgehwegabschnitte an jeweils einen Horizontalgehwegabschnitt anschließen.

Abschließend wird auch festgehalten, dass der Schutzbereich durch die Patentansprüche bestimmt ist.

### Bezugszeichenaufstellung

- 1a: Regalgasseneinheit
- 1b: Regalgasseneinheit
- 2a: erstes Lagerregal
- 2b: zweites Lagerregal
- 3: Regalgasse

- 4a, 4b, 4c: Wartungsgang
- 5a, 5b: Führungsbahn
- 6: Transportfahrzeug
- 7: Vertikalgang
- 9a: weiterer Personendurchgang

- 10a: Horizontalgehwegabschnitt
- 11a: Vertikalgehwegabschnitt
- 12a: erste Stirnseite
- 12b: zweite Stirnseite
- 15: Regalplatz

- 16: Ladegut
- 17a, 17b: vordere Regalsteher
- 18a, 18b: hintere Regalsteher
- 19a, 19b: vordere Längstraverse
- 20a, 20b: hintere Längstraverse

- 21a, 21b: Lagerfläche
- 22: erste Führung
- 23: zweite Führung
- 24: Grundrahmen
- 25: Transfervorrichtung

- 26: Laufrad
- 27: Fahrantrieb
- 28: Transferantrieb
- 29: Steuerung
- 30: Führungsrad
- 35a: erste Ladegut-Transportvorrichtung
- 35b: zweite Ladegut-Transportvorrichtung
- 36a: erste Puffervorrichtung
- 36b: zweite Puffervorrichtung
- 37a: erste Fördervorrichtung

- 37b: zweite Fördervorrichtung
- 38a: erste Bereitstellvorrichtung
- 38b: zweite Bereitstellvorrichtung
- 40a, 40b, 40c: Personenzugang
- 41: Bedienperson

- 42: Zugangstür
- 43: Schutzzaun
- 44: Sensor
- 45: Schaltvorrichtung
- 46: Steuereinheit

- 47: Schließeinheit
- 48: Horizontalgehwegabschnitt

- 49: Vertikalgehwegabschnitt
- 55: Transportfahrzeug-Hebevorrichtung
- 56: Aufnahmevorrichtung
- 57: Gehsteg
- 58a: erste Montagetraverse

- 58b: zweite Montagetraverse
- 60: Gehsteg
- 85: Schaltvorrichtung
- 108: Auf- und/oder Abstiegseinheit
- 109a, 109b, 109c: Personendurchgang

- 120: Durchgang
- 121: Klapptür
- 122a, 122b: Sensor
- 123: Stellantrieb
- 124a, 124b: Verriegelungselement
- 130a, 130b: Auf- und/oder Abstiegsvorrichtung
- 130c: Auf- und/oder Abstiegsvorrichtung
- 131: Trittstufensegment
- 132: Tragrahmen
- 133: Trittstufe

- 134: Schwenklagerung
- 140: Durchgang
- 141: Zugangstür
- 142: Stirnende
- 143: Tragrahmen

- 144: Längstraversenabschnitt
- 145: Stirnende
- 146: Linearführung
- 147: Schwenklagerung
- 148a, 148b: Sensor

- 149: Stellantrieb
- 150a, 150b: Verriegelungselement
- 151: Griff
- 160: Gehsteg
- 161: Montagetraverse

- 162: Trittstufensegment
- E1: Regalebene
- E2: Fahrebene
- E3: Wartungsebene
- Ho: oberer Höhenabschnitt
- Hu: unterer Höhenabschnitt

## Patentansprüche

1. Regallagersystem mit einer ersten Regalgasseneinheit (1a), welche erste Regalgasseneinheit (1a) umfasst
ein erstes Lagerregal (2a), welches in übereinander liegenden Regalebenen (E1) angeordnete Regalplätze (15) für Ladegüter (16) aufweist,
ein zweites Lagerregal (2b), welches in übereinander liegenden Regalebenen (E1) angeordnete Regalplätze (15) für Ladegüter (16) aufweist,
eine Regalgasse (3), die sich zwischen dem ersten Lagerregal (2a) und dem zweiten Lagerregal (2b) in einer Längsrichtung (X) erstreckt,
Wartungsgänge (4a, 4b, 4c), welche in der Regalgasse (3) verlaufen und wovon einige in übereinander liegenden Wartungsebenen (E3) angeordnete begehbare Gehstege (57) umfassen,
Führungsbahnen (5a, 5b), welche in der Längsrichtung (X) verlaufen,
ein oder mehrere automatisiert betriebene Transportfahrzeuge (6), welches Transportfahrzeug (6) in der Regalgasse (3) entlang der Führungsbahnen (5a, 5b) verfahrbar ist und eine Transfervorrichtung (25) zum Transferieren von Ladegütern (16) zwischen einem jeweiligen Regalplatz (16) und dem Transportfahrzeug (6) umfasst,
einen Personendurchgang (109a, 109b, 109c), welcher übereinander angeordneten Wartungsgängen (4a, 4b, 4c) zugeordnet und an einem begehbaren Gehsteg (57) vorgesehen ist, und
eine dem Personendurchgang (109a, 109b, 109c) zugeordnete und in einem der ersten und zweiten Lagerregale (2a, 2b) vorgesehene Auf- und/oder Abstiegseinheit (108) umfassend eine Auf- und/oder Abstiegsvorrichtung (130a, 130b, 130c) mit einem Trittstufensegment (131), welches Trittstufensegment (131) relativ gegenüber dem einen der ersten und zweiten Lagerregale (2a, 2b) zwischen einer ersten Gebrauchsstellung und einer zweiten Gebrauchsstellung bewegbar ist, wobei in der zweiten Gebrauchsstellung das Trittstufensegment (131) zumindest teilweise in zumindest einen der Wartungsgänge (4a, 4b, 4c) vorragt,
**dadurch gekennzeichnet, dass**
sich in der ersten Gebrauchsstellung das Trittstufensegment (131) im Wesentlichen in einem der ersten und zweiten Lagerregale (2a, 2b) befindet.

2. Regallagersystem nach Anspruch 1 mit einer zweiten Regalgasseneinheit (1b), welche zweite Regalgasseneinheit (1b) umfasst
ein erstes Lagerregal (2a), welches in übereinander liegenden Regalebenen (E1) angeordnete Regalplätze (15) für Ladegüter (16) aufweist,
ein zweites Lagerregal (2b), welches in übereinander liegenden Regalebenen (E1) angeordnete Regalplätze (15) für Ladegüter (16) aufweist,
eine Regalgasse (3), die sich zwischen dem ersten Lagerregal (2a) und dem zweiten Lagerregal (2b) in einer Längsrichtung (X) erstreckt,
Wartungsgänge (4a, 4b, 4c), welche in der Regalgasse (3) verlaufen und wovon einige in übereinander liegenden Wartungsebenen (E3) angeordnete begehbare Gehstege (57) umfassen,
Führungsbahnen (5a, 5b), welche in der Längsrichtung (X) verlaufen,
ein oder mehrere automatisiert betriebene Transportfahrzeuge (6), welches Transportfahrzeug (6) in der Regalgasse (3) entlang der Führungsbahnen (5a, 5b) verfahrbar ist und eine Transfervorrichtung (25) zum Transferieren von Ladegütern (16) zwischen einem jeweiligen Regalplatz (16) und dem Transportfahrzeug (6) umfasst,
einen Personendurchgang (109a, 109b, 109c), welcher übereinander angeordneten Wartungsgängen (4a, 4b, 4c) zugeordnet und an einem begehbaren Gehsteg (57) vorgesehen ist, und
eine dem Personendurchgang (109a, 109b, 109c) zugeordnete und in einem der ersten und zweiten Lagerregale (2a, 2b) vorgesehene Auf- und/oder Abstiegseinheit (108) umfassend eine Auf- und/oder Abstiegsvorrichtung (130a, 130b, 130c) mit einem Trittstufensegment (131), welches Trittstufensegment (131) relativ gegenüber dem einen der ersten und zweiten Lagerregale (2a, 2b) zwischen einer ersten Gebrauchsstellung und einer zweiten Gebrauchsstellung bewegbar ist, so dass sich in der ersten Gebrauchsstellung das Trittstufensegment (131) im Wesentlichen in einem der ersten und zweiten Lagerregale (2a, 2b) befindet und in der zweiten Gebrauchsstellung das Trittstufensegment (131) zumindest teilweise in zumindest einen der Wartungsgänge (4a, 4b, 4c) vorragt.

3. Regallagersystem nach Anspruch 1 oder 2, **dadurch gekennzeichnet, dass** zusätzlich ein Personenzugang (40a, 40b, 40c) je Wartungsgang (4a, 4b, 4c) zum Zugang in den betreffenden Wartungsgang (4a, 4b, 4c) von einer Stirnseite der Regalgasse (3) vorgesehen ist.

4. Regallagersystem nach einem der Ansprüche 1 bis 3, **dadurch gekennzeichnet, dass** das erste Lagerregal (2a) zusätzlich vordere Regalsteher (17a), hintere Regalsteher (18a), an den vorderen Regalstehern (17a) übereinander befestigte vordere Längstraversen (19a) und an den hinteren Regalstehern (18a) übereinander befestigte hintere Längstraversen (20a) aufweist, und dass das zweite Lagerregal (2b) zusätzlich vordere Regalsteher (17b), hintere Regalsteher (18b), an den vorderen Regalstehern (17b) übereinander befestigte vordere Längstraversen (19b) und an den hinteren Regalstehern (18b) übereinander befestigte hintere Längstraversen (20b) aufweist.

5. Regallagersystem nach Anspruch 4, **dadurch gekennzeichnet, dass** die Führungsbahnen (5a, 5b) an zumindest einigen der vorderen Längstraversen (19a, 19b) des ersten Lagerregales (2a) und/oder zweiten Lagerregales (2b) vorgesehen sind und dass das Transportfahrzeug (6) in der Regalgasse (3) entlang der Führungsbahnen (5a, 5b) verfahrbar ist.

6. Regallagersystem nach Anspruch 5, **dadurch gekennzeichnet, dass** die Führungsbahnen (5a, 5b) in übereinander liegenden Fahrebenen (E2) jeweils paarweise angeordnet sind und je Fahrebene (E2) eine der Führungsbahnen (5b) eine erste Führung (22) und eine zweite Führung (23) ausbilden.

7. Regallagersystem nach einem der Ansprüche 1 bis 6, **dadurch gekennzeichnet, dass** das Transportfahrzeug (6) zusätzlich umfasst
einen Grundrahmen (24),
Laufräder (26), wovon erste Laufräder (26) auf einer ersten Fahrzeugseite auf der ersten Führung (22) einer ersten Führungsbahn (5a) abrollbar aufliegen und zweite Laufräder (26) auf einer zweiten Fahrzeugseite auf der ersten Führung (22) einer zweiten Führungsbahn (5b) abrollbar aufliegen, wobei die Laufräder (26) am Grundrahmen (24) drehbar gelagert sind,
einen Fahrantrieb (27), welcher mit zumindest einem Laufrad (26) gekoppelt ist, und
zumindest eine Führungseinheit, welche am Grundrahmen (24) montiert ist und welche zu beiden Seiten der zweiten Führung (23) und auf der zweiten Führung (23) an voneinander abgewandten Führungsabschnitten abrollbar anliegende Führungsräder (30) aufweist, um das Transportfahrzeug (6) auf der Fahrbewegung entlang der zweiten Führungsbahn (5b) geführt zu bewegen.

8. Regallagersystem nach einem der Ansprüche 1 bis 7, **dadurch gekennzeichnet, dass** zusätzlich eine Transportfahrzeug-Hebevorrichtung (55) vorgesehen ist, durch welche das eine oder die mehreren Transportfahrzeuge (6) zwischen übereinander liegenden Fahrebenen (E2) transportierbar sind.

9. Regallagersystem nach einem der Ansprüche 1 bis 8, umfassend
eine Fördertechnik zum Transport von Ladegütern (16), und
eine Ladegut-Manipulationseinheit, an welche die Fördertechnik zum Transport von Ladegütern (16) anschließt und welche zum Einlagern von Ladegütern (16) eine erste Ladegut-Transportvorrichtung (35a) und eine erste Puffervorrichtung (36a) und zum Auslagern von Ladegütern (16) eine zweite Ladegut-Transportvorrichtung (35b) und eine zweite Puffervorrichtung (36b) aufweist,
wobei die erste Puffervorrichtung (36a) in übereinander liegenden Bereitstellebenen angeordnete Bereitstellvorrichtungen (38a) und die zweite Puffervorrichtung (36b) in übereinander liegenden Bereitstellebenen angeordnete Bereitstellvorrichtungen (38b) aufweist,
wobei die erste Ladegut-Transportvorrichtung (35a) die Fördertechnik zum Transport von Ladegütern (16) und die Bereitstellvorrichtungen (38a) der ersten Puffervorrichtung (36a) fördertechnisch verbindet,
wobei die zweite Ladegut-Transportvorrichtung (35b) die Fördertechnik zum Transport von Ladegütern (16) und die Bereitstellvorrichtungen (38b) der zweiten Puffervorrichtung (36b) fördertechnisch verbindet, und
wobei das eine oder die mehreren Transportfahrzeuge (6) in der Regalgasse (3) entlang der vorderen Längstraversen (19a, 19b) vor den Regalplätzen (15), der ersten Puffervorrichtung (36a) und zweiten Puffervorrichtung (36b) verfahrbar ist und die Ladegüter (16) zwischen der ersten Puffervorrichtung (36a) und den Regalplätzen (16) oder zwischen den Regalplätzen (16) und der zweiten Puffervorrichtung (36b) transportiert.

10. Regallagersystem nach einem der Ansprüche 1 bis 9, **dadurch gekennzeichnet, dass**
das Transportfahrzeug (6) eine elektronische Steuerung (29), einen Fahrantrieb (27) zum Antrieb des Transportfahrzeuges (6) und einen Transferantrieb (28) zum Antrieb der Transfervorrichtung (25) umfasst, welche elektronische Steuerung (29) an den Fahrantrieb (27) und an den Transferantrieb (27) angeschlossen ist,
eine Schaltvorrichtung (85) vorgesehen ist, mittels welcher zwischen einem Automatikbetrieb und einem Sicherheitsbetrieb für das eine Transportfahrzeug (6) oder die mehreren Transportfahrzeuge (6) gewechselt werden kann, und
eine zentrale Steuereinheit (46) vorgesehen ist, die ihrerseits mit der elektronischen Steuerung (29) des Transportfahrzeuges (6) und mit der Schaltvorrichtung (85) verbunden ist,
wobei der Automatikbetrieb in den Sicherheitsbetrieb für das eine Transportfahrzeug (6) oder die mehreren Transportfahrzeuge (6) wechselt, wenn an der Schaltvorrichtung (85) der Zugang durch eine Bedienperson (41) in einen der Wartungsgänge (4a, 4b, 4c) angemeldet wird und die Bedienperson (41) über einen Personendurchgang (109a, 109b, 109c) in einen der Wartungsgänge (4a, 4b, 4c) eintreten möchte,
wobei die zentrale Steuereinheit (46) im Automatikbetrieb das eine Transportfahrzeug (6) oder die mehreren Transportfahrzeuge (6) derart ansteuert, dass das Transportfahrzeug (6) entlang der Regalgasse (3) zu den Regalplätzen (15) verfährt und die Ladegüter (16) auf die Regalplätze (15) transferiert bzw. Ladegüter (16) von den Regalplätzen (15) transferiert, und
wobei die zentrale Steuereinheit (46) im Sicherheitsbetrieb das eine Transportfahrzeug (6) oder die mehreren Transportfahrzeuge (6) derart ansteuert, dass das Transportfahrzeug (6) in eine vordefinierte Halteposition verfährt und/oder in einen für eine Bedienperson (41) gefahrenlosen und/oder bewegungslosen Ruhezustand solange versetzt wird, bis die elektronische Steuerung (29) ein Freischaltsignal von der zentralen Steuereinheit (46) erhält und das eine Transportfahrzeug (6) wieder in den Automatikbetrieb umgeschaltet wird oder die mehreren Transportfahrzeuge (6) wieder in den Automatikbetrieb umgeschaltet werden.

11. Regallagersystem nach Anspruch 1 oder 2, **dadurch gekennzeichnet, dass** der Personendurchgang (109a, 109b, 109c) einen Durchgang (120) umfasst, welcher Durchgang (120) in einer sich in der Längsrichtung (X) und einer Horizontalrichtung (Z) aufspannenden Ebene liegt.

12. Regallagersystem nach Anspruch 1, 2 oder 11, **dadurch gekennzeichnet, dass** der Personendurchgang (109a, 109b, 109c) eine dem Durchgang (120) zugeordnete Klapptür (121) umfasst, welche zwischen einer Öffnungsstellung, in welcher einer Bedienperson (41) ein Zugang von einem Wartungsgang (4a, 4b, 4c) in einen oberhalb oder unterhalb angeordneten Wartungsgang (4a, 4b, 4c) ermöglicht ist, und einer Schließstellung, in welcher einer Bedienperson (41) ein Zugang in einen oberhalb oder unterhalb angeordneten Wartungsgang (4a, 4b, 4c) verhindert ist, bewegbar ist.

13. Regallagersystem nach einem der Ansprüche 1 bis 12, **dadurch gekennzeichnet, dass** der Personendurchgang (109a, 109b, 109c) einen Sensor (122a, 122b) umfasst, durch welchen die Klapptür (121) in der Öffnungsstellung und/oder in der Schließstellung überwachbar ist und durch welchen ein Zustandssignal in der Öffnungsstellung und/oder in der Schließstellung abgebbar ist.

14. Regallagersystem nach Anspruch 13, **dadurch gekennzeichnet, dass** der Sensor (122a, 122b) mit einer zentralen Steuereinheit (46) verbunden ist, die ihrerseits das eine Transportfahrzeug (6) oder die mehreren Transportfahrzeuge (6) ansteuert, wenn die Klapptür (121) in die Öffnungsstellung und/oder in die Schließstellung bewegt und ein Zustandssignal abgegeben wurde.

15. Regallagersystem nach einem der Ansprüche 1 bis 14, **dadurch gekennzeichnet, dass** der Personendurchgang (109a, 109b, 109c) eine Verriegelungsvorrichtung umfasst, durch welche die Klapptür (121) in der Öffnungsstellung und/oder in der Schließstellung arretierbar ist.

16. Regallagersystem nach Anspruch 1 oder 2, **dadurch gekennzeichnet, dass** die Auf- und/oder Abstiegseinheit (108) mehrere Auf- und/oder Abstiegsvorrichtungen (130a, 130b, 130c) umfasst, wobei die Auf- und/oder Abstiegsvorrichtungen (130a, 130b, 130c) jeweils einem Personendurchgang (109a, 109b, 109c) zugeordnet ist und mit einem Trittstufensegment (131) ausgebildet sind, welche Trittstufensegmente (131) relativ gegenüber dem einen der ersten und zweiten Lagerregale (2a, 2b) zwischen einer ersten Gebrauchsstellung und einer zweiten Gebrauchsstellung bewegbar sind, so dass sich in der ersten Gebrauchsstellung das betreffende Trittstufensegment (131) im Wesentlichen in einem der ersten und zweiten Lagerregale (2a, 2b) befindet und in der zweiten Gebrauchsstellung das betreffende Trittstufensegment (131) zumindest teilweise in zumindest einen der Wartungsgänge (4a, 4b, 4c) vorragt.

17. Regallagersystem nach Anspruch 16, **dadurch gekennzeichnet, dass** die Auf- und/oder Abstiegsvorrichtungen (130a, 130b, 130c) jeweils in Höhenabschnitte (Hu, Ho) unterteilt sind, wobei ein unterer Höhenabschnitt (Hu) einem unteren Wartungsgang (4a, 4b, 4c) unterhalb eines jeweiligen Gehsteges (57) und ein oberer Höhenabschnitt (Ho) einem oberen Wartungsgang (4a, 4b, 4c) oberhalb des jeweiligen Gehsteges (57) zugeordnet ist.

18. Regallagersystem nach einem der Ansprüche 1 bis 17, **dadurch gekennzeichnet, dass** die Personendurchgänge (109a, 109b, 109c) in der Längsrichtung (X) der Regalgasse (3) zueinander um einen Längsabstand versetzt angeordnet sind, insbesondere in der Längsrichtung (X) der Regalgasse (3) zueinander um einen Längsabstand alternierend versetzt gegenüber einer Hochachse angeordnet sind.

19. Regallagersystem nach einem der Ansprüche 16 bis 18, **dadurch gekennzeichnet, dass** die Auf- und/oder Abstiegsvorrichtungen (130a, 130b, 130c) in der Längsrichtung (X) der Regalgasse (3) zueinander um einen Längsabstand versetzt sind, insbesondere in der Längsrichtung (X) der Regalgasse (3) zueinander um einen Längsabstand alternierend versetzt gegenüber einer Hochachse angeordnet sind.

## Claims

1. A rack storage system having a first rack aisle unit (1a), the first rack aisle unit (1a) comprising
a first storage rack (2a) which has rack spaces (15) for unit loads (16), the rack spaces (15) being arranged in rack levels (E1) located on top of one another,
a second storage rack (2b) which has rack spaces (15) for unit loads (16), the rack spaces (15) being arranged in rack levels (E1) located on top of one another,
a rack aisle (3) which extends between the first storage rack (2a) and the second storage rack (2b) in a longitudinal direction (X),
maintenance aisles (4a, 4b, 4c) which extend in the rack aisle (3) and some of which comprise accessible walkways (57) arranged in maintenance levels (E3) located on top of one another,
guideways (5a, 5b) which run in the longitudinal direction (X),
one or more automatically operated transport vehicles (6), which transport vehicle (6) is movable in the rack aisle (3) along the guideways (5a, 5b) and comprises a transfer device (25) for transferring unit loads (16) between a respective rack space (16) and the transport vehicle (6),
a person passageway (109a, 109b, 109c), which is assigned to maintenance aisles (4a, 4b, 4c) arranged on top of one another and is provided on an accessible walkway (57), and
an ascending and/or descending unit (108), assigned to the person passageway (109a, 109b, 109c) and provided in one of the first and second storage racks (2a, 2b), comprising an ascending and/or descending device (130a, 130b, 130c) with a step tread segment (131), which step tread segment (131) is movable relative to the one of the first and second storage racks (2a, 2b) between a first position of use and a second position of use, wherein in the second position of use the step tread segment (131) projects at least partially into at least one of the maintenance aisles (4a, 4b, 4c),
**characterized in that**
in the first position of use, the step tread segment (131) is essentially located in one of the first and second storage racks (2a, 2b).

2. The rack storage system according to claim 1, having a second rack aisle unit (1b), the second rack aisle unit (1b) comprising
a first storage rack (2a) which has rack spaces (15) for unit loads (16), the rack spaces (15) being arranged in rack levels (E1) located on top of one another,
a second storage rack (2b) which has rack spaces (15) for unit loads (16), the rack spaces (15) being arranged in rack levels (E1) located on top of one another,
a rack aisle (3) which extends between the first storage rack (2a) and the second storage rack (2b) in a longitudinal direction (X),
maintenance aisles (4a, 4b, 4c) which extend in the rack aisle (3) and some of which comprise accessible walkways (57) arranged in maintenance levels (E3) located on top of one another,
guideways (5a, 5b) which run in the longitudinal direction (X),
one or more automatically operated transport vehicles (6), which transport vehicle (6) is movable in the rack aisle (3) along the guideways (5a, 5b) and comprises a transfer device (25) for transferring unit loads (16) between a respective rack space (16) and the transport vehicle (6),
a person passageway (109a, 109b, 109c), which is assigned to maintenance aisles (4a, 4b, 4c) arranged on top of one another and is provided on an accessible walkway (57), and
an ascending and/or descending unit (108), assigned to the person passageway (109a, 109b, 109c) and provided in one of the first and second storage racks (2a, 2b), comprising an ascending and/or descending device (130a, 130b, 130c) with a step tread segment (131), which step tread segment (131) is movable relative to the one of the first and second storage racks (2a, 2b) between a first position of use and a second position of use, so that in the first position of use, the step tread segment (131) is essentially located in one of the first and second storage racks (2a, 2b) and in the second position of use the step tread segment (131) projects at least partially into at least one of the maintenance aisles (4a, 4b, 4c).

3. The rack storage system according to claim 1 or 2, **characterized in that** additionally a person access (40a, 40b, 40c) per maintenance aisle (4a, 4b, 4c) is provided for access to the respective maintenance aisle (4a, 4b, 4c) from an end face of the rack aisle (3).

4. The rack storage system according to one of claims 1 to 3, **characterized in that** the first storage rack (2a) additionally has front uprights (17a), rear uprights (18a), front longitudinal beams (19a) fastened one above the other on the front uprights (17a) and rear longitudinal beams (20a) fastened one above the other on the rear uprights (18a), and that the second storage rack (2b) additionally has front uprights (17b), rear uprights (18b), front longitudinal beams (19b) fastened one above the other on the front uprights (17b) and rear longitudinal beams (20b) fastened one above the other on the rear uprights (18b).

5. The rack storage system according to claim 4, **characterized in that** the guideways (5a, 5b) are provided on at least some of the front longitudinal beams (19a, 19b) of the first storage rack (2a) and/or second storage rack (2b) and that the transport vehicle (6) is movable in the rack aisle (3) along the guideways (5a, 5b).

6. The rack storage system according to claim 5, **characterized in that** the guideways (5a, 5b) are in each case arranged in pairs in travel planes (E2) located on top of one another and per travel plane (E2) one of the guideways (5b) forms a first guide (22) and a second guide (23).

7. The rack storage system according to one of claims 1 to 6, **characterized in that** the transport vehicle (6) additionally comprises
a base frame (24),
running wheels (26), of which first running wheels (26) rest on a first vehicle side on the first guide (22) of a first guideway (5a) in a rollable manner and second running wheels (26) rest on a second vehicle side on the first guide (22) of a second guideway (5b) in a rollable manner, wherein the running wheels (26) are rotatably mounted on the base frame (24),
a travel drive (27) which is coupled to at least one running wheel (26), and
at least one guide unit which is mounted on the base frame (24) and which has guide wheels (30) resting in a rollable manner on both sides of the second guide (23) and on the second guide (23) on guide sections facing away from one another, in order to move the transport vehicle (6) along the second guideway (5b) in a guided manner during the travel movement.

8. The rack storage system according to one of claims 1 to 7, **characterized in that** a transport vehicle lifting device (55) is additionally provided, wherein the one or the multiple transport vehicles (6) are transportable between travel planes (E2) located on top of one another by the vehicle lifting device (55).

9. The rack storage system according to one of claims 1 to 8, comprising
a conveying system for transporting unit loads (16), and/or
a unit load manipulation unit, on which the conveying system for transporting unit loads (16) adjoins and which comprises a first unit load transport device (35a) and a first buffer device (36a) for storing unit loads (16) and a second unit load transport device (35b) and a second buffer device (36b) for retrieving unit loads (16) from storage,
wherein the first buffer device (36a) has provisioning devices (38a) arranged in provisioning planes located on top of one another and the second buffer device (36b) has provisioning devices (38b) arranged in provisioning planes located on top of one another,
wherein the first unit load transport device (35a) connects the conveying system for transporting unit loads (16) and the provisioning devices (38a) of the first buffer device (36a) in terms of conveyance,
wherein the second unit load transport device (35b) connects the conveying system for transporting unit loads (16) and the provisioning devices (38b) of the second buffer device (36b) in terms of conveyance, and
wherein the one or the multiple transport vehicles (6) is/are movable in the rack aisle (3) along the front longitudinal beams (19a, 19b) in front of the rack spaces (15), the first buffer device (36a) and the second buffer device (36b), and transport(s) the unit loads (16) between the first buffer device (36a) and the rack spaces (16) or between the rack spaces (16) and the second buffer device (36b).

10. The rack storage system according to one of claims 1 to 9, **characterized in that**
the transport vehicle (6) comprises an electronic controller (29), a travel drive (27) for driving the transport vehicle (6) and a transfer drive (28) for driving the transfer device (25), which electronic controller (29) being connected to the travel drive (27) and to the transfer drive (27),
a switching device (85) is provided, by means of which it is possible to switch between an automatic mode and a safety mode for the one transport vehicle (6) or the multiple transport vehicles (6), and
a central control unit (46) is provided, wherein the central control unit (46) is connected to the electronic controller (29) of the transport vehicle (6) and to the switching device (85),
wherein the automatic mode changes to the safety mode for the one transport vehicle (6) or the multiple transport vehicles (6) when access by an operator (41) to one of the maintenance aisles (4a, 4b, 4c) is registered at the switching device (85) and the operator (41) wishes to enter one of the maintenance aisles (4a, 4b, 4c) via a person passageway (109a, 109b, 109c),
wherein the central control unit (46) in the automatic mode controls the one transport vehicle (6) or the multiple transport vehicles (6) in such a way that the transport vehicle (6) moves along the rack aisle (3) to the rack spaces (15) and transfers the unit loads (16) to the rack spaces (15) and/or transfers unit loads (16) from the rack spaces (15), and
wherein the central control unit (46) in the safety mode controls the one transport vehicle (6) or the multiple transport vehicles (6) in such a way that the transport vehicle (6) moves into a predefined stop position and/or is set into a resting state without danger for an operator (41) and/or without movement until the electronic controller (29) receives a release signal from the central control unit (46) and the one transport vehicle (6) is switched back into the automatic mode or the multiple transport vehicles (6) are switched back into the automatic mode.

11. The rack storage system according to claim 1 or 2, **characterized in that** the person passageway (109a, 109b, 109c) comprises a passageway (120), the passageway (120) being located in a plane spanning in the longitudinal direction (X) and a horizontal direction (Z).

12. The rack storage system according to claim 1, 2 or 11, **characterized in that** the person passageway (109a, 109b, 109c) comprises a hinged door (121) which is assigned to the passageway (120) and can be moved between an open position, in which an operator (41) is allowed access from a maintenance aisle (4a, 4b, 4c) to a maintenance aisle (4a, 4b, 4c) arranged above or below, and a closed position, in which an operator (41) is prevented access to a maintenance aisle (4a, 4b, 4c) arranged above or below.

13. The rack storage system according to one of claims 1 to 12, **characterized in that** the person passageway (109a, 109b, 109c) comprises a sensor (122a, 122b), wherein the hinged door (121) can be monitored in the open position and/or in the closed position by the sensor (122a, 122b), and wherein a status signal can be emitted in the open position and/or in the closed position by the sensor (122a, 122b).

14. The rack storage system according to claim 13, **characterized in that** the sensor (122a, 122b) is connected to a central control unit (46), wherein the central control unit (46) controls the one transport vehicle (6) or the multiple transport vehicles (6) when the hinged door (121) has been moved into the open position and/or into the closed position and a status signal has been emitted.

15. The rack storage system according to one of claims 1 to 14, **characterized in that** the person passageway (109a, 109b, 109c) comprises a locking device, wherein the hinged door (121) can be locked in the open position and/or in the closed position by the locking device.

16. The rack storage system according to claim 1 or 2, **characterized in that** the ascending and/or descending unit (108) comprises multiple ascending and/or descending devices (130a, 130b, 130c), wherein the ascending and/or descending devices (130a, 130b, 130c) are in each case assigned to one person passageway (109a, 109b, 109c) and having a step tread segment (131), which step tread segments (131) are movable relative to the one or the first and second storage racks (2a, 2b) between a first position of use and a second position of use, so that in the first position of use, the respective step tread segment (131) is essentially located in one of the first and second storage racks (2a, 2b) and in the second position of use the respective step tread segment (131) projects at least partially into at least one of the maintenance aisles (4a, 4b, 4c).

17. The rack storage system according to claim 16, **characterized in that** the ascending and/or descending devices (130a, 130b, 130c) are each divided into height sections (Hu, Ho), wherein a lower height section (Hu) is assigned to a lower maintenance aisle (4a, 4b, 4c) below a respective walkway (57) and an upper height section (Ho) is assigned to an upper maintenance aisle (4a, 4b, 4c) above the respective walkway (57).

18. The rack storage system according to one of claims 1 to 17, **characterized in that** the person passageways (109a, 109b, 109c) are arranged offset from one another by a longitudinal distance in the longitudinal direction (X) of the rack aisle (3), in particular are arranged offset from one another by a longitudinal distance in the longitudinal direction (X) of the rack aisle (3) alternately with respect to a vertical axis.

19. The rack storage system according to one of claims 16 to 18, **characterized in that** the ascending and/or descending devices (130a, 130b, 130c) are offset from one another by a longitudinal distance in the longitudinal direction (X) of the rack aisle (3), in particular are arranged offset from one another by a longitudinal distance in the longitudinal direction (X) of the rack aisle (3) alternately with respect to a vertical axis.

## Revendications

1. Système de stockage à rayonnages avec une première unité d'allées de rayonnages (1a), laquelle première unité d'allées de rayonnages (1a) comprend
un premier rayonnage de stockage (2a) qui présente des emplacements de rayonnage (15) pour des marchandises à charger (16), agencés sur des niveaux de rayonnage superposés les uns au-dessus des autres des autres (E1),
un deuxième rayonnage de stockage (2b) qui présente des emplacements de rayonnage (15) pour des marchandises à charger (16), agencés sur des niveaux de rayonnage (E1) superposés les uns au-dessus des autres des autres,
une allée de rayonnages (3) qui s'étend dans une direction longitudinale (X) entre le premier rayonnage de stockage (2a) et le deuxième rayonnage de stockage (2b),
des couloirs d'entretien (4a, 4b, 4c) qui s'étendent dans l'allée de rayonnages (3) et dont certains comprennent des passerelles praticables (57) agencées sur des niveaux d'entretien superposés les uns au-dessus des autres des autres (E3),
des voies de guidage (5a, 5b) qui s'étendent dans la direction longitudinale (X),
un ou plusieurs véhicules de transport (6) à fonctionnement automatisé,
le véhicule de transport (6) pouvant se déplacer dans l'allée de rayonnages (3) le long des voies de guidage (5a, 5b) et comprenant un dispositif de transfert (25) pour transférer des marchandises à charger (16) entre un emplacement de rayonnage (16) respectif et le véhicule de transport (6),
un passage pour personnes (109a, 109b, 109c), qui est associé à des couloirs d'entretien (4a, 4b, 4c) superposés les uns au-dessus des autres des autres et qui est prévu sur une passerelle praticable (57), et
une unité de montée et/ou de descente (108) associée au passage pour personnes (109a, 109b, 109c) et prévue sur l'un des premier et deuxième rayonnages de stockage (2a, 2b), comprenant un dispositif de montée et/ou de descente (130a, 130b, 130c) avec un segment de marche (131), lequel segment de marche (131) peut être déplacé par rapport à l'un des premier et deuxième rayonnages de stockage (2a, 2b) entre une première position d'utilisation et une deuxième position d'utilisation, le segment de marche (131) faisant saillie dans la deuxième position d'utilisation au moins partiellement dans au moins l'un des couloirs d'entretien (4a, 4b, 4c),
**caractérisé en ce que**
dans la première position d'utilisation, le segment de marche (131) se trouve essentiellement dans l'un des premier et deuxième rayonnages de stockage (2a, 2b).

2. Système de stockage à rayonnages selon la revendication 1, comprenant une deuxième unité d'allée de rayonnages (1b), laquelle deuxième unité d'allée de rayonnages (1b) comprend
un premier rayonnage de stockage (2a), qui présente des emplacements de rayonnage (15) pour des marchandises à charger (16), agencés sur des niveaux de rayonnage (E1) superposés les uns au-dessus des autres des autres,
un deuxième rayonnage de stockage (2b) qui présente des emplacements de rayonnage (15) pour des marchandises à charger (16), agencés sur des niveaux de rayonnage superposés les uns au-dessus des autres des autres (E1),
une allée de rayonnages (3) qui s'étend dans une direction longitudinale (X) entre le premier rayonnage de stockage (2a) et le deuxième rayonnage de stockage (2b),
des couloirs d'entretien (4a, 4b, 4c) qui s'étendent dans l'allée de rayonnages (3) et dont certains comprennent des passerelles praticables (57) agencées sur des niveaux d'entretien superposés les uns au-dessus des autres des autres (E3),
des voies de guidage (5a, 5b) qui s'étendent dans la direction longitudinale (X),
un véhicule de transport ou une pluralité de véhicules de transport (6) à fonctionnement automatisé, lequel véhicule de transport (6) peut être déplacé dans l'allée de rayonnages (3) le long des voies de guidage (5a, 5b) et comprend un dispositif de transfert (25) pour transférer des marchandises à charger (16) entre un emplacement de rayonnage respectif (16) et le véhicule de transport (6),
un passage pour personnes (109a, 109b, 109c), qui est associé à des couloirs d'entretien (4a, 4b, 4c) superposés les uns au-dessus des autres et qui est prévu sur une passerelle praticable (57), et
une unité de montée et/ou de descente (108) associée au passage pour personnes (109a, 109b, 109c) et prévue dans l'un des premier et deuxième rayonnages de stockage (2a, 2b), comprenant un dispositif de montée et/ou de descente (130a, 130b, 130c) avec un segment de marche (131), lequel segment de marche (131) peut être déplacé par rapport à l'un des premier et deuxième rayonnages de stockage (2a, 2b) entre une première position d'utilisation et une deuxième position d'utilisation de sorte que, dans la première position d'utilisation, le segment de marche (131) se trouve essentiellement dans l'un des premier et deuxième rayonnages de stockage (2a, 2b) et, dans la deuxième position d'utilisation, le segment de marche (131) fait saillie au moins partiellement dans au moins l'un des couloirs d'entretien (4a, 4b, 4c).

3. Système de stockage à rayonnages selon la revendication 1 ou 2, **caractérisé en ce qu'**un accès pour personnes (40a, 40b, 40c) est en outre prévu pour chaque couloir d'entretien (4a, 4b, 4c) afin de permettre l'accès au couloir d'entretien (4a, 4b, 4c) concerné depuis un côté frontal de l'allée de rayonnages (3).

4. Système de stockage à rayonnages selon l'une des revendications 1 à 3, **caractérisé en ce que**
le premier rayonnage de stockage (2a) présente en outre des montants de rayonnage avant (17a), des montants de rayonnage arrière (18a), des traverses longitudinales avant (19a) fixées les unes au-dessus des autres aux montants de rayonnage avant (17a) et des traverses longitudinales arrière (20a) fixées les unes au-dessus des autres aux montants de rayonnage arrière (18a), et **en ce que** le deuxième rayonnage de stockage (2b) présente en outre des montants de rayonnage avant (17b), des montants de rayonnage arrière (18b), des traverses longitudinales avant (19b) fixées les unes au-dessus des autres sur les montants de rayonnage avant (17b) et des traverses longitudinales arrière (20b) fixées les unes au-dessus des autres sur les montants de rayonnage arrière (18b).

5. Système de stockage à rayonnages selon la revendication 4, **caractérisé en ce que** les voies de guidage (5a, 5b) sont prévues sur au moins certaines des traverses longitudinales avant (19a, 19b) du premier rayonnage de stockage (2a) et/ou du deuxième rayonnage de stockage (2b) et **en ce que** le véhicule de transport (6) peut se déplacer dans l'allée de rayonnages (3) le long des voies de guidage (5a, 5b).

6. Système de stockage à rayonnages selon la revendication 5, **caractérisé en ce que** les voies de guidage (5a, 5b) sont agencées par paires dans des plans de déplacement (E2) superposés les uns au-dessus des autres des autres et, pour chaque plan de déplacement (E2), l'une des voies de guidage (5b) forme un premier guidage (22) et un deuxième guidage (23).

7. Système de stockage à rayonnages selon l'une des revendications 1 à 6, **caractérisé en ce que**
le véhicule de transport (6) comprend en outre
un cadre de base (24),
des roues mobiles (26), dont des premières roues mobiles (26) reposent sur un premier côté du véhicule de manière à pouvoir rouler sur le premier guidage (22) d'une première voie de guidage (5a) et des deuxièmes roues mobiles (26) reposent sur un deuxième côté du véhicule de manière à pouvoir rouler sur le premier guidage (22) d'une deuxième voie de guidage (5b), les roues mobiles (26) étant montées de manière à pouvoir tourner sur le cadre de base (24),
un entraînement de déplacement (27) qui est couplé à au moins une roue mobile (26), et
au moins une unité de guidage qui est montée sur le cadre de base (24) et qui présente des roues de guidage (30) disposées de manière à pouvoir rouler des deux côtés du deuxième guidage (23) et sur le deuxième guidage (23) sur des sections de guidage opposées les unes aux autres, afin de déplacer le véhicule de transport (6) de manière guidée sur le mouvement de déplacement le long de la deuxième voie de guidage (5b).

8. Système de stockage à rayonnages selon l'une quelconque des revendications 1 à 7, **caractérisé en ce qu'**il est prévu en outre un dispositif de levage de véhicule de transport (55), par lequel le véhicule de transport ou la pluralité de véhicules de transport (6) peut être transporté entre des plans de déplacement (E2) superposés les uns au-dessus des autres des autres.

9. Système de stockage à rayonnages selon l'une quelconque des revendications 1 à 8, comprenant
un système de transport pour le transport de marchandises à charger (16), et
une unité de manipulation de marchandises, à laquelle est raccordée le système de transport pour le transport de marchandises à charger (16) et qui présente, pour le stockage de marchandises à charger (16), un premier dispositif de transport de marchandises (35a) et un premier dispositif tampon (36a) et, pour la sortie de marchandises à charger (16), un deuxième dispositif de transport de marchandises (35b) et un deuxième dispositif tampon (36b),
dans lequel le premier dispositif tampon (36a) comprend des dispositifs de mise à disposition (38a) agencés dans des plans de mise à disposition superposés les uns au-dessus des autres des autres et le deuxième dispositif tampon (36b) comprend des dispositifs de mise à disposition (38b) agencés dans des plans de mise à disposition superposés les uns au-dessus des autres des autres,
dans lequel le premier dispositif de transport de marchandises (35a) relie par une technique de transport le système de transport pour le transport de marchandises à charger (16) aux dispositifs de mise à disposition (38a) du premier dispositif tampon (36a),
le deuxième dispositif de transport de marchandises (35b) relie par une technique de transport le système de transport pour les marchandises à charger (16) aux dispositifs de mise à disposition (38b) du deuxième dispositif tampon (36b), et
le véhicule de transport ou la pluralité de véhicules de transport (6) dans l'allée de rayonnages (3) pouvant se déplacer le long des traverses longitudinales avant (19a, 19b) devant les emplacements de rayonnage (15), le premier dispositif tampon (36a) et le deuxième dispositif tampon (36b), et les marchandises à charger (16) étant transportées entre le premier dispositif tampon (36a) et les emplacements de rayonnage (16) ou entre les emplacements de rayonnage (16) et le deuxième dispositif tampon (36b).

10. Système de stockage à rayonnages selon l'une des revendications 1 à 9, **caractérisé en ce que**
le véhicule de transport (6) comprend une commande électronique (29), un entraînement de déplacement (27) pour entraîner le véhicule de transport (6) et un entraînement de transfert (28) pour entraîner le dispositif de transfert (25), laquelle commande électronique (29) est raccordée à l'entraînement de déplacement (27) et à l'entraînement de transfert (27),
un dispositif de commutation (85) est prévu, au moyen duquel il est possible de passer d'un mode automatique à un mode de sécurité pour le véhicule de transport (6) ou la pluralité de véhicules de transport (6), et
une unité de commande centrale (46) est prévue, qui est elle-même reliée à la commande électronique (29) du véhicule de transport (6) et au dispositif de commutation (85),
le mode automatique passant au mode de sécurité pour le véhicule de transport (6) ou la pluralité de véhicules de transport (6) lorsque l'accès par un opérateur (41) à l'un des couloirs d'entretien (4a, 4b, 4c) est annoncé au niveau du dispositif de commutation (85) et que l'opérateur (41) souhaite entrer par un passage pour personnes (109a, 109b, 109c) dans l'un des couloirs d'entretien (4a, 4b, 4c),
l'unité de commande centrale (46) commandant en mode automatique le véhicule de transport (6) ou la pluralité de véhicules de transport (6) de telle sorte que le véhicule de transport (6) se déplace le long de l'allée de rayonnages (3) vers les emplacements de rayonnage (15) et transfère les marchandises à charger (16) sur les emplacements de rayonnage (15) ou transfère les marchandises à charger (16) depuis les emplacements de rayonnage (15), et
l'unité de commande centrale (46) commandant, en mode de sécurité, le véhicule de transport (6) ou la pluralité de véhicules de transport (6) de telle sorte que le véhicule de transport (6) se déplace vers une position d'arrêt prédéfinie et/ou soit mis dans un état de repos sans danger et/ou immobile pour un opérateur (41) jusqu'à ce que la commande électronique (29) reçoive un signal de déverrouillage de l'unité de commande centrale (46) et que le véhicule de transport (6) repasse au mode automatique ou la pluralité de véhicules de transport (6) repassent au mode automatique.

11. Système de stockage à rayonnages selon la revendication 1 ou 2, **caractérisé en ce que** le passage pour personnes (109a, 109b, 109c) comprend un passage (120), lequel passage (120) se trouve dans un plan s'étendant dans la direction longitudinale (X) et une direction horizontale (Z).

12. Système de stockage à rayonnages selon la revendication 1, 2 ou 11, **caractérisé en ce que** le passage pour personnes (109a, 109b, 109c) comprend une porte battante (121) associée au passage (120), qui peut être déplacée entre une position ouverte, dans laquelle un opérateur (41) peut accéder d'un couloir d'entretien (4a, 4b, 4c) à un couloir d'entretien (4a, 4b, 4c) situé au-dessus ou au-dessous, et une position fermée, dans laquelle un opérateur (41) ne peut accéder à un couloir d'entretien (4a, 4b, 4c) situé au-dessus ou au-dessous.

13. Système de stockage à rayonnages selon l'une des revendications 1 à 12, **caractérisé en ce que** le passage pour personnes (109a, 109b, 109c) comprend un capteur (122a, 122b) grâce auquel la porte battante (121) peut être surveillée en position ouverte et/ou en position fermée et grâce auquel un signal d'état peut être émis en position ouverte et/ou en position fermée.

14. Système de stockage à rayonnages selon la revendication 13, **caractérisé en ce que** le capteur (122a, 122b) est relié à une unité de commande centrale (46) qui,
à son tour, commande le véhicule de transport (6) ou la pluralité de véhicules de transport (6) lorsque la porte battante (121) est déplacée en position d'ouverture et/ou en position de fermeture et qu'un signal d'état a été émis.

15. Système de stockage à rayonnages selon l'une des revendications 1 à 14, **caractérisé en ce que** le passage pour personnes (109a, 109b, 109c) comprend un dispositif de verrouillage permettant de bloquer la porte battante (121) en position ouverte et/ou en position fermée.

16. Système de stockage à rayonnages selon la revendication 1 ou 2, **caractérisé en ce que** l'unité de montée et/ou de descente (108) comprend plusieurs dispositifs de montée et/ou de descente (130a, 130b, 130c), les dispositifs de montée et/ou de descente (130a, 130b, 130c) étant chacun associés à un passage pour personnes (109a, 109b, 109c) et étant formés avec un segment de marche (131), lesquels segments de marche (131) peuvent être déplacés par rapport à l'un des premier et deuxième rayonnages de stockage (2a, 2b) entre une première position d'utilisation et une deuxième position d'utilisation, de sorte que, dans la première position d'utilisation, le segment de marche concerné (131) se trouve essentiellement dans l'un des premier et deuxième rayonnages de stockage (2a, 2b) et, dans la deuxième position d'utilisation, le segment de marche (131) concerné fait saillie au moins partiellement dans au moins l'un des couloirs d'entretien (4a, 4b, 4c).

17. Système de stockage à rayonnages selon la revendication 16, **caractérisé en ce que** les dispositifs de montée et/ou de descente (130a, 130b, 130c) sont chacun divisés en sections de hauteur (Hu, Ho), une section de hauteur inférieure (Hu) correspondant à un couloir d'entretien inférieur (4a, 4b, 4c) situé sous une passerelle praticable (57) respective et une section de hauteur supérieure (Ho) étant associée à un couloir d'entretien supérieur (4a, 4b, 4c) situé au-dessus de la passerelle praticable (57) respective.

18. Système de stockage à rayonnages selon l'une des revendications 1 à 17, **caractérisé en ce que** les passages pour personnes (109a, 109b, 109c) sont décalés les uns par rapport aux autres d'une distance longitudinale dans la direction longitudinale (X) de l'allée de rayonnages (3), en particulier sont décalés les uns par rapport aux autres en alternance d'une distance longitudinale par rapport à un axe vertical dans la direction longitudinale (X) de l'allée de rayonnages (3).

19. Système de stockage à rayonnages selon l'une des revendications 16 à 18, **caractérisé en ce que** les dispositifs de montée et/ou de descente (130a, 130b, 130c) sont décalés les uns par rapport aux autres d'une distance longitudinale dans la direction longitudinale (X) de l'allée de rayonnages (3), en particulier sont décalés les uns par rapport aux autres en alternance d'une distance longitudinale par rapport à un axe vertical dans la direction longitudinale (X) de l'allée de rayonnages (3).
